# EUROPEAN PATENT APPLICATION

(11) **EP 4 827 059 A1**
(43) Date of publication of application: **21.10.2026**
(21) Application number: 24915010.3
(22) Date of filing: 18.11.2024
(51) Int. Cl.: H04L 27/26

(54) **SIGNAL SENDING METHOD AND APPARATUS, AND SIGNAL RECEIVING METHOD AND APPARATUS**

(30) Priority: 02.01.2024 CN 202410014147
(71) Applicant: Huawei Technologies Co., Ltd., Shenzhen, Guangdong 518129 (CN)
(72) Inventor: SHU, Yaofeng, Shenzhen, Guangdong 518129 (CN); GONG, Mingxin, Shenzhen, Guangdong 518129 (CN); ZOU, Tong, Shenzhen, Guangdong 518129 (CN); QU, Bingyu, Shenzhen, Guangdong 518129 (CN)
(74) Representative: Pfenning, Meinig & Partner mbB
(86) International application number: PCT/CN2024/132785
(87) International publication number: WO 2025/145794

(57) **Abstract**

A signal sending method, a signal receiving method, and an apparatus are provided. The sending method includes: determining a fourth sequence based on a third sequence, where the third sequence is a sequence obtained after DFT is performed on a second sequence, and the second sequence is a discrete sequence obtained by performing CPM modulation and sampling on a first sequence; mapping the fourth sequence to X subcarriers to generate a first signal, where X is an integer greater than zero; and sending the first signal, where the first signal is a signal carrying HARQ information, or the first signal is a signal carrying SR information, or the first signal is a demodulation reference signal, or the first signal is a phase tracking reference signal, or the like. By using the method and apparatus in embodiments of this application, a PAPR value of a signal sent by a transmit end can be reduced, and coverage performance can be improved.

## Description

### CROSS-REFERENCE TO RELATED APPLICATIONS

This application claims priority to Chinese Patent Application No. 202410014147.X, filed with the China National Intellectual Property Administration on January 2, 2024 and entitled "A signal sending method, a signal receiving method, and an apparatus", which is incorporated herein by reference in its entirety.

### TECHNICAL FIELD

This application relates to the field of communication technologies, and in particular, to a signal sending method, a signal receiving method, and an apparatus.

### BACKGROUND

In a New Radio (NR) system, a physical uplink control channel (PUCCH) occupies one to two, or four to fourteen, symbols in a subframe. The symbols may be orthogonal frequency division multiplexing (OFDM) symbols or discrete Fourier transform spread OFDM (DFT-s-OFDM) symbols. Generally, in an NR system, to avoid interference between PUCCHs of two adjacent cells, it is necessary to consider that sequences selected between adjacent cells have low cross-correlation. To improve coverage of the PUCCH, a signal to be sent needs to have a relatively low peak-to-average power ratio (PAPR).

PAPR is defined as a ratio of peak power to average power of a signal. Because a dynamic range of a power amplifier is limited, an excessively high PAPR of a signal may cause the amplified signal to enter a nonlinear region, and further cause nonlinear distortion after power amplification, resulting in spectral spreading, in-band signal distortion, and degraded system performance. Power backoff is required to prevent the signal from entering the nonlinear region. A higher PAPR requires greater power backoff. However, power backoff causes coverage performance deterioration. Therefore, reducing PAPR helps improve coverage performance. How to reduce PAPR of a signal to improve coverage performance is a research direction.

### SUMMARY

Embodiments of this application provide a signal sending method, a signal receiving method, and an apparatus, to reduce a PAPR value of a signal and improve coverage performance.

According to a first aspect, a signal sending method is provided. An execution body of the method is a first communication apparatus. It may be understood that, in an uplink communication scenario, the first communication apparatus may be an apparatus having a terminal function. In a downlink communication scenario, the first communication apparatus is an apparatus having an access network device function. The method includes: determining a fourth sequence based on a third sequence, where the third sequence is a sequence obtained after discrete Fourier transform (DFT) is performed on a second sequence, and the second sequence is a discrete sequence obtained by performing continuous phase modulation (CPM) modulation and sampling on a first sequence; mapping the fourth sequence to X subcarriers, to generate a first signal, where X is an integer greater than zero; and sending the first signal, where the first signal is a signal carrying hybrid automatic repeat request (HARQ) information, or the first signal is a signal carrying scheduling request (SR) information, or the first signal is a demodulation reference signal, or the first signal is a phase tracking reference signal.

According to the foregoing design, the first communication apparatus performs continuous phase modulation (CPM) modulation and sampling on the first sequence, to obtain the second sequence. CPM modulation and sampling includes two processes: CPM modulation and sampling. For example, the first communication apparatus performs CPM modulation on the first sequence, to obtain a CPM sequence, and samples the CPM sequence, to obtain the second sequence. The CPM sequence is a time-domain constant-modulus sequence, and a PAPR value is theoretically equal to zero. The first communication apparatus performs discrete Fourier transform (DFT) on the second sequence, and transforms the second sequence from a time domain to a frequency domain, to obtain the third sequence, where the third sequence is a frequency-domain sequence. The first communication apparatus modulates information to be sent onto the third sequence, to obtain the fourth sequence. The first communication apparatus maps the fourth sequence to the X subcarriers, to obtain a fifth sequence. OFDM modulation is performed on the fifth sequence, to generate the first signal, and the first signal is sent to a receive end. In the OFDM modulation process, the first communication apparatus transforms the fifth sequence from the frequency domain to the time domain. It can be learned that, in the method in embodiments of this application, a time-domain constant-modulus CPM sequence is first generated, and then DFT is performed, to transform the sequence from the time domain to the frequency domain. Then, through OFDM transform, the sequence is transformed from the frequency domain back to the time domain. The whole processing process may be summarized as follows: converting a time-domain constant-modulus CPM sequence to a frequency domain, and then converting a frequency-domain sequence to a time domain. Theoretically, the first signal obtained after OFDM modulation is time-domain constant-modulus, and a PAPR value thereof is equal to zero. However, in actual application, due to various factors, the PAPR value of the first signal may be less than a first threshold, for example, the first threshold is equal to 0.5 dB. Compared with a method for sending a signal by using a CGS sequence, the method in embodiments of this application can reduce a PAPR value of a signal sent by the first communication apparatus, and improve coverage performance.

In one design, the second sequence { *sₙ* } includes X elements, and *sₙ* satisfies: ${s}_{n} = exp \left(j∗{φ}_{n}\right) ;$
where n is an integer from 0 to X-1, exp represents an exponential function with e as the ba se, $j = \sqrt{- 1}$, and *φₙ* represents a phase of the second sequence, and *φₙ* satisfies: ${φ}_{n} = 2 ∗ π ∗ h ∗ {\sum }_{i = 0}^{\left⌊n/N\right⌋} {β}_{i} q \left(\left(n/N-i\right)T\right) ,$ or , ${φ}_{n} = 2 ∗ π ∗ h ∗ {\sum }_{i = 0}^{\left⌊n/N\right⌋} {β}_{i} q \left(\left(n/N-i\right)T\right) + 2 ∗ π ∗ h ∗ {\sum }_{i = 0}^{L - 2} {β}_{J - i - 1} q \left(\left(n/N+i+1\right)T\right) ;$
where *φₙ* is taken modulo 2 * π, or *φₙ* is not taken modulo 2 * π, *h* represents a modulati on index, *L* represents an impulse length, *N* represents a sampling rate, *J* represents a number of samplin g blocks, *h, L, N,* and J all have real number values, *T* represents a symbol period, *q(t)* represents a ph ase response function, *βᵢ* represents an element in the first sequence {*βᵢ*} element, and i is an integer fr om 0 to J - 1.

In one design, in the CPM modulation and sampling process: a value range of the modulatio n index h is real numbers from 11/64 to 11/32, a value range of the impulse length L is L > 1, a phase response functionq(t), t < 0 is a phase response function, the phase response function takes a value of 0 in the range *t ≥ LT* and a fixed value in the range N, and the sampling rate J and the number of samp ling blocks NJ = X satisfy: .

According to the foregoing design, in the CPM modulation and sampling process, the parame ters satisfy the foregoing conditions, so that a block error rate (BLER) of the second communication app aratus (that is, the receive end) during sequence detection is lower.

In one design, when the modulation index $h = \frac{1}{4}$, the impulse length *L* = 3, the modulation dimension M = 8, and the phase response function *q(t)* are: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$
and a sampling rate *N =* 2 and a number of sampling blocks J = 6 are:
the first sequence {*βᵢ*} belongs to a first sequence set, and a sequence in the first sequence set set includes at least one of the following sequences: {-1,1,5,3,-1,-7};{-3,-1,1,5,-5,1};{-7,-5,-1,-3,-3,-5};{3,-1,3,5,5,1};{-7,-7,-7,-5,5,-3};{-1,-1,-1,-7,-3,-3};{5,5,3,-5,3,5};{-7,7,-3,7,-3,7};{-5,-5,-3,-7,-3,7};{-5,3,-7,1,-5,5};{-5,-7,-3,-5,-7,3};{5,3,3,3,-7,1};{-1,1,5,3,-3,3};{-3,-3,-7,5,-5,-3};{3,5,5,5,-5,-5};{-1,3,-3,-7,-3,3};{7,-1,-1,-1,7,-3};{5,-7,7,-7,5,5};{-7,-5,5,-7,3,-5};{-5,1,-3,-5,7,-3};{7,-3,7,-3,-7,-1};{-5,3,-1,-5,7,1};{-7,-5,-7,1,-1,3};{3,-7,3,5,3,-7};{5,-3,-5,-1,-7,3};{-1,1,1,3,-7,3};{-3,-7,3,-1,-3,3};{5,-3,7,-3,-3,-3};{3,-5,-5,-5,-1,5};{-7,-1,-5, 1,-1,5}; {7,-1,-3, 7,-5,-5}; {-5,-1, 1,-7,-3, 7}; {-5,-3, 7,1,-1,1}.

According to the foregoing design, a PAPR value of the first signal is less than 0.5, and frequency-domain flatness of the first signal is less than 0.5.

In one design, when the modulation index $h = \frac{3}{16}$, the impulse length *L* = 3, the modulation dimension M = 8, and the phase response function *q(t)* are: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$
and a sampling rate *N =* 2 and a number of sampling blocks J = 6 are:
the first sequence {*βᵢ*} belongs to a first sequence set, and a sequence in the first sequence set set includes at least one of the following sequences: {-1,-3,5,-1,7,-7};{7,3,5,7,-5,5};{-3,-5,-5,-7,5,-7};{-7,-7,-7,3,3,-7};{7,7,7,-1,-5,7};{-7,-3,-1,-7,3,-7};{-I,7,-1,3,-3,7};{3,-5,-7,3,-3,-3};{7,5,-3,7,1,5};{7,7,5,-7,-7,7};{-3,-1,3,3,-5,1};{-7,5,5,3,7,-3};{3,-7,-7,-7,1,-5};{-3,-7,1,7,-3,-5};{5,7,1,-3,7,-5};{-1,-5,7,-7,-1,-5};{-7,-7,-7,7,-3,7};{7,1,-7,-7,-7,3};{-1,-3,3,7,7,-3};{7,5,-7,-3,-7,5};{7,-5,-7,-1,7,-1};{-1,-7,5,-1,-1,5};{-5,1,-7,3,7,1};{-3,-7,5,-3,5,-7};{3,5,-3,7,5,-7};{-3,-5,5,-7,3,7};{-7,1,5,-5,-7,3};{3,-5,7,-5,-7,7};{-7,7,-1,-5,1,-7};{7,-7,-5,1,1,5}.

According to the foregoing design, a PAPR value of the first signal is less than 0.5, and frequency-domain flatness of the first signal is less than 0.6.

In one design, when the modulation index $h = \frac{11}{32}$, the impulse length *L* = 3, the modulation dimension *M* = 8, and the phase response function *q(t)* are: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$
and a sampling rate *N =* 2 and a number of sampling blocks *J* = 6 are:
the first sequence {*βᵢ*} belongs to a first sequence set, and a sequence in the first sequence set set includes at least one of the following sequences: {-5,1,3,3,3,1};{-3,-5,-5,-5,-3,-3};{-1,3,-3,1,-3,3};{-3,-1,-1,-3,1,-5 }; {3,5,-1,1,-1,5 }; {3,-1,-1,1,3,1 }; {-1,-5,-3,-5,-1,-3 }; {-3,-5,-5,-5,-3,3 }; {3,1,5,-3,3,3 }; {-3,-5,-1,-5,-3,5};{1,-5,1,-3,3,-3};{5,-1,-5,-1,5,3};{-1,3,1,3,-1,-5};{-1,-3,-3,-1,1,-5};{3,-3,3,-1,1,3};{-5,-3,-1,1,-1,-3};{5,-7,3,-7,5,-5};{-1,-3,-3,1,5,-5};{1,-5,3,-5,3,3};{-5,5,-3,5,-5,-3};{1,-1,5,-5,3,3};{3,3,3,-1,-5,-3};{-1,-5,3,-5,-1,3};{1,-5,1,3,-3,3};{-1,-5,-1,3,-5,3};{-3,-5,-3,5,-7,1};{-1,5,-3,-1,-3,3};{-3,5,1,-1,-5,-3};{-1,-5,-3,5,-3,1};{-3,5,-1,-5,-3,1};{1,1,-5,1,5,-3};{5,1,-5,1,1,-3};{5,-1,-5,-1,1,-5};{-5,3,-1,3,-7,1}.

According to the foregoing design, a PAPR value of the first signal is less than 0.5, and frequency-domain flatness is less than 0.5.

In one design, when the modulation index $h = \frac{3}{16}$, the impulse length *L* = 2, the modulation dimension *M* = 8, and the phase response function *q(t)* are: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$
and a sampling rate *N =* 2 and a number of sampling blocks *J* = 6 are:
the first sequence {*βᵢ*} belongs to a first sequence set, and a sequence in the first sequence set set includes at least one of the following sequences: {1,5,5,-5,-1,-5};{3,-7,-7,-1,3,-1};{7,7,5,-3,5,1};{-7,-7,-1,-3,-7,-7};{7,7,1,7,1,-5};{-7,-3,-5,1,-5,-3};{1,3,-1,-3,1,1};{7,7,5,3,-5,5};{-1,-7,1,-1,1,-5};{3,-7,-7,-5,-7,3};{-3,3,1,5,1,3};{-3,-7,-7,1,-5,-1};{7,7,5,-5,-7,5};{5,5,-5,-3,5,3};{-3,1,-3,5,7,3};{-7,-1,-7,-1,5,-1};{3,-3,5,5,1,-1 }; {-3,-3,-3,-1,-5,5 }; {-7,-7,-5,1,-1,-3 }; {5,-5,-7,-7,3,1 }; {-5,-1,-7,-7,3,-5 }; {5,3,5,-1,-1,1 }; {-7,-7,1,5,7,-1 }; {5,-5,-3,-1,5,-1 }; {3,-3,-1,3,-7,-5 }; {-7,-3,-5,-3,3,-7 }; {3,-5,-1,3,1,-1 }; {-7,-5,-5,5,5,-5 }; {5,-5,-1,-7,-7,5 }; {-3,-1,1,3,-7,-3}.

According to the foregoing design, a PAPR value of the first signal is less than 0.5, and frequency-domain flatness is less than 0.6.

In one design, when the modulation index $h = \frac{11}{64}$, the impulse length *L* = 2, the modulation dimension *M* = 8, and the phase response function *q(t)* are: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$
and a sampling rate *N =* 2 and a number of sampling blocks *J* = 6 are:
the first sequence {*βᵢ*} belongs to a first sequence set, and a sequence in the first sequence set set includes at least one of the following sequences: {3,-1,-7,-1,-3,-1};{7,7,7,7,7,1};{-7,-7,-5,5,-1,3};{3,3,-3,1,3,5};{-5,-3,-7,-7,1,-1};{-7,5,5,5,7,-5};{-1,-1,-1,5,-1,-3};{-5,5,7,7,7,1};{-7,-5,-3,-7,5,-7};{1,7,7,1,5,3};{5,-7,-7,-7,-7,1}; {-1,-1,-7,-1,-1,-3}; {7, 7,1,1,1, 7}; {5,5,-5,-7,-3,-7}; {7, 1,7, 7,-3,5}; {1,-7,-7,-7,-1,-3}; {-3,-3,-1,3,-1,5};{-7,3,3,3,3,-7};{-7,-1,-7,5,5,5};{3,-3,5,7,-1,-1};{-7,3,-3,3,-7,-1};{5,7,5,-3,1,-3};{5,-5,-1,-7,-7,5};{-1,-1,-7,-1,5,-7};{1,-3,5,-7,-7,1};{7,7,1,5,-5,-3};{5,1,5,-7,-1,-1};{-7,5,7,5,-3,-7};{5,-7,-1,5,-1,-1};{5,5,-7,-1,-1,1};{-1,-7,5,5,-1,-3};{-1,5,-5,-5,-5,1}.

According to the foregoing design, a PAPR value of the first signal is less than 0.5, and frequency-domain flatness is less than 0.5.

In one design, when the modulation index $h = \frac{11}{32}$, the impulse length *L* = 4, the modulation dimension *M* = 8, and the phase response function *q(t)* are: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$
and a sampling rate *N =* 2 and a number of sampling blocks *J* = 6 are:
the first sequence {*βᵢ*} belongs to a first sequence set, and a sequence in the first sequence set set includes at least one of the following sequences: {-7,3,1,-5,5,3}; {-3,-7,-3,-7,1,-5};{1,7,1,7,-3,5}; {1,-7,-1,-3,-1,-1};{3,-5,5,3,-1,1};{-3,-3,-3,-7,5,-7};{1,1,5,3,-3,5};{1,-1,-5,1,5,-7};{7,1,-7,3,7,1};{-3,-5,-5,-5,-1,1};{5,-1,5,-3,3,3};{-7,-1,-3,-7,7,-1};{-5,-3,3,-3,1,1};{3,1,5,-1,-5,3};{1,3,-3,5,-3,-3};{-3,1,-7,-1,3,-5};{5,3,1,-3,3,3};{-5,-3,-3,7,-3,-5};{1,7,-3,-5,1,-7};{-1,-3,5,-1,1,5};{-1,-7,3,3,5,3};{7,-3,-7,1,5,-3};{-7,3,-1,1,-5,-3};{3,3,-7,3,-5,3};{7,-7,-3,-3,5,-5};{5,-1,-5,-5,5,1};{-5,-3,1,7,-3,-3};{5,3,-7,7,-5,-3};{-7,-3,3,-7,7,1};{7,-7,3,-3,-7,1}.

According to the foregoing design, a PAPR value of the first signal is less than 0.5, and frequency-domain flatness is less than 0.6.

In one design, when the modulation index $h = \frac{1}{4}$, the impulse length *L* = 3, the modulation dimension *M* = 8, and the phase response function *q*(*t*) are: $q \left(t\right) = \left\{\begin{matrix}0 , t < 0 \\ {\int }_{0}^{t} F \left(λ\right) dλ , 0 \leq t < LT \\ 0.54 , t \geq LT\end{matrix}\right.$ $F \left(t\right) = \left\{\begin{matrix}\frac{1}{LT} \left[0.54-0.46 cos\left(\frac{2 πt}{LT}\right)\right] , & 0 \leq t < LT \\ 0 , & otherwise\end{matrix}\right.$
and a sampling rate *N =* 2 and a number of sampling blocks *J* = 6 are:
the first sequence {*βᵢ*} belongs to a first sequence set, and a sequence in the first sequence set set includes at least one of the following sequences: {-7,7,-7,-1,-7,7};{5,-1,5,5,5,-3};{-5,-5,-1,-1,-7,-5};{-7,7,-3,-7,-7,-7};{1,5,1,-3,-3,7};{5,5,-7,3,5,5};{-7,3,-5,-7,-1,1};{1,-7,5,-1,1,1};{1,7,-1,-1,7,3};{-3,7,-5,-5,-3,-7};{-7,-1,-5,-3,3,-1};{-3,7,-3,7,-1,-7};{-1,-1,-1,7,-7,1};{-1,-5,-7,-7,-5,-1};{1,-1,5,5,-5,1};{3,5,3,-7,3,-7};{7,-5,-5,-7,7,3};{-7,-5,1,-1,1,-5};{5,1,1,5,-1,-3};{5,-1,-7,1,-7,1};{3,-7,-1,1,-3,-3};{-7,-5,-7,-3,5,1};{7,-3,-3,-3,7,3};{-7,7,-3,7,-7,-5};{-1,-3,-1,-5,7,-5};{-5,5,-7,5,5,5};{-7,-5,-7,3,5,3};{7,-7,1,-5,7,-3};{-3,-5,5,3,5,-5};{7,-5,-7,5,-5,-3}; {3,-5,-7,-1, 7,-5}; {5,-7,-5, 7,-3,-5}; {3,-5, 7,-1,-7,-5}; {-I ,-7,5,-3,-1, 7}; {-5, 7,-7,-3, 7,1}; {3, 7,-3,3,-3,-7}.

According to the foregoing design, a PAPR value of the first signal is less than 0.5, and frequency-domain flatness is less than 0.5.

In one design, when the modulation index $h = \frac{1}{4}$, the impulse length *L* = 3, the modulation dimension *M* = 8, and the phase response function *q(t)* are: $q \left(t\right) = \left\{\begin{matrix}0 , t < 0 \\ {\int }_{0}^{t} F \left(λ\right) dλ , 0 \leq t < LT \\ 0.42 , t \geq LT\end{matrix}\right.$ $F \left(t\right) = \left\{\begin{matrix}\frac{1}{LT} \left[0.42-0.5 cos\left(\frac{2 πt}{LT}\right)+0.08cos\left(\frac{4 πt}{LT}\right)\right] , & 0 \leq t < LT \\ 0 , & otherwise\end{matrix}\right.$
and a sampling rate *N =* 2 and a number of sampling blocks *J* = 6 are:
the first sequence {*βᵢ*} belongs to a first sequence set, and a sequence in the first sequence set set includes at least one of the following sequences: {3,3,-1,-7,-1,-7};{-3,5,5,5,-5,1};{-5,-7,-5,-7,-1,5};{1,-5,-7,-5,3,-5};{5,7,-1,5,-3,5};{1,5,-5,1,-3,-1};{-7,-7,-7,-3,-5,1};{7,-1,7,5,1,-1};{-7,3,-3,1,-1,-1};{-3,-5,3,-7,-1,-7};{3,3,3,-7,7,1};{-3,-7,-7,-5,-1,-7};{-5.5,-1,-1,7,5};{5,5,3,5,-1,-7};{1,-7,-7,-1,3,-1};{-7,1,5,-1,5,-3};{3,-3,3,-7,5,-1};{-7,-1,-5,-3,3,-5};{3,-7,-7,-7,3,5};{-1,7,-3,3,-3,7};{-7,1,-7,5,5,3};{-1,3,-3,-7,-5,3};{-1,-5,-1,5,-7,-1};{-3,5,5,5,-5,-7};{-1,-7,-3,-7,-3,1};{-5,1,-5,3,3,3};{-1,-7,3,3,-3,5};{-7,-5,3,-1,-5,5};{-5,-5,-5,5,5,-5};{-1,3,5,5,-7,5}.

According to the foregoing design, a PAPR value of the first signal is less than 0.5, and frequency-domain flatness is less than 0.5.

In one design, when the modulation index $h = \frac{1}{4}$, the impulse length *L* = 3, the modulation dimension *M* = 8, and the phase response function *q(t)* are: $q \left(t\right) = \left\{\begin{matrix}0 , t < 0 \\ {\int }_{0}^{t} F \left(λ\right) dλ , 0 \leq t < LT \\ 0.5 , t \geq LT\end{matrix}\right.$ $F \left(t\right) = \frac{1}{2 T} \left[Q\left(\frac{\frac{t}{T} + \frac{1}{2}}{σ}\right)-Q\left(\frac{\frac{t}{T} - \frac{1}{2}}{σ}\right)\right]$ $Q \left(t\right) = {\int }_{t}^{∞} \frac{1}{\sqrt{2 π}} {e}^{- \frac{{x}^{2}}{2}} dx$ ${σ}^{2} = \frac{In 2}{4 {π}^{2} {\left(BT\right)}^{2}}$
and a bandwidth *B* = 0.3, a sampling rate *N* = 2, and a number of sampling blocks J = 6 are:
the first sequence {*βᵢ*} belongs to a first sequence set, and a sequence in the first sequence set set includes at least one of the following sequences: {-1,-5,3,-3,3,-5};{7,-1,7,-1,7,5};{-5,3,-7,-5,-3,-7};{-1,5,-5,5,-1,5 }; {-5,-1,-7,1,-7,3 }; {5,5,-1,3,-1,5 }; { 1,-3,-1,1,5,5 }; {-3,-3,-5,-7,-5,-1 }; { 1,-3,5,-1,1,-3 }; {-3,3,-3,-7,1,-7 }; {3,-5,3,5,5,5}; {3,3,-7 ,-5,-3,-7}; { -3,5,5,1,5,3}; { 1,-5,1,-5,5,-5}; {-3,-5,-3, 7 ,-3, 7}; { 1,-1,-5,-7,-5,1 }; { 1,-1,3,-3,5,3 }; {3,-7,1,-1,-7,-5 }; {-5,-5,5,5,5,3 }; {-7,5,-7,3,3,3 }; {-3,-3,-5,3,5,-5 }; {5,5,5,-7,7,-7 }; {3,-7,-1,-7,-3,-3 }; { 1,5,-1,-1,-1,5};{-5,-1,3,-1,1,3};{-7,1,-5,-5,-5,5};{-1,-5,3,5,3,-5};{-3,5,-5,-5,-5,5};{-5,-5,-1,5,3,-5};{1,-7,3,3,-7,-1};{-1,-3,3,1,5,-5};{-5,-1,5,-7,5,-5};{3,3,-3,-7,-3,-3};{5,-7,5,-1,-5,-5};{5,-5,3,-1,-5,3};{-5,3,5,-1,1,-3};{3,-5,5,3,-5,-1}.

According to the foregoing design, a PAPR value of the first signal is less than 0.5, and frequency-domain flatness is less than 0.5.

In one design, the fourth sequence includes X elements, and the mapping the fourth sequence to X subcarriers includes: mapping the X elements to X consecutive subcarriers respectively; or mapping the X elements to X non-consecutive and equally spaced subcarriers respectively.

In one design, the method is applied to a terminal, the first communication apparatus is an apparatus having a terminal function, and the determining a fourth sequence based on the third sequence includes: determining a first cyclic shift value based on information to be sent; and performing a cyclic shift on the third sequence based on the first cyclic shift value, to determine the fourth sequence.

In one design, the method is applied to a terminal, the first communication apparatus is an apparatus having a terminal function, and the determining a fourth sequence based on the third sequence includes: determining a first complex symbol based on information to be sent; and determining the fourth sequence based on the first complex symbol and the third sequence.

In one design, the method is applied to a terminal or an access network device, the first communication apparatus is an apparatus having a terminal function or an access network device function, and the determining a fourth sequence based on the third sequence includes: determining a second cyclic shift value based on information to be sent; and performing a cyclic shift on the third sequence based on the second cyclic shift value, to determine the fourth sequence.

According to a second aspect, a peer method corresponding to the first aspect is provided. For beneficial effects, refer to the descriptions of the first aspect, and details are not described again. A signal receiving method is provided, and an execution body of the method is a second communication apparatus. In an uplink communication scenario, the second communication apparatus is an apparatus having an access network device function. In a downlink communication scenario, the second communication apparatus is an apparatus having a terminal function. The method includes: receiving a first signal, where the first signal is a signal carrying HARQ information, or the first signal is a signal carrying SR information, or the first signal is a demodulation reference signal, or the first signal is a phase tracking reference signal; performing OFDM demodulation on the first signal, to determine a fourth sequence; and determining a first result based on the fourth sequence and a third sequence, where the first result is a decoding result or a channel estimation result, the third sequence is a sequence obtained after DFT is performed on a second sequence, and the second sequence is a discrete sequence obtained by performing CPM modulation and sampling on a first sequence.

In one design, the second sequence { *sₙ* } includes X elements, *sₙ* represents an element in the second sequence { *sₙ* }, and *sₙ* satisfies: ${s}_{n} = exp \left(j∗{φ}_{n}\right) ;$
where n is an integer from 0 to X-1, X is an integer greater than zero, exp represents an ex ponential function with e as the base, $j = \sqrt{- 1}$, and *φₙ* represents a phase of the second sequence, and *φₙ* satisfies: ${φ}_{n} = 2 ∗ π ∗ h ∗ {\sum }_{i = 0}^{\left⌊n/N\right⌋} {β}_{i} q \left(\left(n/N-i\right)T\right) ,$ or , ${φ}_{n} = 2 ∗ π ∗ h ∗ {\sum }_{i = 0}^{\left⌊n/N\right⌋} {β}_{i} q \left(\left(n/N-i\right)T\right) + 2 ∗ π ∗ h ∗ {\sum }_{i = 0}^{L - 2} {β}_{J - i - 1} q \left(\left(n/N+i+1\right)T\right) ;$
where *φₙ* is taken modulo 2 * π, or is not taken modulo 2 * π, *h* represents a modulation in dex, *L* represents an impulse length, *N* represents a sampling rate, *J* represents a number of sampling blo cks, *h, L, N,* and *J* all have real number values, *T* represents a symbol period, *q(t)* represents a phase r esponse function, *βᵢ* represents an element in the first sequence {*βᵢ*}, and *i* is an integer from 0 to *J* - 1.

In one design, in the CPM modulation and sampling process: a value range of the modulatio n index h is real numbers from 11/64 to 11/32, a value range of the impulse length L is q(t), t < 0 is a phase response function, the phase response function takes a value of 0 in the range *t* ≥ *LT* and a fixed value in the range *N,* and the sampling rate J and the number of sampling blocks *NJ = X* satisfy: .

In one design, when the modulation index $h = \frac{1}{4}$, the impulse length *L* = 3, the modulation dimension M = 8, and the phase response function *q(t)* are: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$
and a sampling rate *N =* 2 and a number of sampling blocks J = 6 are:
the first sequence {*βᵢ*} belongs to a first sequence set, and a sequence in the first sequence set set includes at least one of the following sequences: {-1,1,5,3,-1,-7};{-3,-1,1,5,-5,1};{-7,-5,-1,-3,-3,-5};{3,-1,3,5,5,1};{-7,-7,-7,-5,5,-3};{-1,-1,-1,-7,-3,-3};{5,5,3,-5,3,5};{-7,7,-3,7,-3,7};{-5,-5,-3,-7,-3,7};{-5,3,-7,1,-5,5 }; {-5,-7,-3,-5,-7,3 }; {5,3,3,3,-7,1 }; {-1,1,5,3,-3,3 }; {-3,-3,-7,5,-5,-3 }; {3,5,5,5,-5,-5 }; {-1,3,-3,-7,-3,3 }; {7,-1,-1,-1,7,-3};{5,-7,7,-7,5,5};{-7,-5,5,-7,3,-5};{-5,1,-3,-5,7,-3};{7,-3,7,-3,-7,-1};{-5,3,-1,-5,7,1};{-7,-5,-7,1,-1,3};{3,-7,3,5,3,-7};{5,-3,-5,-1,-7,3};{-1,1,1,3,-7,3};{-3,-7,3,-1,-3,3};{5,-3,7,-3,-3,-3};{3,-5,-5,-5,-1,5};{-7,-1,-5, 1,-1,5}; {7,-1,-3, 7,-5,-5}; {-5,-1, 1,-7,-3, 7}; {-5,-3, 7,1,-1,1}.

In one design, when the modulation index $h = \frac{3}{16}$, the impulse length *L* = 3, the modulation dimension *M* = 8, and the phase response function *q(t)* are: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$
and a sampling rate *N =* 2 and a number of sampling blocks *J* = 6 are:
the first sequence {*βᵢ*} belongs to a first sequence set, and a sequence in the first sequence set set includes at least one of the following sequences: {-1,-3,5,-1,7,-7};{7,3,5,7,-5,5};{-3,-5,-5,-7,5,-7};{-7,-7,-7,3,3,-7};{7,7,7,-1,-5,7};{-7,-3,-1,-7,3,-7};{-1,7,-1,3,-3,7};{3,-5,-7,3,-3,-3};{7,5,-3,7,1,5};{7,7,5,-7,-7,7};{-3,-1,3,3,-5,1};{-7,5,5,3,7,-3};{3,-7,-7,-7,1,-5};{-3,-7,1,7,-3,-5};{5,7,1,-3,7,-5};{-1,-5,7,-7,-1,-5};{-7,-7,-7,7,-3,7};{7,1,-7,-7,-7,3};{-1,-3,3,7,7,-3};{7,5,-7,-3,-7,5};{7,-5,-7,-1,7,-1};{-1,-7,5,-1,-1,5};{-5,1,-7,3,7,1};{-3,-7,5,-3,5,-7};{3,5,-3,7,5,-7};{-3,-5,5,-7,3,7};{-7,1,5,-5,-7,3};{3,-5,7,-5,-7,7};{-7,7,-1,-5,1,-7};{7,-7,-5,1,1,5}.

In one design, when the modulation index $h = \frac{11}{32}$, the impulse length *L* = 3, the modulation dimension *M* = 8, and the phase response function *q*(*t*) are: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$
and a sampling rate *N =* 2 and a number of sampling blocks *J* = 6 are:
the first sequence {*βᵢ*} belongs to a first sequence set, and a sequence in the first sequence set set includes at least one of the following sequences: {-5,1,3,3,3,1};{-3,-5,-5,-5,-3,-3};{-1,3,-3,1,-3,3};{-3,-1,-1,-3,1,-5 }; {3,5,-1,1,-1,5 }; {3,-1,-1,1,3,1 }; {-1,-5,-3,-5,-1,-3 }; {-3,-5,-5,-5,-3,3 }; {3,1,5,-3,3,3 }; {-3,-5,-1,-5,-3,5};{1,-5,1,-3,3,-3};{5,-1,-5,-1,5,3};{-1,3,1,3,-1,-5};{-1,-3,-3,-1,1,-5};{3,-3,3,-1,1,3};{-5,-3,-1,1,-1,-3};{5,-7,3,-7,5,-5};{-1,-3,-3,1,5,-5};{1,-5,3,-5,3,3};{-5,5,-3,5,-5,-3};{1,-1,5,-5,3,3};{3,3,3,-1,-5,-3};{-1,-5,3,-5,-1,3 };{1,-5,1,3,-3,3 };{-1,-5,-1,3,-5,3 };{-3,-5,-3,5,-7,1};{-1,5,-3,-1,-3,3 };{-3,5,1,-1,-5,-3 };{-1,-5,-3,5,-3,1};{-3,5,-1,-5,-3,1};{1,1,-5,1,5,-3};{5,1,-5,1,1,-3};{5,-1,-5,-1,1,-5};{-5,3,-1,3,-7,1}.

In one design, when the modulation index $h = \frac{3}{16}$, the impulse length *L* = 2, the modulation dimension *M* = 8, and the phase response function *q*(*t*) are: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$
and a sampling rate *N =* 2 and a number of sampling blocks *J* = 6 are:
the first sequence {*βᵢ*} belongs to a first sequence set, and a sequence in the first sequence set set includes at least one of the following sequences: {1,5,5,-5,-1,-5};{3,-7,-7,-1,3,-1};{7,7,5,-3,5,1};{-7,-7,-1,-3,-7,-7};{7,7,1,7,1,-5};{-7,-3,-5,1,-5,-3};{1,3,-1,-3,1,1};{7,7,5,3,-5,5};{-1,-7,1,-1,1,-5};{3,-7,-7,-5,-7,3};{-3,3,1,5,1,3}; {-3,-7 ,-7,1,-5,-1 }; {7, 7 ,5,-5,-7,5}; {5,5,-5,-3,5,3}; {-3, 1 ,-3,5,7,3}; {-7 ,-1,-7,-1,5,-1 }; {3,-3,5,5, 1,-1 }; {-3,-3,-3,-1,-5,5 }; {-7,-7,-5,1,-1,-3 }; {5,-5,-7,-7,3,1 }; {-5,-1,-7,-7,3,-5 }; {5,3,5,-1,-1,1 }; {-7,-7,1,5,7,-1 }; {5,-5,-3,-1,5,-1};{3,-3,-1,3,-7,-5};{-7,-3,-5,-3,3,-7};{3,-5,-1,3,1,-1};{-7,-5,-5,5,5,-5};{5,-5,-1,-7,-7,5};{-3,-1,1,3,-7,-3}.

In one design, when the modulation index $h = \frac{11}{64}$, the impulse length *L* = 2, the modulation dimension *M* = 8, and the phase response function *q*(*t*) are: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$
and a sampling rate *N =* 2 and a number of sampling blocks *J* = 6 are:
the first sequence {*βᵢ*} belongs to a first sequence set, and a sequence in the first sequence set set includes at least one of the following sequences: {3,-1,-7,-1,-3,-1};{7,7,7,7,7,1};{-7,-7,-5,5,-1,3};{3,3,-3,1,3,5};{-5,-3,-7,-7,1,-1};{-7,5,5,5,7,-5};{-1,-1,-1,5,-1,-3};{-5,5,7,7,7,1};{-7,-5,-3,-7,5,-7};{1,7,7,1,5,3};{5,-7,-7,-7,-7,1}; {-1,-1,-7,-1,-1,-3}; {7, 7,1,1,1, 7}; {5,5,-5,-7,-3,-7}; {7, 1,7, 7,-3,5}; {1,-7,-7,-7,-1,-3}; {-3,-3,-1,3,-1,5};{-7,3,3,3,3,-7};{-7,-1,-7,5,5,5};{3,-3,5,7,-1,-1};{-7,3,-3,3,-7,-1};{5,7,5,-3,1,-3};{5,-5,-1,-7,-7,5};{-1,-1,-7,-1,5,-7};{1,-3,5,-7,-7,1};{7,7,1,5,-5,-3};{5,1,5,-7,-1,-1};{-7,5,7,5,-3,-7};{5,-7,-1,5,-1,-1};{5,5,-7,-1,-1,1};{-1,-7,5,5,-1,-3};{-1,5,-5,-5,-5,1}.

In one design, when the modulation index $h = \frac{11}{32}$, the impulse length *L* = 4, the modulation dimension *M* = 8, and the phase response function *q(t)* are: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$
and a sampling rate *N =* 2 and a number of sampling blocks *J* = 6 are:
the first sequence {*βᵢ*} belongs to a first sequence set, and a sequence in the first sequence set set includes at least one of the following sequences: {-7,3,1,-5,5,3}; {-3,-7,-3,-7,1,-5}; { 1,7,1,7,-3,5}; {1,-7,-1,-3,-1,-1};{3,-5,5,3,-1,1};{-3,-3,-3,-7,5,-7};{1,1,5,3,-3,5};{1,-1,-5,1,5,-7};{7,1,-7,3,7,1};{-3,-5,-5,-5,-1,1};{5,-1,5,-3,3,3};{-7,-1,-3,-7,7,-1};{-5,-3,3,-3,1,1};{3,1,5,-1,-5,3};{1,3,-3,5,-3,-3};{-3,1,-7,-1,3,-5};{5,3,1,-3,3,3};{-5,-3,-3,7,-3,-5};{1,7,-3,-5,1,-7};{-1,-3,5,-1,1,5};{-1,-7,3,3,5,3};{7,-3,-7,1,5,-3};{-7,3,-1,1,-5,-3};{3,3,-7,3,-5,3};{7,-7,-3,-3,5,-5};{5,-1,-5,-5,5,1};{-5,-3,1,7,-3,-3};{5,3,-7,7,-5,-3};{-7,-3,3,-7,7,1};{7,-7,3,-3,-7,1}.

In one design, when the modulation index $h = \frac{1}{4}$, the impulse length *L* = 3, the modulation dimension *M* = 8, and the phase response function *q*(*t*) are: $q \left(t\right) = \left\{\begin{matrix}0 , & t < 0 \\ {\int }_{0}^{t} F \left(λ\right) dλ , & 0 \leq t < LT \\ 0.54 , & t \geq LT\end{matrix}\right.$ $F \left(t\right) = \left\{\begin{matrix}\frac{1}{LT} \left[0.54-0.46 cos\left(\frac{2 πt}{LT}\right)\right] , & 0 \leq t < LT \\ 0 , & otherwise\end{matrix}\right.$
and a sampling rate *N =* 2 and a number of sampling blocks *J* = 6 are:
the first sequence {*βᵢ*} belongs to a first sequence set, and a sequence in the first sequence set set includes at least one of the following sequences: {-7,7,-7,-1,-7,7};{5,-1,5,5,5,-3};{-5,-5,-1,-1,-7,-5};{-7,7,-3,-7,-7,-7};{1,5,1,-3,-3,7};{5,5,-7,3,5,5};{-7,3,-5,-7,-1,1};{1,-7,5,-1,1,1};{1,7,-1,-1,7,3};{-3,7,-5,-5,-3,-7};{-7,-1,-5,-3,3,-1};{-3,7,-3,7,-1,-7};{-1,-1,-1,7,-7,1};{-1,-5,-7,-7,-5,-1};{1,-1,5,5,-5,1};{3,5,3,-7,3,-7};{7,-5,-5,-7,7,3};{-7,-5,1,-1,1,-5};{5,1,1,5,-1,-3};{5,-1,-7,1,-7,1};{3,-7,-1,1,-3,-3};{-7,-5,-7,-3,5,1};{7,-3,-3,-3,7,3};{-7,7,-3,7,-7,-5};{-1,-3,-1,-5,7,-5};{-5,5,-7,5,5,5};{-7,-5,-7,3,5,3};{7,-7,1,-5,7,-3};{-3,-5,5,3,5,-5};{7,-5,-7,5,-5,-3}; {3,-5,-7,-1, 7,-5}; {5,-7,-5, 7,-3,-5}; {3,-5, 7,-1,-7,-5}; {-I ,-7,5,-3,-1, 7}; {-5, 7,-7,-3, 7,1}; {3, 7,-3,3,-3,-7}.

In one design, when the modulation index $h = \frac{1}{4}$, the impulse length *L* = 3, the modulation dimension *M* = 8, and the phase response function *q(t)* are: $q \left(t\right) = \left\{\begin{matrix}0 , t < 0 \\ {\int }_{0}^{t} F \left(λ\right) dλ , 0 \leq t < LT \\ 0.42 , t \geq LT\end{matrix}\right.$ $F \left(t\right) = \left\{\begin{matrix}\frac{1}{LT} \left[0.42-0.5 cos\left(\frac{2 πt}{LT}\right)+0.08cos\left(\frac{4 πt}{LT}\right)\right] , & 0 \leq t < LT \\ 0 , & otherwise\end{matrix}\right.$
and a sampling rate *N =* 2 and a number of sampling blocks *J* = 6 are:
the first sequence {*βᵢ*} belongs to a first sequence set, and a sequence in the first sequence set set includes at least one of the following sequences: {3,3,-1,-7,-1,-7};{-3,5,5,5,-5,1};{-5,-7,-5,-7,-1,5};{1,-5,-7,-5,3,-5 }; {5,7,-1,5,-3,5 }; { 1,5,-5,1,-3,-1 }; {-7,-7,-7,-3,-5,1 }; {7,-1,7,5,1,-1 }; {-7,3,-3,1,-1,-1 }; {-3,-5,3,-7,-1,-7};{3,3,3,-7,7,1};{-3,-7,-7,-5,-1,-7};{-5,5,-1,-1,7,5};{5,5,3,5,-1,-7};{1,-7,-7,-7,3,-1};{-7,1,5,-1,5,-3};{3,-3,3,-7,5,-1};{-7,-1,-5,-3,3,-5};{3,-7,-7,-7,3,5};{-1,7,-3,3,-3,7};{-7,1,-7,5,5,3};{-1,3,-3,-7,-5,3};{-1,-5,-1,5,-7,-1};{-3,5,5,5,-5,-7};{-1,-7,-3,-7,-3,1};{-5,1,-5,3,3,3};{-1,-7,3,3,-3,5};{-7,-5,3,-1,-5,5};{-5,-5,-5,5,5,-5};{-1,3,5,5,-7,5}.

In one design, when the modulation index $h = \frac{1}{4}$, the impulse length *L* = 3, the modulation dimension *M* = 8, and the phase response function *q(t)* are: $q \left(t\right) = \left\{\begin{matrix}0 , t < 0 \\ {\int }_{0}^{t} F \left(λ\right) dλ , 0 \leq t < LT \\ 0.5 , t \geq LT\end{matrix}\right.$ $F \left(t\right) = \frac{1}{2 T} \left[Q\left(\frac{\frac{t}{T} + \frac{1}{2}}{σ}\right)-Q\left(\frac{\frac{t}{T} - \frac{1}{2}}{σ}\right)\right]$ $Q \left(t\right) = {\int }_{t}^{∞} \frac{1}{\sqrt{2 π}} {e}^{- \frac{{x}^{2}}{2}} dx$ ${σ}^{2} = \frac{In 2}{4 {π}^{2} {\left(BT\right)}^{2}}$
and a bandwidth *B* = 0.3, a sampling rate *N* = 2, and a number of sampling blocks *J* = 6 are:
the first sequence {*βᵢ*} belongs to a first sequence set, and a sequence in the first sequence set set includes at least one of the following sequences: {-1,-5,3,-3,3,-5};{7,-1,7,-1,7,5};{-5,3,-7,-5,-3,-7};{-1,5,-5,5,-1,5 }; {-5,-1,-7,1,-7,3 }; {5,5,-1,3,-1,5 }; { 1,-3,-1,1,5,5 }; {-3,-3,-5,-7,-5,-1 }; { 1,-3,5,-1,1,-3 }; {-3,3,-3,-7,1,-7 }; {3,-5,3,5,5,5}; {3,3,-7 ,-5,-3,-7}; { -3,5,5,1,5,3}; { 1,-5,1,-5,5,-5}; {-3,-5,-3, 7 ,-3, 7}; { 1,-1,-5,-7,-5,1 }; { 1,-1,3,-3,5,3 }; {3,-7,1,-1,-7,-5 }; {-5,-5,5,5,5,3 }; {-7,5,-7,3,3,3 }; {-3,-3,-5,3,5,-5 }; {5,5,5,-7,7,-7 }; {3,-7,-1,-7,-3,-3 }; { 1,5,-1,-1,-1,5};{-5,-1,3,-1,1,3};{-7,1,-5,-5,-5,5};{-1,-5,3,5,3,-5};{-3,5,-5,-5,-5,5};{-5,-5,-1,5,3,-5};{1,-7,3,3,-7,-1};{-1,-3,3,1,5,-5};{-5,-1,5,-7,5,-5};{3,3,-3,-7,-3,-3};{5,-7,5,-1,-5,-5};{5,-5,3,-1,-5,3};{-5,3,5,-1,1,-3};{3,-5,5,3,-5,-1}.

In one design, the method is applied to an access network device, the first result is a decoding result, and the determining the first result based on the fourth sequence and the third sequence includes: determining Y sixth sequences based on Y third cyclic shift values and the third sequence; performing correlation operations on the fourth sequence and the Y sixth sequences respectively, to obtain Y correlation values, where Y is an integer greater than zero; and determining the decoding result based on a sixth sequence corresponding to the maximum correlation value among the Y correlation values.

In one design, the method is applied to an access network device, the first result is a decoding result, and the determining the first result based on the fourth sequence and the third sequence includes: determining N seventh sequences based on N complex symbols and the third sequence; performing correlation operations on the fourth sequence and the N seventh sequences respectively, to obtain N correlation values, where N is an integer greater than zero; and determining the decoding result based on a seventh sequence corresponding to the maximum correlation value among the N correlation values.

In one design, the method is applied to a terminal or an access network device, the first result is a channel estimation result, and the determining the first result based on the fourth sequence and the third sequence includes: determining the eighth sequence based on the third sequence and a fourth cyclic shift value; and determining the channel estimation result based on the fourth sequence and the eighth sequence.

According to a third aspect, a signal sending method is provided. An execution body of the method is a first communication apparatus. It may be understood that, in an uplink communication scenario, the first communication apparatus may be an apparatus having a terminal function. In a downlink communication scenario, the first communication apparatus is an apparatus having an access network device function. The method includes: determining a fourth sequence, wherein the fourth sequence { *fₙ* } includes X elements, X is an integer greater than zero, *fₙ* is an element in the fourth sequence { *fₙ*} }, and *fₙ* satisfies: ${f}_{n} = A ∗ {x}_{n} ∗ exp \left(2∗π∗j∗a∗n\right) ;$
where n is an integer from 0 to X-1, X is an integer greater than zero, A represents performing phase and/or amplitude modulation, A is a non-zero complex number, exp represents an exponential function with e as the base, $j = \sqrt{- 1}$, a represents a cyclic shift value, a is a real number, {xₙ} represents the third sequence, *xₙ* is an element in the third sequence { *xₙ* }, and *xₙ* satisfies: ${x}_{n} = {\sum }_{k = 0}^{X - 1} {s}_{k} {e}^{- j ∗ 2 ∗ π ∗ n ∗ k / X} ;$
where *sₙ* represents an element in the second sequence { *sₙ* }, the second sequence { *sₙ* } includes X elements, and *sₙ* satisfies: ${s}_{n} = exp \left(j∗{φ}_{n}\right) ,$
where exp represents an exponential sequence with e as the base, $j = \sqrt{- 1}$*, φₙ* represents a phase of the second sequence, and *φₙ* satisfies: ${φ}_{n} = 2 ∗ π ∗ h ∗ {\sum }_{i = 0}^{\left⌊n/N\right⌋} {β}_{i} q \left(\left(n/N-i\right)T\right) ,$ or , ${φ}_{n} = 2 ∗ π ∗ h ∗ {\sum }_{i = 0}^{\left⌊n/N\right⌋} {β}_{i} q \left(\left(n/N-i\right)T\right) + 2 ∗ π ∗ h ∗ {\sum }_{i = 0}^{L - 2} {β}_{J - i - 1} q \left(\left(n/N+i+1\right)T\right) ;$
where *φₙ* is taken modulo 2 * π, or is not taken modulo 2 * π, *h* represents a modulation in dex, *L* represents an impulse length, *N* represents a sampling rate, *J* represents a number of sampling blo cks, *h, L, N,* and J all have real number values, *T* represents a symbol period, *q(t)* represents a phase r esponse function, *βᵢ* represents an element in the first sequence {*βᵢ*}, and *i* is an integer from 0 to *J* - 1.

Mapping the fourth sequence to X subcarriers to generate a first signal; and sending the first signal.

According to a fourth aspect, a signal receiving method is provided. An execution body of the method is a second communication apparatus. In an uplink communication scenario, the second communication apparatus is an apparatus having an access network device function. In a downlink communication scenario, the second communication apparatus is an apparatus having a terminal function. The method includes: receiving a first signal; performing OFDM demodulation on the first signal, to determine a fourth sequence; wherein the fourth sequence { *fₙ* } includes X elements, X is an integer greater than zero, *fₙ* is an element in the fourth sequence { *fₙ*} }, and *fₙ* satisfies: ${f}_{n} = A ∗ {x}_{n} ∗ exp \left(2∗π∗j∗a∗n\right) ;$
where n is an integer from 0 to X-1, X is an integer greater than zero, A represents performing phase and/or amplitude modulation, A is a non-zero complex number, exp represents an exponential function with e as the base, $j = \sqrt{- 1}$, a represents a cyclic shift value, a is a real number, {xₙ} represents the third sequence, *xₙ* is an element in the third sequence { *xₙ* }, and *xₙ* satisfies: ${x}_{n} = {\sum }_{k = 0}^{X - 1} {s}_{k} {e}^{- j ∗ 2 ∗ π ∗ n ∗ k / X} ;$
where *sₙ* represents an element in the second sequence { *sₙ* }, the second sequence { *sₙ* } includes X elements, and *sₙ* satisfies: ${s}_{n} = exp \left(j∗{φ}_{n}\right) ,$
where exp represents an exponential sequence with e as the base, $j = \sqrt{- 1}$*, φₙ* represents a phase of the second sequence, and *φₙ* satisfies: ${φ}_{n} = 2 ∗ π ∗ h ∗ {\sum }_{i = 0}^{\left⌊n/N\right⌋} {β}_{i} q \left(\left(n/N-i\right)T\right) ,$ or , ${φ}_{n} = 2 ∗ π ∗ h ∗ {\sum }_{i = 0}^{\left⌊n/N\right⌋} {β}_{i} q \left(\left(n/N-i\right)T\right) + 2 ∗ π ∗ h ∗ {\sum }_{i = 0}^{L - 2} {β}_{J - i - 1} q \left(\left(n/N+i+1\right)T\right) ;$
where *φₙ* is taken modulo 2 * π, or is not taken modulo 2 * π, *h* represents a modulation in dex, *L* represents an impulse length, *N* represents a sampling rate, *J* represents a number of sampling blo cks, *h, L, N,* and J all have real number values, *T* represents a symbol period, *q(t)* represents a phase r esponse function, *βᵢ* represents an element in the first sequence {*βᵢ*}, and *i* is an integer from 0 to *J* - 1.

Determining a first result based on the fourth sequence and the third sequence, where the first result is a decoding result, or the first result is a channel estimation result, the third sequence is a sequence obtained after DFT is performed on the second sequence, and the second sequence is a discrete sequence obtained by performing CPM modulation and sampling on the first sequence.

According to a fifth aspect, an apparatus is provided, the apparatus can implementonAccordin g to a first aspectorAccording to a third aspectofmethod.For example, the apparatus includesexecuteonAcc ording to a first aspectorAccording to a third aspectofmethodcorresponding toofmeans (means).The appara tus may be implemented by hardware, software, or hardware executing corresponding software.

In one design, the apparatus includes units for performing the method in the foregoing first a spect or third aspect.

In one design, the apparatus includesprocessorandmemory, processorconfigured to executeme moryinstoreofcomputer programorinstructions, so thatapparatusimplementonAccording to a first aspectorAc cording to a third aspectofmethod.

In one design, the apparatus includesprocessorandinterface circuit, interface circuitconfigured t o receivefromapparatusoutsideofotherapparatusofsignaltransmittoprocessoror fromprocessorofsignalsendappa ratusoutsideofotherapparatus, processorcircuitorexecuteinstructionsconfigured to implementonAccording to a first aspectorAccording to a third aspectinofmethod.

In one design, theapparatusmayisoneapparatus, mayoneapparatusinexecuteAccording to a first aspectorAccording to a third aspectindescriptionofmethod//Step/oneonecorresponding toofmodule or unit (F or example, chip, orchip system, orcircuit), orandoneapparatusof.

According to a sixth aspect, an apparatus is provided, the apparatus can implementonAccordi ng to a second aspectorAccording to a fourth aspectofmethod.For example, the apparatus includesexecute onAccording to a second aspectorAccording to a fourth aspectofmethodcorresponding toofmeans (means). The apparatus may be implemented by hardware, software, or hardware executing corresponding software.

In one design, the apparatus includes units for performing the method in the foregoing secon d aspect or fourth aspect.

In one design, the apparatus includesprocessorandmemory, processorconfigured to executeme moryinstoreofcomputer programorinstructions, so thatapparatusimplementonAccording to a second aspector According to a fourth aspectofmethod.

In one design, the apparatus includesprocessorandinterface circuit, interface circuitconfigured t o receivefromapparatusoutsideofotherapparatusofsignaltransmittoprocessoror fromprocessorofsignalsendappa ratusoutsideofotherapparatus, processorcircuitorexecuteinstructionsconfigured to implementonAccording to a second aspectorAccording to a fourth aspectinofmethod.

In one design, theapparatusmayistwoapparatus, maytwoapparatusinexecuteAccording to a seco nd aspectorAccording to a fourth aspectindescriptionofmethod//Step/oneonecorresponding toofmodule or u nit (For example, chip, orchip system, orcircuit), orandtwoapparatusof.

According to a seventh aspect, a computer-readable storage medium is provided, storecomput er programorinstructions, when computer programorinstructionscomputeronrun, so thatcomputerimplemento nAccording to a first aspecttoAccording to a fourth aspectinoneofmethod.

According to an eighth aspect, a computer program product is provided, includescomputer pr ogramorinstructions, when computer programorinstructionscomputerrun, so thatonAccording to a first aspe cttoAccording to a fourth aspectinoncofmethodexecute.

According to a ninth aspect, a chip is provided, includesprocessor, processorandmemorycoupl ed, configured to executememoryinstoreofcomputer programorinstructions, so thatchipimplementonAccordi ng to a first aspecttoAccording to a fourth aspectinoneofmethod.

According to a tenth aspect, a communication system is provided, includes:first communicatio n apparatusandsecond communication apparatus;thein, first communication apparatusconfigured to implem entonAccording to a first aspectofmethod, second communication apparatusconfigured to implementonAcc ording to a second aspectofmethod;or, first communication apparatusconfigured to implementonAccording to a third aspectofmethod, second communication apparatusconfigured to implementonAccording to a four th aspectofmethod.

### BRIEF DESCRIPTION OF DRAWINGS

FIG. 1 is a schematic diagram of a communication system according to an embodiment of this application;
FIG. 2 is a schematic flowchart according to an embodiment of this application;
FIG. 3 is a schematic structural diagram of an apparatus according to an embodiment of this application;
FIG. 4 is another schematic structural diagram of an apparatus according to an embodiment of this application.

### DESCRIPTION OF EMBODIMENTS

To make the objectives, technical solutions, and advantages of this application clearer, the following further describes this application in detail with reference to the accompanying drawings. Specific operation methods, function descriptions, and the like in the method embodiments may also be applied to apparatus embodiments or system embodiments.

In embodiments of this application, various numbers and terms such as "first" and "second" are merely used for convenient distinction in description, and are not intended to limit the scope of embodiments of this application. The sequence numbers of the foregoing processes do not mean an execution order, and the execution order of the processes should be determined based on functions and internal logic thereof.

In embodiments of this application, unless otherwise specified, a noun in singular form also covers its plural form, namely, "one or more". "At least one" means one or more, and "a plurality of" means two or more. "And/or" describes an association relationship between associated objects and indicates three relationships. For example, A and/or B may indicate: A alone, both A and B, or B alone, where A and B may be singular or plural.

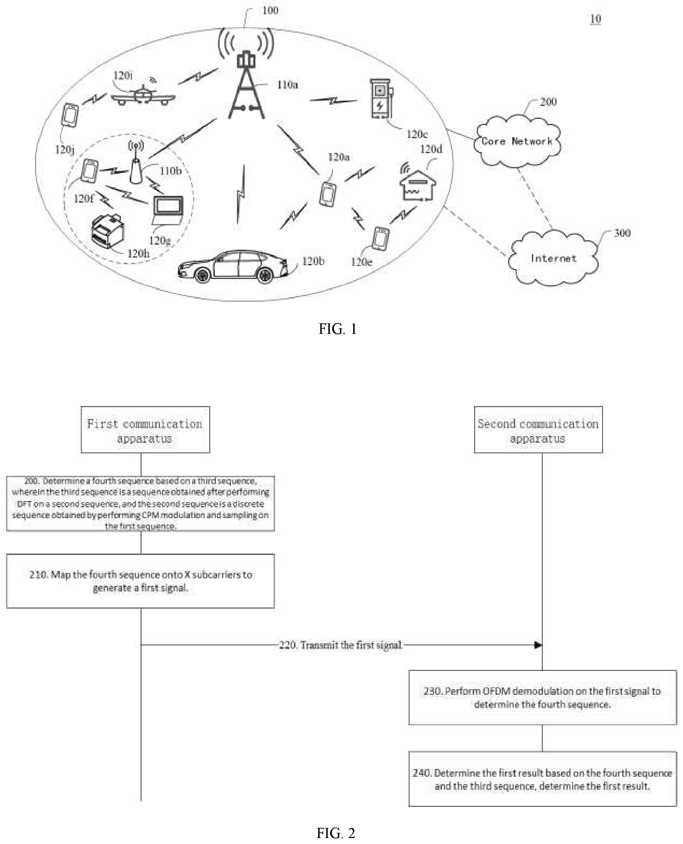

FIG. 1 is a schematic diagram of a possible and non-limiting system. As shown in FIG. 1, a communication system 10 includes a radio access network (RAN) 100 and a core network (CN) 200. Optionally, the communication system 10 further includes the Internet 300.

The RAN 100 includes at least one RAN node (for example, 110a and 110b shown in FIG. 1, which may be collectively referred to as 110) and at least one terminal (for example, 120a to 120j shown in FIG. 1, which may be collectively referred to as 120). The RAN 100 may further include another RAN node, for example, a wireless relay device and/or a wireless backhaul device (not shown in FIG. 1).

The terminal 120 may be connected to the RAN node 110 in a wireless manner. The RAN node 110 may be connected to the core network 200 in a wireless or wired manner. A core network device in the core network 200 and the RAN node 110 in the RAN 100 may be different physical devices, or may be one physical device integrating a logical function of a core network device and a logical function of a radio access network.

The RAN 100 may be a cellular system related to the 3rd Generation Partnership Project (3GPP), for example, a fourth generation (4G) mobile communication system, a fifth generation (5G) mobile communication system, or a future-oriented evolved system, for example, a sixth generation (6G) mobile communication system. The RAN 100 may alternatively be an open radio access network (O-RAN or ORAN), a cloud radio access network (CRAN), or a wireless fidelity (WiFi) system. The RAN 100 may alternatively be a communication system integrating two or more of the foregoing systems.

A plurality of RAN nodes 110 in the communication system 10 may be nodes of a same type or different types. In some scenarios, roles of the RAN node 110 and the terminal 120 are relative. For example, network element 120i in FIG. 1 may be a helicopter or unmanned aerial vehicle and may be configured as a mobile base station. For a terminal 120j accessing the RAN 100 through the network element 120i, the network element 120i is a base station; however, for the base station 110a, the network element 120i is a terminal.

In a possible scenario, the RAN node 110 may be a base station, an evolved NodeB (eNodeB), an access point (AP), a transmission reception point (TRP), a next generation NodeB (gNB), a next generation base station in a 6G mobile communication system, a base station in a future mobile communication system, an access node in a WiFi system, or the like. The RAN node 110 may be a macro base station (for example, 110a in FIG. 1), a micro base station or indoor station (for example, 110b in FIG. 1), a relay node or donor node, or a wireless controller in a CRAN scenario. Optionally, the RAN node 110 may further be a server, a wearable device, a vehicle or in-vehicle device, or the like. For example, an access network device in vehicle to everything (V2X) may be a road side unit (RSU). All or some functions of the RAN node 110 in embodiments of this application may also be implemented by software running on hardware, or by a virtualized function instantiated on a platform, for example, a cloud platform. The RAN node 110 may further be a logical node, logical module, or software capable of implementing all or some functions of the RAN node 110.

In another possible scenario, a plurality of RAN nodes 110 cooperate to assist the terminal 120 in implementing wireless access, and different RAN nodes 110 implement some functions of a base station respectively. For example, the RAN node 110 may be a central unit (CU), a distributed unit (DU), a CU-control plane (CP), a CU-user plane (UP), a radio unit (RU), or the like. The CU and the DU may be separately disposed, or may be included in a same network element, for example, a baseband unit (BBU). The RU may be included in a radio-frequency device or a radio-frequency unit, for example, included in a remote radio unit (RRU), an active antenna unit (AAU), or a remote radio head (RRH).

In different systems, a CU (or CU-CP and CU-UP), a DU, or an RU may also have different names, but a person skilled in the art can understand meanings thereof. For example, in an ORAN system, a CU may also be referred to as an O-CU, a DU may also be referred to as an O-DU, a CU-CP may also be referred to as an O-CU-CP, a CU-UP may also be referred to as an O-CU-UP, and an RU may also be referred to as an O-RU. For ease of description, the CU, CU-CP, CU-UP, DU, and RU are used as examples in this application. Any one of the CU (or CU-CP and CU-UP), DU, and RU in this application may be implemented by a software module, a hardware module, or a combination of a software module and a hardware module.

The terminal 120 may also be referred to as a terminal device, user equipment (UE), a mobile station, a mobile terminal, or the like. The terminal 120 may be widely used in various scenarios, for example, device-to-device (D2D), vehicle to everything (V2X) communication, machine-type communication (MTC), internet of things (IoT), virtual reality (VR), augmented reality (AR), industrial control, autonomous driving, remote medical care, smart grid, smart home, smart office, smart wearable, intelligent transportation, and smart city. The terminal 120 may be a mobile phone, a head-mounted display device, a tablet computer, a computer having a wireless transceiver function, a wearable device, a vehicle, an unmanned aerial vehicle, a helicopter, an airplane, a ship, a robot, a mechanical arm, a smart home device, or the like. A device form of the terminal 120 is not limited in embodiments of this application.

The RAN node 110 and the terminal 120 are sometimes both referred to as communication apparatuses. For example, network elements 110a and 110b in FIG. 1 may be understood as communication apparatuses having a base station function, and network elements 120a to 120j may be understood as communication apparatuses having a terminal function. The RAN node 110 may sometimes also be referred to as an access network device, a RAN entity, an access node, or the like, and forms part of the communication system to help the terminal 120 implement wireless access. In the following descriptions of this application, unless otherwise specified, "access network device" is used for description.

In the communication system shown in FIG. 1, information may be transmitted between a terminal and an access network device. An example in which the terminal sends uplink information to the access network device is used. The terminal obtains a computer generated sequence (CGS) sequence; the terminal modulates information to be sent onto the CGS sequence, performs orthogonal frequency division multiplexing (OFDM) modulation, and sends the information to the access network device through an uplink channel. Because the CGS sequence generated by the terminal is a frequency-domain constant-modulus sequence, after OFDM modulation, the frequency-domain constant-modulus sequence is transformed into a time-domain non-constant-modulus sequence. For the non-constant-modulus sequence, amplitude fluctuation is relatively large, and a peak-to-average power ratio (PAPR) is relatively high, approximately 2.7 decibels (dB). How to reduce a PAPR value of a signal sent by a transmit end and improve coverage performance is a technical problem to be resolved in embodiments of this application.

In view of this, embodiments of this application provide a signal sending and receiving method. The method includes: a transmit end performs continuous phase modulation (CPM) modulation and sampling on a first sequence, to obtain a second sequence. CPM modulation and sampling includes two processes: CPM modulation and sampling. For example, the transmit end performs CPM modulation on the first sequence, to obtain a CPM sequence, and samples the CPM sequence, to obtain the second sequence. The CPM sequence is a time-domain constant-modulus sequence, and a PAPR value is theoretically equal to zero. The transmit end performs discrete Fourier transform (DFT) on the second sequence, and transforms the second sequence from a time domain to a frequency domain, to obtain a third sequence, where the third sequence is a frequency-domain sequence. The transmit end modulates information to be sent onto the third sequence, to obtain a fourth sequence. The transmit end maps the fourth sequence to X subcarriers, to obtain a fifth sequence. OFDM modulation is performed on the fifth sequence, to generate a first signal, and the first signal is sent to a receive end. In the OFDM modulation process, the transmit end transforms the fifth sequence from the frequency domain to the time domain. It can be learned that, in the method in embodiments of this application, a time-domain constant-modulus CPM sequence is first generated, and then DFT is performed, to transform the sequence from the time domain to the frequency domain. Then, through OFDM transform, the sequence is transformed from the frequency domain back to the time domain. The whole processing process may be summarized as follows: converting a time-domain constant-modulus CPM sequence to a frequency domain, and then converting a frequency-domain sequence to a time domain. Theoretically, the first signal obtained after OFDM modulation is time-domain constant-modulus, and a PAPR value thereof is equal to zero. However, in actual application, due to various factors, the PAPR value of the first signal may be less than or equal to a first threshold, for example, the first threshold is equal to 0.5 dB. Compared with a method for sending a signal by using a CGS sequence, the method in embodiments of this application can reduce a PAPR value of a signal sent by the transmit end, and improve coverage performance.

It may be understood that the method provided in embodiments of this application may be applied to an uplink communication process. In the uplink communication process, the transmit end is a terminal, and the terminal may send a first signal by using the signal sending method provided in embodiments of this application. The receive end is an access network device, and the access network device may receive the first signal by using the signal receiving method provided in embodiments of this application. Alternatively, the method provided in embodiments of this application may be applied to a downlink communication process. In the downlink communication process, the transmit end is an access network device, and the access network device may send a first signal by using the signal sending method provided in embodiments of this application. The receive end is a terminal, and the terminal may receive the first signal by using the signal receiving method provided in embodiments of this application.

For ease of understanding and description, the following describes the solutions of embodiments of this application by using interaction between a first communication apparatus and a second communication apparatus as an example. It may be understood that, in an uplink communication process, a terminal serves as a transmit end, and an access network device serves as a receive end. The first communication apparatus may be an apparatus having a terminal function, for example, may be a terminal, a module in the terminal (such as a circuit, chip, or chip system), or a logical node, logical module, or software implementing all or some terminal functions. The second communication apparatus may be an apparatus having an access network device function, for example, may be an access network device, a module in the access network device (such as a circuit, chip, or chip system), or a logical node, logical module, or software implementing all or some functions. In a downlink communication process, the access network device serves as a transmit end, and the terminal serves as a receive end. The first communication apparatus is an apparatus having an access network device function, for example, may be an access network device, a module in the access network device, or a logical node, logical module, or software implementing all or some access network device functions. The second communication apparatus is an apparatus having a terminal function, for example, may be a terminal, a module in the terminal, or a logical node, logical module, or software implementing all or some terminal functions.

As shown in FIG. 2, embodiments of this application provide a schematic flowchart, including:

Step 200: The first communication apparatus determines a fourth sequence based on a third sequence, where the third sequence is a sequence obtained after DFT is performed on a second sequence, and the second sequence is a discrete sequence obtained by performing CPM modulation and sampling on a first sequence.

In a possible implementation, the first communication apparatus performs CPM modulation and sampling on the first sequence, to obtain the second sequence, where the second sequence is a discrete sequence. For example, CPM modulation and sampling includes two processes: CPM modulation and sampling. The first communication apparatus performs CPM modulation on the first sequence, to obtain a CPM sequence, and samples the CPM sequence, to obtain the second sequence, where the second sequence is a discrete CPM sequence. Alternatively, the CPM modulation process and the sampling process may be performed synchronously. For example, the first sequence includes eight elements. When the first communication apparatus performs CPM modulation on some elements included in the first sequence, the first communication apparatus synchronously samples CPM sequences corresponding to another part of elements included in the first sequence.

For example, the first communication apparatus may input the first sequence to a CPM modulator, to obtain a CPM sequence. The CPM sequence may be a phase-continuous and constant-modulus time-domain signal, and the CPM sequence *s*(*t, **β**)* satisfies: $s \left(t, {β}_{i}\right) = exp \left(j∗{φ}_{t}\right)$
where *βᵢ* represents an element in the first sequence {*βᵢ*} element, exp represents an exponential function with e as the base, $j = \sqrt{- 1}$, and *φₜ* represents a phase of the CPM sequence.

When an initial phase of the CPM sequence is 0, a phase *φₜ* of the CPM sequence satisfies: ${φ}_{t} = 2 ∗ π ∗ h ∗ {\sum }_{i = 0}^{\left⌊t/T\right⌋} {β}_{i} q \left(t-iT\right)$

Alternatively, when an initial phase of the CPM sequence is not equal to 0, a phase *φₜ* of the CPM sequence satisfies: ${φ}_{t} = 2 ∗ π ∗ h ∗ {\sum }_{i = 0}^{\left⌊t/T\right⌋} {β}_{i} q \left(t-iT\right) + 2 πh {\sum }_{i = 0}^{L - 2} {β}_{J - i - 1} q \left(t+\left(i+1\right)T\right)$
where *φₜ* is taken modulo 2 * π, or *φₜ* is not taken modulo 2 * π, *h* represents a modulatio n index, *L* represents an impulse length, and *h* and *L* both have real number values. For example, a valu e of *h* may be 1/2 or 1/4, which affects a phase interval between adjacent CPM modulation signals. A v alue of *L* may be 3, which indicates that an output of a current CPM modulator is related to a current in put symbol and two input symbols before the current input symbol. . or, *L* may be 4, which indicates that the output of the current CPM modulator is related to the current input symbol and three input symbols before the current input symbol. *T* represents a symbol period, and *T* may be 1, which indicates that a d uration of each input symbol is 1. *βᵢ* represents an element in the first sequence {*βᵢ*} element, i is an in teger from 0 to n, and *q(t)* represents a phase response function. Optionally, *q(t)* is associated with an i mpulse function *F(t).* For example, *q(t)* satisfies: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$
where , *F(t)* represents an impulse function, *F(t)* may be a rectangular impulse function, a raised-cosine impulse function, or the like, which is not limited. For example, when *F(t)* is a raised-cosi ne impulse function, *F(t)* satisfies: $F \left(t\right) = \left\{\begin{matrix}\frac{1}{2 LT} \left[1-cos\left(\frac{2 πt}{LT}\right)\right] , & 0 \leq t < LT \\ 0 , & otherwise \left(otherwise\right)\end{matrix}\right.$

The first communication apparatus samples the CPM sequence, to obtain a second sequence. The second sequence is a discrete CPM sequence. For example, the second sequence ***s*** satisfies: $s = \left[s\left(t=0∗\frac{T}{N},{β}_{i}\right),s\left(t=1∗\frac{T}{N},{β}_{i}\right),…,s\left(t=\left(JN-1\right)∗\frac{T}{N},{β}_{i}\right)\right]$
where *T* represents a symbol period, *N* represents a sampling rate, and J represents a number of sampling blocks. For example, *N* may be 2, which indicates that two values are obtained in one symbol period *T*. For example, in a first symbol period *T*, an output second sequence (that is, the CPM sequence) includes two elements, namely $\left.\left\{s\left(t=0∗\frac{T}{2},{β}_{i}\right),s\left(t=1∗\frac{T}{2},{β}_{i}\right)\right\}\right\}$. *J* may be 6, which indicates that a quantity of symbols on which CPM modulation and sampling are performed is 6.

In a possible design, the first communication apparatus performs discrete modulation on the CPM sequence, to obtain X elements, and any element *sₙ* in the second sequence { *sₙ* } satisfies: ${s}_{n} = exp \left(j∗{φ}_{n}\right) ;$
where n is an integer from 0 to X-1, exp represents an exponential function with e as the ba se, $j = \sqrt{- 1}$, and *φₙ* represents a phase of the second sequence, and *φₙ* satisfies: ${φ}_{n} = 2 ∗ π ∗ h ∗ {\sum }_{i = 0}^{\left⌊n/N\right⌋} {β}_{i} q \left(\left(n/N-i\right)T\right) ,$ or , ${φ}_{n} = 2 ∗ π ∗ h ∗ {\sum }_{i = 0}^{\left⌊n/N\right⌋} {β}_{i} q \left(\left(n/N-i\right)T\right) + 2 ∗ π ∗ h ∗ {\sum }_{i = 0}^{L - 2} {β}_{J - i - 1} q \left(\left(n/N+i+1\right)T\right) ;$
where *φₙ* is taken modulo 2 * π, or *φₙ* is not taken modulo 2 * π, *h* represents a modulatio n index, *L* represents an impulse length, *N* represents a sampling rate, *J* represents a number of sampling blocks, *h, L, N,* and J all have real number values, *T* represents a symbol period, *q(t)* represents a pha se response function, *βᵢ* represents an element in the first sequence {*βᵢ*} element, and i is an integer fro m 0 to*J* - 1.

The first communication apparatus performs DFT on the second sequence, and transforms the second sequence from a time domain to a frequency domain, to obtain the third sequence, where the thi rd sequence is a frequency-domain sequence. The first communication apparatus determines the fourth se quence based on the third sequence. For example, the first communication apparatus modulates informati on to be sent onto the third sequence, to obtain the fourth sequence.

In a possible implementation, the first communication apparatus is an apparatus having a terminal function. An example in which the first communication apparatus feeds back information on a format 0 physical uplink control channel (PUCCH) is used. The first communication apparatus may determine a first cyclic shift value based on information to be sent; and the first communication apparatus performs cyclic shift on the third sequence based on the first cyclic shift value, to determine the fourth sequence.

Optionally, the information to be sent may be HARQ feedback information or other information other than HARQ feedback, which is not limited. An example in which the information to be sent is HARQ feedback information is used. There is a correspondence between HARQ feedback information and a cyclic shift sequence m_{CS}. The first communication apparatus may determine, based on the correspondence between HARQ feedback information and the cyclic shift sequence m_{CS}, a cyclic shift sequence m_{CS} corresponding to the HARQ feedback information to be sent. For example, four cyclic shift sequences m_{CS} are respectively {0}, {3}, {6}, and {9}. HARQ feedback information 00 corresponds to cyclic shift sequence m_{CS} {0}, HARQ feedback information 01 corresponds to cyclic shift sequence m_{CS} {3}, HARQ feedback information 10 corresponds to cyclic shift sequence m_{CS} {6}, and HARQ feedback information 11 corresponds to cyclic shift sequence m_{CS} {9}. The first communication apparatus determines a first cyclic shift value based on the cyclic shift sequence m_{CS}. For example, when the cyclic shift sequence m_{CS} is 3, the first cyclic shift value is 3/12. The first cyclic shift value is represented as *α,* the third sequence is represented as { *xₙ }, xₙ* is an element in the third sequence { *xₙ* }, the fourth sequence is represented as { *fₙ*} }, *fₙ* is an element in the fourth sequence { *fₙ*} }, and *fₙ* satisfies: ${f}_{n} = {x}_{n}^{\left(α\right)} = {e}^{j ∗ 2 ∗ π ∗ α ∗ n} {x}_{n}$

In another possible implementation, the first communication apparatus is an apparatus having a terminal function. An example in which the first communication apparatus feeds back information on a format 1 PUCCH is used. The first communication apparatus determines a first complex symbol based on information to be sent; and the first communication apparatus determines the fourth sequence based on the first complex symbol and the third sequence. For example, the first communication apparatus multiplies the first complex symbol by the third sequence, to obtain the fourth sequence.

Optionally, the information to be sent may be HARQ feedback information or other information other than HARQ feedback, which is not limited. An example in which the information to be sent is HARQ feedback information is used. In this possible implementation, a cyclic shift sequence m_{CS} is a preset value or a fixed value, and the first communication apparatus determines a cyclic shift value α based on the preset or fixed cyclic shift sequence m_{CS}. A first complex symbol is obtained by modulating the HARQ feedback information to be sent. Modulation modes include but are not limited to binary phase shift keying (BPSK), quadrature phase shift keying (QPSK), 8 quadrature amplitude modulation (QAM), 16QAM, or the like. For example, the first complex symbol obtained after BPSK modulation is performed on the HARQ feedback information may be 1 or -1. The third sequence is represented as { *xₙ }, xₙ* is an element in the third sequence { *xₙ* }, the first complex symbol is represented as d(0), the fourth sequence is represented as
{ *fₙ*} *}, fₙ* is an element in the fourth sequence { *fₙ*} }, and *fₙ* satisfies: ${f}_{n} = d \left(0\right) {x}_{n}^{\left(α\right)} = d \left(0\right) {e}^{j ∗ 2 ∗ π ∗ α ∗ n} {x}_{n}$

In another possible implementation, the first communication apparatus is an apparatus having a terminal function, or the first communication apparatus is an apparatus having an access network device function. The first communication apparatus may feed back a reference signal to the second communication apparatus by using the method in the procedure of FIG. 2. The method includes: determining a second cyclic shift value based on information to be sent; and performing cyclic shift on the third sequence based on the second cyclic shift value, to determine the fourth sequence.

Optionally, the information to be sent may be a reference signal or other information other than a reference signal, which is not limited. An example in which the information to be sent is a reference signal is used. For example, cyclic shift sequences m_{CS} corresponding to different reference signals may be different. The first communication apparatus may determine, based on a correspondence between a reference signal and a cyclic shift sequence m_{CS}, a cyclic shift sequence m_{CS} corresponding to the reference signal to be sent. The first communication apparatus determines a second cyclic shift value α based on the cyclic shift sequence m_{CS} corresponding to the reference signal to be sent. The third sequence is represented as { *xₙ }, xₙ* is an element in the third sequence { *xₙ* }, the fourth sequence is represented as { *fₙ*} *}, fₙ* is an element in the fourth sequence { *fₙ*} }, and *fₙ* satisfies: ${f}_{n} = {x}_{n}^{\left(α\right)} = {e}^{j ∗ 2 ∗ π ∗ α ∗ n} {x}_{n}$

Optionally, the first communication apparatus may further determine the first sequence. The process includes: the first communication apparatus determines a first group number u based on a higher-layer configured parameter; the first communication apparatus determines, based on a correspondence between group numbers and and sequences, a sequence corresponding to the first group number *n*, where the sequence is referred to as the first sequence. Then, the first communication apparatus performs CPM modulation and sampling on the first sequence according to the foregoing descriptions, to determine the second sequence; performs DFT on the second sequence, to obtain the third sequence; determines the fourth sequence based on the third sequence; and maps the fourth sequence to X subcarriers, to generate the first signal. Alternatively, the first communication apparatus may directly determine the second sequence. For example, the process in which the first communication apparatus determines the second sequence includes: the first communication apparatus determines a second group number u' based on a higher-layer configured parameter; the first communication apparatus determines, based on a correspondence between group numbers and and sequences, a sequence corresponding to the second group number u', where the sequence is referred to as the second sequence. Then, the first communication apparatus performs DFT on the second sequence according to the foregoing descriptions, to obtain the third sequence; determines the fourth sequence based on the third sequence; and maps the fourth sequence to X subcarriers, to generate the first signal.

In a possible implementation, the fourth sequence may be represented as { *fₙ* }, the fourth sequence { *fₙ* } includes X elements, X is an integer greater than zero, *fₙ* is an element in the fourth sequence { *fₙ*} }, and *fₙ* satisfies: ${f}_{n} = A ∗ {x}_{n} ∗ exp \left(2∗π∗j∗a∗n\right) ;$
where n is an integer from 0 to X-1, X is an integer greater than zero, A represents performing phase and/or amplitude modulation, A is a non-zero complex number, exp represents an exponential function with e as the base, $j = \sqrt{- 1}$, a represents a cyclic shift value, a is a real number, {xₙ} represents the third sequence, *xₙ* is an element in the third sequence { *xₙ* }, and *xₙ* satisfies: ${x}_{n} = {\sum }_{k = 0}^{X - 1} {s}_{k} {e}^{- j ∗ 2 ∗ π ∗ n ∗ k / X} ;$
where sₙ represents an element in the second sequence { sₙ }, the second sequence { sₙ } includes X elements, and sₙ satisfies: ${s}_{n} = exp \left(j∗{φ}_{n}\right) ,$
where exp represents an exponential sequence with e as the base, $j = \sqrt{- 1}$, φₙ represents a phase of the second sequence, and *φₙ* satisfies: ${φ}_{n} = 2 ∗ π ∗ h ∗ {\sum }_{i = 0}^{\left⌊n/N\right⌋} {β}_{i} q \left(\left(n/N-i\right)T\right) ,$ or , ${φ}_{n} = 2 ∗ π ∗ h ∗ {\sum }_{i = 0}^{\left⌊n/N\right⌋} {β}_{i} q \left(\left(n/N-i\right)T\right) + 2 ∗ π ∗ h ∗ {\sum }_{i = 0}^{L - 2} {β}_{J - i - 1} q \left(\left(n/N+i+1\right)T\right) ;$
where *φₙ* is taken modulo 2 * π, or is not taken modulo 2 * π, *h* represents a modulation in dex, *L* represents an impulse length, *N* represents a sampling rate, *J* represents a number of sampling blo cks, *h, L, N,* and J all have real number values, *T* represents a symbol period, *q(t)* represents a phase r esponse function, *βᵢ* represents an element in the first sequence {*βᵢ*}, and *i* is an integer from 0 to *J* - 1.

Step 210: The first communication apparatus maps the fourth sequence to X subcarriers, to generate a first signal, where X is an integer greater than zero.

In a possible implementation, the fourth sequence includes X elements, and the first communication apparatus maps the X elements to X consecutive subcarriers respectively, to obtain a fifth sequence; or the first communication apparatus maps the X elements to X non-consecutive and equally spaced subcarriers respectively, to obtain a fifth sequence. The first communication apparatus performs OFDM modulation on the fifth sequence, to obtain the first signal. The OFDM modulation process includes inverse discrete Fourier transform (IDFT) and adding a cyclic prefix (CP), or the like. For example, the fourth sequence includes 12 elements, and a quantity of subcarriers used to send the first signal is 1200. The first communication apparatus may map the 12 elements to 12 consecutive subcarriers in the 1200 subcarriers, or to 12 non-consecutive and equally spaced subcarriers. The first communication apparatus performs zero padding on the remaining 1188 subcarriers other than the foregoing 12 subcarriers in the 1200 subcarriers, to obtain 1200 elements. In addition to the 12 elements of the fourth sequence, the fifth sequence further includes the subsequently padded 1188 zero elements. The first communication apparatus performs a 2^{*ceil*(*log*²¹²⁰⁰)} = 2048-point IDFT transform on the 1200 elements included in the fifth sequence, where ceil() represents a ceiling operation, transforms the fifth sequence from the frequency domain to the time domain, and adds a CP to the time-domain sequence, to obtain the first signal.

Step 220: The first communication apparatus sends the first signal, and the second communication apparatus receives the first signal.

In a possible implementation, when the information to be sent is HARQ feedback information, the first signal is a signal carrying HARQ information. Alternatively, when the information to be sent is scheduling request (SR) information, the first signal is a signal carrying SR information. Alternatively, when the information to be sent is information corresponding to a reference signal, the first signal is a demodulation reference signal (DMRS), or the first signal is a phase-tracking reference signal (PT-RS).

Step 230: The second communication apparatus performs OFDM demodulation on the first signal, to determine the fourth sequence.

In a possible implementation, the OFDM demodulation process includes DFT and CP removal. For example, the second communication apparatus may remove a CP from the first signal, to obtain a sequence. The second communication apparatus performs 2048-point DFT on the sequence, and transforms the sequence from a time domain to a frequency domain, to obtain a fifth sequence. The second communication apparatus obtains the fourth sequence from the fifth sequence. For example, the fifth sequence includes 1200 elements, and the second communication apparatus may select 12 elements at positions of the fourth sequence from the 1200 elements, where the 12 elements are the fourth sequence.

Step 240: The second communication apparatus determines a first result based on the fourth sequence and the third sequence.

In a possible implementation, a process in which the second communication apparatus determines the third sequence is similar to a process in which the first communication apparatus determines the third sequence. For example, the second communication apparatus performs CPM modulation and sampling on the first sequence, to obtain the second sequence, where the second sequence is a discrete sequence obtained by performing CPM modulation and sampling on the first sequence. The second communication apparatus performs DFT on the second sequence, to obtain the third sequence, where the third sequence is a sequence obtained after DFT is performed on the second sequence. For a specific process, refer to the process in which the first communication apparatus determines the third sequence.

In a possible implementation, the first result is a decoding result, the first signal is transmitted on a format 0 PUCCH, and the second communication apparatus is an apparatus having an access network device function. The second communication apparatus determines Y sixth sequences based on Y third cyclic shift values and the third sequence; the second communication apparatus performs correlation operations on the fourth sequence and the Y sixth sequences respectively, to obtain Y correlation values, where Y is an integer greater than zero; and the second communication apparatus determines the decoding result based on a sixth sequence corresponding to the maximum correlation value among the Y correlation values.

For example, an example in which the first result is a decoding result of HARQ feedback is used. The second communication apparatus may determine all possible cyclic shift sequences based on all possible HARQ feedback information, and determine all possible cyclic shift values based on all possible cyclic shift sequences. In one description, all possible cyclic shift values are described as Y third cyclic shift values. For example, for two-bit HARQ feedback information, a value combination of cyclic shift values is {0/12, 3/12, 6/12, 9/12}, that is, there are four possible cyclic shift values, Y is equal to 4, and four third cyclic shift values exist. The third sequence is represented as { m_{CS} }, m_{CS} is an element in the third sequence { *xₙ* }, one third cyclic shift value in the Y third cyclic shift values is represented as *xₙ*, one sixth sequence in the Y sixth sequences is represented as *xₙ*, α is an element in the sixth sequence {*yₙ*}, *yₙ* is an element in the sixth sequence { *yₙ* }, and *yₙ* satisfies: ${y}_{n} = {x}_{n}^{\left(α\right)} = {e}^{j ∗ 2 ∗ π ∗ α ∗ n} {x}_{n}$

The second communication apparatus performs correlation operations on the fourth sequence obtained based on the received first signal and the Y sixth sequences respectively, to obtain Y correlation values. The second communication apparatus selects, from the Y correlation values, a correlation value having the greatest value. The second communication apparatus determines a sixth sequence corresponding to the correlation value having the greatest value. The second communication apparatus infers a cyclic shift value corresponding to the sixth sequence, further infers a cyclic shift sequence corresponding to the cyclic shift value, further infers HARQ feedback information corresponding to the cyclic shift sequence, and uses the HARQ feedback information as the decoding result.αm_{CS}m_{CS}

In another possible implementation, the first result is a decoding result, the first signal is transmitted on a format 1 PUCCH, and the second communication apparatus is an apparatus having an access network device function. The second communication apparatus determines N seventh sequences based on N complex symbols and the third sequence; the second communication apparatus performs correlation operations on the fourth sequence and the N seventh sequences respectively, to obtain N correlation values, where N is an integer greater than zero; and the second communication apparatus determines the decoding result based on a seventh sequence corresponding to the maximum correlation value among the N correlation values.

For example, an example in which the first result is a decoding result of HARQ feedback is used. The second communication apparatus may determine all possible complex symbols based on all possible HARQ feedback information. In one description, all possible complex symbols are described as N complex symbols. For example, for two-bit HARQ feedback information, a value combination after QPSK modulation is $\left\{\left(-1/\sqrt{2}-j∗1/\sqrt{2}\right), \left(-1/\sqrt{2}+j∗1/\sqrt{2}\right), \left(1/\sqrt{2}-j∗1/\sqrt{2}\right), \left(1/\sqrt{2}+j∗1/\sqrt{2}\right)\right\}$ , and in this case, there are four possible complex symbols, N is equal to 4, and four complex symbols exist. The third sequence is represented as { *xₙ* }, *xₙ* is an element in the third sequence { *xₙ* }, one complex symbol in the N complex symbols is represented as d(0), one seventh sequence in the N seventh sequences is represented as {*yₙ*}, *yₙ* is an element in the seventh sequence { *yₙ* }, and *yₙ* satisfies: ${y}_{n} = d \left(0\right) {x}_{n}^{\left(α\right)}$

The second communication apparatus performs correlation operations on the fourth sequence obtained based on the received first signal and the N seventh sequences respectively, to obtain N correlation values. The second communication apparatus selects, from the N correlation values, a correlation value having the greatest value. The second communication apparatus determines a seventh sequence corresponding to the maximum correlation value. The second communication apparatus infers a complex symbol corresponding to the seventh sequence, further infers HARQ feedback information corresponding to the complex symbol, and uses the HARQ feedback information as the decoding result.

In another possible implementation, when the first result is a channel estimation result, the second communication apparatus is an apparatus having a terminal function, or the second communication apparatus is an apparatus having an access network device function. The second communication apparatus determines an eighth sequence based on the third sequence and a fourth cyclic shift value; and the second communication apparatus determines the channel estimation result based on the fourth sequence and the eighth sequence.

For example, the second communication apparatus may determine, based on a correspondence between a reference signal and a cyclic shift value, a cyclic shift value corresponding to a currently transmitted reference signal, where the cyclic shift value may be referred to as a fourth cyclic shift value. The third sequence is represented as { *xₙ }, xₙ* is an element in the third sequence { *xₙ* }, the fourth cyclic shift value is represented as *α,* the eighth sequence is represented as {*yₙ*}, *yₙ* is an element in the eighth sequence { *yₙ* }, and *yₙ* satisfies: ${y}_{n} = {x}_{n}^{\left(α\right)} = {e}^{j ∗ 2 ∗ π ∗ α ∗ n} {x}_{n}$

The second communication apparatus performs channel estimation based on the fourth sequence obtained from the received first signal and the eighth sequence, to determine the channel estimation result.

It may be understood that the reference signal may be transmitted in a data channel or a control channel. If the first signal in embodiments of this application is an uplink reference signal, the first signal may be transmitted in a PUCCH, or the first signal may be transmitted in a physical uplink shared channel (PUSCH). Alternatively, if the first signal in embodiments of this application is a downlink reference signal, the first signal may be transmitted in a physical downlink control channel (PDCCH), or the first signal may be transmitted in a physical downlink shared channel (PDSCH).

In a possible implementation, in the CPM modulation and sampling process: a value range of the modulation index h is real numbers from 11/64 to 11/32, a value range of the impulse length L is L > 1, q(t) is a phase response function, the phase response function takes a value of 0 in the range t < 0 and a fixed value in the range *t* ≥ *LT,* and the sampling rate N and the number of sampling blocks J sa tisfy: NJ = X.

According to the foregoing method, in the CPM modulation and sampling process, the param eters satisfy the foregoing conditions, so that a block error rate (BLER) of the receive end (that is, the s econd communication apparatus) during sequence detection is lower.

Optionally, to enable the generated CPM sequence to satisfy requirements, design of the CPM sequence needs to satisfy the following requirements:
1. Good autocorrelation performance: satisfying this characteristic can enable the receive end to have a lower BLER during sequence detection. Further, in a frequency domain, an autocorrelation value of the CPM sequence at a cyclic shift value of 0 is greater than or equal to twice an autocorrelation value at a cyclic shift value that is an integer multiple of one fourth of the entire CPM sequence length.
2. A phase at an ending position in the time domain is continuous with a phase at a starting position. Satisfying this characteristic can make the PAPR value of the CPM sequence lower. To satisfy this characteristic, an element in the first sequence {*βᵢ*} element*βᵢ*, satisfies: $\left({\sum }_{i = 0}^{J - 1} {β}_{i}\right) mod 2 P = 0$
   where P represents a denominator of the modulation index h. For example, when the modulation index h is 1/2, P is 2.

In a possible implementation, when the modulation index $h = \frac{1}{4}$, the impulse length *L* = 3, the modulation dimension M = 8, where the modulation dimension indicates a value range of the first sequence, for example, for M-dimensional modulation, a value of the first sequence belongs to the following set {±1, ±3, ±5, ..., ±M - 1}, and the phase response function *q*(*t*) is: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$
and a sampling rate *N =* 2 and a number of sampling blocks J = 6 are:
The first sequence {*βᵢ*} belongs to a first sequence set, and a sequence in the first sequence set set includes at least one of the following sequences: {-1,1,5,3,-1,-7};{-3,-1,1,5,-5,1};{-7,-5,-1,-3,-3,-5};{3,-1,3,5,5,1};{-7,-7,-7,-5,5,-3};{-1,-1,-1,-7,-3,-3};{5,5,3,-5,3,5};{-7,7,-3,7,-3,7};{-5,-5,-3,-7,-3,7};{-5,3,-7,1,-5,5 }; {-5,-7,-3,-5,-7,3 }; {5,3,3,3,-7,1 }; {-1,1,5,3,-3,3 }; {-3,-3,-7,5,-5,-3 }; {3,5,5,5,-5,-5 }; {-1,3,-3,-7,-3,3 }; {7,-1,-1,-1,7,-3};{5,-7,7,-7,5,5};{-7,-5,5,-7,3,-5};{-5,1,-3,-5,7,-3};{7,-3,7,-3,-7,-1};{-5,3,-1,-5,7,1};{-7,-5,-7,1,-1,3};{3,-7,3,5,3,-7};{5,-3,-5,-1,-7,3};{-1,1,1,3,-7,3};{-3,-7,3,-1,-3,3};{5,-3,7,-3,-3,-3};{3,-5,-5,-5,-1,5};{-7,-1,-5, 1,-1,5}; {7,-1,-3, 7,-5,-5}; {-5,-1, 1,-7,-3, 7}; {-5,-3, 7,1,-1,1}.
first sequence setincludes33groups of first sequence, the33groups of first sequencesatisfiesthe foregoing characteristic2inofcondition, the33groups of first sequenceofcross-correlationandCGSsequenceofcross-correlationclose to, no significant difference.the33groups of first sequenceandgroups of number u of correspondence This is not limited. For example, the33groups of first sequenceandgroups of number *u* of correspondence, as Table 1:

**Table 1**

| Group number*u* | First sequence |
|---|---|
| 0 | {-1,1,5,3,-1,-7} |
| 1 | {-3,-1,1,5,-5,1} |
| 2 | {-7,-5,-1,-3,-3,-5} |
| 3 | {3,-1,3,5,5,1} |
| 4 | {-7,-7,-7,-5,5,-3} |
| 5 | {-1,-1,-1,-7,-3,-3} |
| 6 | {5,5,3,-5,3,5} |
| 7 | {-7,7,-3,7,-3,7} |
| 8 | {-5,-5,-3,-7,-3,7} |
| 9 | {-5,3,-7,1,-5,5} |
| 10 | {-5,-7,-3,-5,-7,3} |
| 11 | {5,3,3,3,-7,1} |
| 12 | {-1,1,5,3,-3,3} |
| 13 | {-3,-3,-7,5,-5,-3} |
| 14 | {3,5,5,5,-5,-5} |
| 15 | {-1,3,-3,-7,-3,3} |
| 16 | {7,-1,-1,-1,7,-3} |
| 17 | {5,-7,7,-7,5,5} |
| 18 | {-7,-5,5,-7,3,-5} |
| 19 | {-5,1,-3,-5,7,-3} |
| 20 | {7,-3,7,-3,-7,-1} |
| 21 | {-5,3,-1,-5,7,1} |
| 22 | {-7,-5,-7,1,-1,3} |
| 23 | {3,-7,3,5,3,-7} |
| 24 | {5,-3,-5,-1,-7,3} |
| 25 | {-1,1,1,3,-7,3} |
| 26 | {-3,-7,3,-1,-3,3} |
| 27 | {5,-3,7,-3,-3,-3} |
| 28 | {3,-5,-5,-5,-1,5} |
| 29 | {-7,-1,-5,1,-1,5} |
| 30 | {7,-1,-3,7,-5,-5} |
| 31 | {-5,-1,1,-7,-3,7} |
| 32 | {-5,-3,7,1,-1,1} |

According to the foregoing design, autocorrelation of the generated CPM sequence satisfies the foregoing characteristic 1, a PAPR value of the first signal is less than 0.5, and frequency-domain flatness of the first signal is less than 0.5. Optionally, the frequency-domain flatness of the first signal may be measured by variance. A smaller variance value indicates smaller frequency-domain flatness of the first signal, and conversely, a larger variance value indicates larger frequency-domain flatness of the first signal.

In a possible implementation, when the modulation index $h = \frac{3}{16}$, the impulse length *L* = 3, the modulation dimension M = 8, and the phase response function *q(t)* are: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$
and a sampling rate *N =* 2 and a number of sampling blocks J = 6 are:
The first sequence {*βᵢ*} belongs to a first sequence set, and a sequence in the first sequence set set includes at least one of the following sequences: {-1,-3,5,-1,7,-7};{7,3,5,7,-5,5};{-3,-5,-5,-7,5,-7};{-7,-7,-7,3,3,-7};{7,7,7,-1,-5,7};{-7,-3,-1,-7,3,-7};{-1,7,-1,3,-3,7};{3,-5,-7,3,-3,-3};{7,5,-3,7,1,5};{7,7,5,-7,-7,7};{-3,-1,3,3,-5,1};{-7,5,5,3,7,-3};{3,-7,-7,-7,1,-5};{-3,-7,1,7,-3,-5};{5,7,1,-3,7,-5};{-1,-5,7,-7,-1,-5};{-7,-7,-7,7,-3,7};{7,1,-7,-7,-7,3};{-1,-3,3,7,7,-3};{7,5,-7,-3,-7,5};{7,-5,-7,-1,7,-1};{-1,-7,5,-1,-1,5};{-5,1,-7,3,7,1};{-3,-7,5,-3,5,-7};{3,5,-3,7,5,-7};{-3,-5,5,-7,3,7};{-7,1,5,-5,-7,3};{3,-5,7,-5,-7,7};{-7,7,-1,-5,1,-7};{7,-7,-5,1,1,5}.
first sequence setinincludes30groups of first sequence, the30groups of first sequencepartially satisfiesthe foregoing characteristic2inofcondition, the30groups of first sequenceofcross-correlationandCGSsequenceofcross-correlationclose to, no significant difference.the30groups of first sequenceandgroups of number u of correspondence This is not limited. For example, the30groups of first sequenceandgroups of numberuofcorrespondence, asTable2:

**Table 2**

| Group number*u* | First sequence |
|---|---|
| 0 | {-1,-3,5,-1,7,-7} |
| 1 | {7,3,5,7,-5,5} |
| 2 | {-3,-5,-5,-7,5,-7} |
| 3 | {-7,-7,-7,3,3,-7} |
| 4 | {7,7,7,-1,-5,7} |
| 5 | {-7,-3,-1,-7,3,-7} |
| 6 | {-1,7,-1,3,-3,7} |
| 7 | {3,-5,-7,3,-3,-3} |
| 8 | {7,5,-3,7,1,5} |
| 9 | {7,7,5,-7,-7,7} |
| 10 | {-3,-1,3,3,-5,1} |
| 11 | {-7,5,5,3,7,-3} |
| 12 | {3,-7,-7,-7,1,-5} |
| 13 | {-3,-7,1,7,-3,-5} |
| 14 | {5,7,1,-3,7,-5} |
| 15 | {-1,-5,7,-7,-1,-5} |
| 16 | {-7,-7,-7, 7,-3, 7} |
| 17 | {7,1,-7,-7,-7,3} |
| 18 | {-1,-3,3,7,7,-3} |
| 19 | {7,5,-7,-3,-7,5} |
| 20 | {7,-5,-7,-1,7,-1} |
| 21 | {-1,-7,5,-1,-1,5} |
| 22 | {-5,1,-7,3,7,1} |
| 23 | {-3,-7,5,-3,5,-7} |
| 24 | {3,5,-3,7,5,-7} |
| 25 | {-3,-5,5,-7,3,7} |
| 26 | {-7,1,5,-5,-7,3} |
| 27 | {3,-5,7,-5,-7,7} |
| 28 | {-7,7,-1,-5,1,-7} |
| 29 | {7,-7,-5,1,1,5} |

According to the foregoing design, autocorrelation of the generated CPM sequence satisfies the foregoing characteristic 1, a PAPR value of the first signal is less than 0.5, and frequency-domain flatness of the first signal is less than 0.6.

In a possible implementation, when the modulation index $h = \frac{11}{32}$, the impulse length *L* = 3, the modulation dimension M = 8, and the phase response function *q(t)* are: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$
and a sampling rate *N =* 2 and a number of sampling blocks J = 6 are:
The first sequence {*βᵢ*} belongs to a first sequence set, and a sequence in the first sequence set set includes at least one of the following sequences: {-5,1,3,3,3,1};{-3,-5,-5,-5,-3,-3};{-1,3,-3,1,-3,3};{-3,-1,-1,-3,1,-5};{3,5,-1,1,-1,5};{3,-1,-1,1,3,1};{-1,-5,-3,-5,-1,-3};{-3,-5,-5,-5,-3,3};{3,1,5,-3,3,3};{-3,-5,-1,-5,-3,5};{1,-5,1,-3,3,-3};{5,-1,-5,-1,5,3};{-1,3,1,3,-1,-5};{-1,-3,-3,-1,1,-5};{3,-3,3,-1,1,3};{-5,-3,-1,1,-1,-3};{5,-7,3,-7,5,-5};{-1,-3,-3,1,5,-5};{1,-5,3,-5,3,3};{-5,5,-3,5,-5,-3};{1,-1,5,-5,3,3};{3,3,3,-1,-5,-3};{-1,-5,3,-5,-1,3};{1,-5,1,3,-3,3};{-1,-5,-1,3,-5,3};{-3,-5,-3,5,-7,1};{-1,5,-3,-1,-3,3};{-3,5,1,-1,-5,-3};{-1,-5,-3,5,-3,1};{-3,5,-1,-5,-3,1};{1,1,-5,1,5,-3};{5,1,-5,1,1,-3};{5,-1,-5,-1,1,-5};{-5,3,-1,3,-7,1}.
first sequence setincludes34groups of first sequence, the34groups of first sequencepartially satisfiesthe foregoing characteristic2inofcondition, the34groups of first sequenceofcross-correlationandCGSsequenceofcross-correlationclose to, no significant difference.the34groups of first sequenceandgroups of number u of correspondence This is not limited. For example, the34groups of first sequenceandgroups of numberuofcorrespondence, asTable3:

**Table 3**

| Group number*u* | First sequence |
|---|---|
| 0 | {-5,1,3,3,3,1} |
| 1 | {-3,-5,-5,-5,-3,-3} |
| 2 | {-1,3,-3,1,-3,3} |
| 3 | {-3,-1,-1,-3,1,-5} |
| 4 | {3,5,-1,1,-1,5} |
| 5 | {3,-1,-1,1,3,1} |
| 6 | {-1,-5,-3,-5,-1,-3} |
| 7 | {-3,-5,-5,-5,-3,3} |
| 8 | {3,1,5,-3,3,3} |
| 9 | {-3,-5,-1,-5,-3,5} |
| 10 | {1,-5,1,-3,3,-3} |
| 11 | {5,-1,-5,-1,5,3} |
| 12 | {-1,3,1,3,-1,-5} |
| 13 | {-1,-3,-3,-1,1,-5} |
| 14 | {3,-3,3,-1,1,3} |
| 15 | {-5,-3,-1,1,-1,-3 } |
| 16 | {5,-7,3,-7,5,-5} |
| 17 | {-1,-3,-3,1,5,-5} |
| 18 | {1,-5,3,-5,3,3} |
| 19 | {-5,5,-3,5,-5,-3} |
| 20 | {1,-1,5,-5,3,3} |
| 21 | {3,3,3,-1,-5,-3} |
| 22 | {-1,-5,3,-5,-1,3} |
| 23 | {1,-5,1,3,-3,3} |
| 24 | {-1,-5,-1,3,-5,3} |
| 25 | {-3,-5,-3,5,-7,1} |
| 26 | {-1,5,-3,-1,-3,3} |
| 27 | {-3,5,1,-1,-5,-3 } |
| 28 | {-1,-5,-3,5,-3,1} |
| 29 | {-3,5,-1,-5,-3,1} |
| 30 | {1,1,-5,1,5,-3} |
| 31 | {5,1,-5,1,1,-3} |
| 32 | {5,-1,-5,-1,1,-5} |
| 33 | {-5,3,-1,3,-7,1} |

According to the foregoing design, autocorrelation of the generated CPM sequence satisfies the foregoing characteristic 1, a PAPR value of the first signal is less than 0.5, and frequency-domain flatness of the first signal is less than 0.5.

In a possible implementation, when the modulation index $h = \frac{3}{16}$, the impulse length *L* = 2, the modulation dimension M = 8, and the phase response function *q(t)* are: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$
and a sampling rate *N =* 2 and a number of sampling blocks J = 6 are:
The first sequence {*βᵢ*} belongs to a first sequence set, and a sequence in the first sequence set set includes at least one of the following sequences: {1,5,5,-5,-1,-5};{3,-7,-7,-1,3,-1};{7,7,5,-3,5,1};{-7,-7,-1,-3,-7,-7};{7,7,1,7,1,-5};{-7,-3,-5,1,-5,-3};{1,3,-1,-3,1,1};{7,7,5,3,-5,5};{-1,-7,1,-1,1,-5};{3,-7,-7,-5,-7,3};{-3,3,1,5,1,3}; {-3,-7 ,-7,1,-5,-1 }; {7, 7 ,5,-5,-7,5}; {5,5,-5,-3,5,3}; {-3, 1 ,-3,5,7,3}; {-7 ,-1,-7,-1,5,-1 }; {3,-3,5,5, 1,-1 }; {-3,-3,-3,-1,-5,5 }; {-7,-7,-5,1,-1,-3 }; {5,-5,-7,-7,3,1 }; {-5,-1,-7,-7,3,-5 }; {5,3,5,-1,-1,1 }; {-7,-7,1,5,7,-1 }; {5,-5,-3,-1,5,-1};{3,-3,-1,3,-7,-5};{-7,-3,-5,-3,3,-7};{3,-5,-1,3,1,-1};{-7,-5,-5,5,5,-5};{5,-5,-1,-7,-7,5};{-3,-1,1,3,-7,-3}.
first sequence setincludes30groups of first sequence, the30groups of first sequencepartially satisfiesthe foregoing characteristic2inofcondition, the30groups of first sequenceofcross-correlationandCGSsequenceofcross-correlationof. on the30groups of first sequenceandgroups of number u of correspondence This is not limited. For example, the30groups of first sequenceandgroups of numberuofcorrespondence, asTable4:

**Table 4**

| Group number*u* | First sequence |
|---|---|
| 0 | {1,5,5,-5,-1,-5} |
| 1 | {3,-7,-7,-1,3,-1} |
| 2 | {7,7,5,-3,5,1} |
| 3 | {-7,-7,-1,-3,-7,-7} |
| 4 | {7,7,1,7,1,-5} |
| 5 | {-7,-3,-5,1,-5,-3} |
| 6 | {1,3,-1,-3,1,1} |
| 7 | {7,7,5,3,-5,5} |
| 8 | {-1,-7,1,-1,1,-5} |
| 9 | {3,-7,-7,-5,-7,3} |
| 10 | {-3,3,1,5,1,3} |
| 11 | {-3,-7,-7,1,-5,-1} |
| 12 | {7,7,5,-5,-7,5} |
| 13 | {5,5,-5,-3,5,3} |
| 14 | {-3,1,-3,5,7,3} |
| 15 | {-7,-1,-7,-1,5,-1} |
| 16 | {3,-3,5,5,1,-1} |
| 17 | {-3,-3,-3,-1,-5,5} |
| 18 | {-7,-7,-5,1,-1,-3} |
| 19 | {5,-5,-7,-7,3,1} |
| 20 | {-5,-1,-7,-7,3,-5} |
| 21 | {5,3,5,-1,-1,1} |
| 22 | {-7,-7,1,5,7,-1} |
| 23 | {5,-5,-3,-1,5,-1} |
| 24 | {3,-3,-1,3,-7,-5} |
| 25 | {-7,-3,-5,-3,3,-7} |
| 26 | {3,-5,-1,3,1,-1} |
| 27 | {-7,-5,-5,5,5,-5} |
| 28 | {5,-5,-1,-7,-7,5} |
| 29 | {-3,-1,1,3,-7,-3} |

According to the foregoing design, autocorrelation of the generated CPM sequence satisfies the foregoing characteristic 1, a PAPR value of the first signal is less than 0.5, and frequency-domain flatness of the first signal is less than 0.6.

In a possible implementation, when the modulation index $h = \frac{11}{64}$, the impulse length *L* = 2, the modulation dimension M = 8, and the phase response function *q(t)* are: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$
and a sampling rate *N =* 2 and a number of sampling blocks J = 6 are:
The first sequence {*βᵢ*} belongs to a first sequence set, and a sequence in the first sequence set set includes at least one of the following sequences: {3,-1,-7,-1,-3,-1};{7,7,7,7,7,1};{-7,-7,-5,5,-1,3};{3,3,-3,1,3,5};{-5,-3,-7,-7,1,-1};{-7,5,5,5,7,-5};{-1,-1,-1,5,-1,-3};{-5,5,7,7,7,1};{-7,-5,-3,-7,5,-7};{1,7,7,1,5,3};{5,-7,-7,-7,-7,1}; {-1,-1,-7,-1,-1,-3}; {7, 7,1,1,1, 7}; {5,5,-5,-7,-3,-7}; {7, 1,7, 7,-3,5}; {1,-7,-7,-7,-1,-3}; {-3,-3,-1,3,-1,5};{-7,3,3,3,3,-7};{-7,-1,-7,5,5,5};{3,-3,5,7,-1,-1};{-7,3,-3,3,-7,-1};{5,7,5,-3,1,-3};{5,-5,-1,-7,-7,5};{-1,-1,-7,-1,5,-7};{1,-3,5,-7,-7,1};{7,7,1,5,-5,-3};{5,1,5,-7,-1,-1};{-7,5,7,5,-3,-7};{5,-7,-1,5,-1,-1};{5,5,-7,-1,-1,1};{-1,-7,5,5,-1,-3};{-1,5,-5,-5,-5,1}.
first sequence setincludes32groups of first sequence, the32groups of first sequencepartially satisfiesthe foregoing characteristic2inofcondition, the32groups of first sequenceofcross-correlationandCGSsequenceofcross-correlationno significant difference.the32groups of first sequenceandgroups of number u of correspondence This is not limited. For example, the32groups of first sequenceandgroups of numberuofcorrespondence, asTable5:

**Table 5**

| Group number*u* | First sequence |
|---|---|
| 0 | {3,-1,-7,-1,-3,-1} |
| 1 | {7,7,7,7,7,1} |
| 2 | {-7,-7,-5,5,-1,3} |
| 3 | {3,3,-3,1,3,5} |
| 4 | {-5,-3,-7,-7,1,-1} |
| 5 | {-7,5,5,5,7,-5} |
| 6 | {-1,-1,-1,5,-1,-3} |
| 7 | {-5,5,7,1,7,1} |
| 8 | {-7,-5,-3,-7,5,-7} |
| 9 | {1,7,7,1,5,3} |
| 10 | {5,-7,-7,-7,-7,1} |
| 11 | {-1,-1,-7,-1,-1,-3} |
| 12 | {7,7,1,1,1,7} |
| 13 | {5,5,-5,-7,-3,-7} |
| 14 | {7,1,7,7,-3,5} |
| 15 | {1,-7,-7,-7,-1,-3} |
| 16 | {-3,-3,-1,3,-1,5} |
| 17 | {-7,3,3,3,3,-7} |
| 18 | {-7,-1,-7,5,5,5} |
| 19 | {3,-3,5,7,-1,-1} |
| 20 | {-7,3,-3,3,-7,-1} |
| 21 | {5,7,5,-3,1,-3} |
| 22 | {5,-5,-1,-7,-7,5} |
| 23 | {-1,-1,-7,-1,5,-7} |
| 24 | {1,-3,5,-7,-7,1} |
| 25 | {7,7,1,5,-5,-3} |
| 26 | {5,1,5,-7,-1,-1} |
| 27 | {-7,5,7,5,-3,-7} |
| 28 | {5,-7,-1,5,-1,-1} |
| 29 | {5,5,-7,-1,-1,1} |
| 30 | {-1,-7,5,5,-1,-3} |
| 31 | {-1,5,-5,-5,-5,1} |

According to the foregoing design, autocorrelation of the generated CPM sequence satisfies the foregoing characteristic 1, a PAPR value of the first signal is less than 0.5, and frequency-domain flatness of the first signal is less than 0.5.

In a possible implementation, when the modulation index $h = \frac{11}{32}$, the impulse length *L* = 4, the modulation dimension M = 8, and the phase response function *q(t)* are: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$
and a sampling rate *N =* 2 and a number of sampling blocks J = 6 are:
The first sequence {*βᵢ*} belongs to a first sequence set, and a sequence in the first sequence set set includes at least one of the following sequences: {-7,3,1,-5,5,3}; {-3,-7,-3,-7,1,-5}; { 1,7,1,7,-3,5}; {1,-7,-1,-3,-1,-1};{3,-5,5,3,-1,1};{-3,-3,-3,-7,5,-7};{1,1,5,3,-3,5};{1,-1,-5,1,5,-7};{7,1,-7,3,7,1};{-3,-5,-5,-5,-1,1};{5,-1,5,-3,3,3};{-7,-1,-3,-7,7,-1};{-5,-3,3,-3,1,1};{3,1,5,-1,-5,3};{1,3,-3,5,-3,-3};{-3,1,-7,-1,3,-5};{5,3,1,-3,3,3};{-5,-3,-3,7,-3,-5};{1,7,-3,-5,1,-7};{-1,-3,5,-1,1,5};{-1,-7,3,3,5,3};{7,-3,-7,1,5,-3};{-7,3,-1,1,-5,-3};{3,3,-7,3,-5,3};{7,-7,-3,-3,5,-5};{5,-1,-5,-5,5,1};{5,-1,-5,-5,5,1};{5,3,-7,7,-5,-3};{-7,-3,3,-7,7,1};{7,-7,3,-3,-7,1}.
first sequence setincludes30groups of first sequence, the30groups of first sequencepartially satisfiesthe foregoing characteristic2inofcondition, the30groups of first sequenceofcross-correlationandCGSsequenceofcross-correlationno significant difference.the30groups of first sequenceandgroups of number u ofcorrespondence, This is not limited. For example, the30groups of sequenceandgroups of numberuofcorrespondence, asTable6.

**Table 6**

| Group number*u* | First sequence |
|---|---|
| 0 | {-7,3,1,-5,5,3} |
| 1 | {-3,-7,-3,-7,1,-5} |
| 2 | { 1,7,1,7,-3,5 } |
| 3 | {1,-7,-1,-3,-1,-1} |
| 4 | {3,-5,5,3,-1,1} |
| 5 | {-3,-3,-3,-7,5,-7} |
| 6 | {1,1,5,3,-3,5} |
| 7 | {1,-1,-5,1,5,-7} |
| 8 | {7,1,-7,3,7,1} |
| 9 | {-3,-5,-5,-5,-1,1} |
| 10 | {5,-1,5,-3,3,3} |
| 11 | {-7,-1,-3,-7,7,-1} |
| 12 | {-5,-3,3,-3,1,1} |
| 13 | {3,1,5,-1,-5,3} |
| 14 | {1,3,-3,5,-3,-3} |
| 15 | {-3,1,-7,-1,3,-5} |
| 16 | {5,3,1,-3,3,3} |
| 17 | {-5,-3,-3,7,-3,-5} |
| 18 | {1,7,-3,-5,1,-7} |
| 19 | {-1,-3,5,-1,1,5} |
| 20 | {-1,-7,3,3,5,3} |
| 21 | {7,-3,-7,1,5,-3} |
| 22 | {-7,3,-1,1,-5,-3} |
| 23 | {3,3,-7,3,-5,3} |
| 24 | {7,-7,-3,-3,5,-5} |
| 25 | {5,-1,-5,-5,5,1} |
| 26 | {5,-1,-5,-5,5,1} |
| 27 | {5,3,-7,7,-5,-3} |
| 28 | {-7,-3,3,-7, 7,1} |
| 29 | {7,-7,3,-3,-7,1} |

According to the foregoing design, autocorrelation of the generated CPM sequence satisfies the foregoing characteristic 1, a PAPR value of the first signal is less than 0.5, and frequency-domain flatness of the first signal is less than 0.6.

In a possible implementation, when the modulation index $h = \frac{1}{4}$, the impulse length *L* = 3, the modulation dimension M = 8, and the phase response function *q(t)* are: $q \left(t\right) = \left\{\begin{matrix}0 , t < 0 \\ {\int }_{0}^{t} F \left(λ\right) dλ , 0 \leq t < LT \\ 0.54 , t \geq LT\end{matrix}\right.$ $F \left(t\right) = \left\{\begin{matrix}\frac{1}{LT} \left[0.54-0.46 cos\left(\frac{2 πt}{LT}\right)\right] , & 0 \leq t < LT \\ 0 , & otherwise\end{matrix}\right.$
and a sampling rate N *=* 2 and a number of sampling blocks *J* = 6 are:
The first sequence {*βᵢ*} belongs to a first sequence set, and a sequence in the first sequence set set includes at least one of the following sequences: {-7,7,-7,-1,-7,7};{5,-1,5,5,5,-3};{-5,-5,-1,-1,-7,-5};{-7,7,-3,-7,-7,-7};{1,5,1,-3,-3,7};{5,5,-7,3,5,5};{-7,3,-5,-7,-1,1};{1,-7,5,-1,1,1};{1,7,-1,-1,7,3};{-3,7,-5,-5,-3,-7};{-7,-1,-5,-3,3,-1};{-3,7,-3,7,-1,-7};{-1,-1,-1,7,-7,1};{-1,-5,-7,-7,-5,-1};{1,-1,5,5,-5,1};{3,5,3,-7,3,-7};{7,-5,-5,-7,7,3};{-7,-5,1,-1,1,-5};{5,1,1,5,-1,-3};{5,-1,-7,1,-7,1};{3,-7,-1,1,-3,-3};{-7,-5,-7,-3,5,1};{7,-3,-3,-3,7,3};{-7,7,-3,7,-7,-5};{-1,-3,-1,-5,7,-5};{-5,5,-7,5,5,5};{-7,-5,-7,3,5,3};{7,-7,1,-5,7,-3};{-3,-5,5,3,5,-5};{7,-5,-7,5,-5,-3};{3,-5,-7,-1,7,-5};{5,-7,-5,7,-3,-5};{3,-5,7,-1,-7,-5};{-1,-7,5,-3,-1,7};{-5,7,-7,-3,7,1};{3,7,-3,3,-3,-7}.
first sequence setincludes36groups of first sequence, the36groups of first sequencesatisfiesthe foregoing characteristic2inofcondition, the36groups of first sequenceofcross-correlationandCGSsequenceofcross-correlationno significant difference.the36groups of first sequenceandgroups of number *u* ofcorrespondence, This is not limited. For example, the36groups of first sequenceandgroups of numberuofcorrespondence, asTable7:

**Table 7**

| Group number*u* | First sequence |
|---|---|
| 0 | {-7,7,-7,-1,-7,7} |
| 1 | {5,-1,5,5,5,-3} |
| 2 | {-5,-5,-1,-1,-7,-5} |
| 3 | {-7,7,-3,-7,-7,-7} |
| 4 | { 1,5,1,-3,-3,7} |
| 5 | {5,5,-7,3,5,5} |
| 6 | {-7,3,-5,-7,-1,1} |
| 7 | {1,-7,5,-1,1,1} |
| 8 | {1,7,-1,-1,7,3} |
| 9 | {-3,7,-5,-5,-3,-7} |
| 10 | {-7,-1,-5,-3,3,-1} |
| 11 | {-3,7,-3,7,-1,-7} |
| 12 | {-1,-1,-1,7,-7,1} |
| 13 | {-1,-5,-7,-7,-5,-1} |
| 14 | {1,-1,5,5,-5,1} |
| 15 | {3,5,3,-7,3,-7} |
| 16 | {7,-5,-5,-7,7,3} |
| 17 | {-7,-5,1,-1,1,-5} |
| 18 | {5,1,1,5,-1,-3} |
| 19 | {5,-1,-7,1,-7,1} |
| 20 | {3,-7,-1,1,-3,-3} |
| 21 | {-7,-5,-7,-3,5,1} |
| 22 | {7,-3,-3,-3,7,3} |
| 23 | {-7,7,-3,7,-7,-5} |
| 24 | {-1,-3,-1,-5,7,-5} |
| 25 | {-5,5,-7,5,5,5} |
| 26 | {-7,-5,-7,3,5,3} |
| 27 | {7,-7,1,-5,7,-3} |
| 28 | {-3,-5,5,3,5,-5} |
| 29 | {7,-5,-7,5,-5,-3} |
| 30 | {3,-5,-7,-1,7,-5} |
| 31 | {5,-7,-5,7,-3,-5} |
| 32 | {3,-5,7,-1,-7,-5} |
| 33 | {-1,-7,5,-3,-1,7} |
| 34 | {-5,7,-7,-3,7,1} |
| 35 | {3,7,-3,3,-3,-7} |

According to the foregoing design, autocorrelation of the generated CPM sequence satisfies the foregoing characteristic 1, a PAPR value of the first signal is less than 0.5, and frequency-domain flatness of the first signal is less than 0.5.

In a possible implementation, when the modulation index $h = \frac{1}{4}$, the impulse length *L* = 3, the modulation dimension M = 8, and the phase response function *q(t)* are: $q \left(t\right) = \left\{\begin{matrix}0 , t < 0 \\ {\int }_{0}^{t} F \left(λ\right) dλ , 0 \leq t < LT \\ 0.42 , t \geq LT\end{matrix}\right.$ $F \left(t\right) = \left\{\begin{matrix}\frac{1}{LT} \left[0.42-0.5 cos\left(\frac{2 πt}{LT}\right)+0.08cos\left(\frac{4 πt}{LT}\right)\right] , & 0 \leq t < LT \\ 0 , & otherwise\end{matrix}\right.$
and a sampling rate *N =* 2 and a number of sampling blocks J = 6 are:
The first sequence {*βᵢ*} belongs to a first sequence set, and a sequence in the first sequence set set includes at least one of the following sequences: {3,3,-1,-7,-1,-7};{-3,5,5,5,-5,1};{-5,-7,-5,-7,-1,5};{1,-5,-7,-5,3,-5};{5,7,-1,5,-3,5};{1,5,-5,1,-3,-1};{-7,-7,-7,-3,-5,1};{7,-1,7,5,1,-1};{-7,3,-3,1,-1,-1};{-3,-5,3,-7,-1,-7};{3,3,3,-7,7,1};{-3,-7,-7,-5,-1,-7};{-5,5,-1,-1,7,5};{5,5,3,5,-1,-7};{1,-7,-7,-7,3,-1};{-7,1,5,-1,5,-3};{3,-3,3,-7,5,-1};{-7,-1,-5,-3,3,-5};{3,-7,-7,-7,3,5};{-1,7,-3,3,-3,7};{-7,1,-7,5,5,3};{-1,3,-3,-7,-5,3};{-1,-5,-1,5,-7,-1};{-3,5,5,5,-5,-7};{-1,-7,-3,-7,-3,1};{-5,1,-5,3,3,3};{-1,-7,3,3,-3,5};{-7,-5,3,-1,-5,5};{-5,-5,-5,5,5,-5};{-1,3,5,5,-7,5}.
first sequence setincludes30groups of first sequence, the30groups of first sequencepartially satisfiesthe foregoing characteristic2inofcondition, the30groups of first sequenceofcross-correlationandCGSsequenceofcross-correlationno significant difference.the30groups of first sequenceandgroups of number *u* ofcorrespondence, This is not limited. For example, the30groups of first sequenceandgroups of numberuofcorrespondence, asTable8:

**Table 8**

| Group number*u* | First sequence |
|---|---|
| 0 | {3,3,-1,-7,-1,-7} |
| 1 | {-3,5,5,5,-5,1} |
| 2 | {-5,-7,-5,-7,-1,5} |
| 3 | {1,-5,-7,-5,3,-5} |
| 4 | {5,7,-1,5,-3,5} |
| 5 | {1,5,-5,1,-3,-1} |
| 6 | {-7,-7,-7,-3,-5,1} |
| 7 | {7,-1,7,5,1,-1} |
| 8 | {-7,3,-3,1,-1,-1} |
| 9 | {-3,-5,3,-7,-1,-7} |
| 10 | {3,3,3,-7,7,1} |
| 11 | {-3,-7,-7,-5,-1,-7} |
| 12 | {-5,5,-1,-1,7,5} |
| 13 | {5,5,3,5,-1,-7} |
| 14 | {1,-7,-7,-7,3,-1} |
| 15 | {-7,1,5,-1,5,-3} |
| 16 | {3,-3,3,-7,5,-1} |
| 17 | {-7,-1,-5,-3,3,-5} |
| 18 | {3,-7,-7,-7,3,5} |
| 19 | {-1,7,-3,3,-3,7} |
| 20 | {-7,1,-7,5,5,3} |
| 21 | {-1,3,-3,-7,-5,3} |
| 22 | {-1,-5,-1,5,-7,-1} |
| 23 | {-3,5,5,5,-5,-7} |
| 24 | {-1,-7,-3,-7,-3,1} |
| 25 | {-5,1,-5,3,3,3} |
| 26 | {-1,-7,3,3,-3,5} |
| 27 | {-7,-5,3,-1,-5,5} |
| 28 | {-5,-5,-5,5,5,-5} |
| 29 | {-1,3,5,5,-7,5} |

According to the foregoing design, autocorrelation of the generated CPM sequence satisfies the foregoing characteristic 1, a PAPR value of the first signal is less than 0.5, and frequency-domain flatness of the first signal is less than 0.5.

In a possible implementation, when the modulation index $h = \frac{1}{4}$, the impulse length *L* = 3, the modulation dimension M = 8, and the phase response function *q(t)* are: $q \left(t\right) = \left\{\begin{matrix}0 , t < 0 \\ {\int }_{0}^{t} F \left(λ\right) dλ , 0 \leq t < LT \\ 0.5 , t \geq LT\end{matrix}\right.$ $F \left(t\right) = \frac{1}{2 T} \left[Q\left(\frac{\frac{t}{T} + \frac{1}{2}}{σ}\right)-Q\left(\frac{\frac{t}{T} - \frac{1}{2}}{σ}\right)\right]$ $Q \left(t\right) = {\int }_{t}^{∞} \frac{1}{\sqrt{2 π}} {e}^{- \frac{{x}^{2}}{2}} dx$ ${σ}^{2} = \frac{In 2}{4 {π}^{2} {\left(BT\right)}^{2}}$
and a bandwidth *B* = 0.3, a sampling rate *N* = 2, and a number of sampling blocks J = 6 are:
The first sequence {*βᵢ*} belongs to a first sequence set, and a sequence in the first sequence set set includes at least one of the following sequences: {-1,-5,3,-3,3,-5};{7,-1,7,-1,7,5};{-5,3,-7,-5,-3,-7};{-1,5,-5,5,-1,5};{-5,-1,-7,1,-7,3};{5,5,-1,3,-1,5};{1,-3,-1,1,5,5};{-3,-3,-5,-7,-5,-1};{1,-3,5,-1,1,-3};{-3,3,-3,-7,1,-7};{3,-5,3,5,5,5}; {3,3,-7 ,-5,-3,-7}; { -3,5,5,1,5,3}; { 1,-5,1,-5,5,-5}; {-3,-5,-3, 7 ,-3, 7}; { 1,-1,-5,-7,-5,1 }; { 1,-1,3,-3,5,3};{3,-7,1,-1,-7,-5};{-5,-5,5,5,5,3};{-7,5,-7,3,3,3};{-3,-3,-5,3,5,-5};{5,5,5,-7,7,-7};{3,-7,-1,-7,-3,-3};{1,5,-1,-1,-1,5};{-5,-1,3,-1,1,3};{-7,1,-5,-5,-5,5};{-1,-5,3,5,3,-5};{-3,5,-5,-5,-5,5};{-5,-5,-1,5,3,-5};{1,-7,3,3,-7,-1 }; {-1,-3,3,1,5,-5 }; {-5,-1,5,-7,5,-5 }; {3,3,-3,-7,-3,-3 }; {5,-7,5,-1,-5,-5 }; {5,-5,3,-1,-5,3 }; {-5,3,5,-1,1,-3 }; {3,-5,5,3,-5,-1}.
first sequence setincludes37groups of first sequence, the37groups of first sequencesatisfiesthe foregoing characteristic2inofcondition, the37groups of first sequenceofcross-correlationandCGSsequenceofcross-correlationno significant difference.the37groups of first sequenceandgroups of number *u* ofcorrespondence, This is not limited. For example, the37groups of first sequenceandgroups of numberuofcorrespondence, asTable9:

**Table 9**

| Group number*u* | First sequence |
|---|---|
| 0 | {-1,-5,3,-3,3,-5} |
| 1 | {7,-1,7,-1,7,5} |
| 2 | {-5,3,-7,-5,-3,-7} |
| 3 | {-1,5,-5,5,-1,5} |
| 4 | {-5,-1,-7,1,-7,3} |
| 5 | {5,5,-1,3,-1,5} |
| 6 | {1,-3,-1,1,5,5} |
| 7 | {-3,-3,-5,-7,-5,-1} |
| 8 | {1,-3,5,-1,1,-3} |
| 9 | {-3,3,-3,-7,1,-7} |
| 10 | {3,-5,3,5,5,5} |
| 11 | {3,3,-7,-5,-3,-7} |
| 12 | {-3,5,5,1,5,3} |
| 13 | {1,-5,1,-5,5,-5} |
| 14 | {-3,-5,-3,7,-3,7} |
| 15 | {1,-1,-5,-7,-5,1} |
| 16 | {1,-1,3,-3,5,3} |
| 17 | {3,-7,1,-1,-7,-5} |
| 18 | {-5,-5,5,5,5,3} |
| 19 | {-7,5,-7,3,3,3} |
| 20 | {-3,-3,-5,3,5,-5} |
| 21 | {5,5,5,-7,7,-7} |
| 22 | {3,-7,-1,-7,-3,-3} |
| 23 | {1,5,-1,-1,-1,5} |
| 24 | {-5,-1,3,-1,1,3} |
| 25 | {-7,1,-5,-5,-5,5} |
| 26 | {-1,-5,3,5,3,-5} |
| 27 | {-3,5,-5,-5,-5,5} |
| 28 | {-5,-5,-1,5,3,-5} |
| 29 | {1,-7,3,3,-7,-1} |
| 30 | {-1,-3,3,1,5,-5} |
| 31 | {-5,-1,5,-7,5,-5} |
| 32 | {3,3,-3,-7,-3,-3} |
| 33 | {5,-7,5,-1,-5,-5} |
| 34 | {5,-5,3,-1,-5,3} |
| 35 | {-5,3,5,-1,1,-3} |
| 36 | {3,-5,5,3,-5,-1} |

According to the foregoing design, autocorrelation of the generated CPM sequence satisfies the foregoing characteristic 1, a PAPR value of the first signal is less than 0.5, and frequency-domain flatness of the first signal is less than 0.5.

It may be understood that, in embodiments of this application:
1. The procedure in FIG. 2 may include fewer steps or more steps than those shown in the flowchart or described in the text.
2. In embodiments of this application, "(for example, a second communication apparatus) receives a signal from (for example, a first communication apparatus)" may be understood as follows: a source end of the signal is the first communication apparatus, and a destination end of the signal is the second communication apparatus. This may include that the second communication apparatus directly or indirectly receives the signal from the first communication apparatus. Necessary processing, for example, a format change, may be performed on the signal between the source end and the destination end of information sending, but the destination end can understand valid information from the source end. Similar descriptions in this application may be understood similarly, and details are not described again.

In the foregoing embodiments provided in this application, the method provided in embodiments of this application is described from the perspective of interaction between the first communication apparatus and the second communication apparatus. To implement functions in the method provided in embodiments of this application, the first communication apparatus, the second communication apparatus, or the like may include a hardware structure and/or a software module, and implement the foregoing functions in a form of a hardware structure, a software module, or a hardware structure plus a software module. Whether a function in the foregoing functions is executed by using a hardware structure, a software module, or a hardware structure plus a software module depends on design constraints of a specific application of the technical solution.

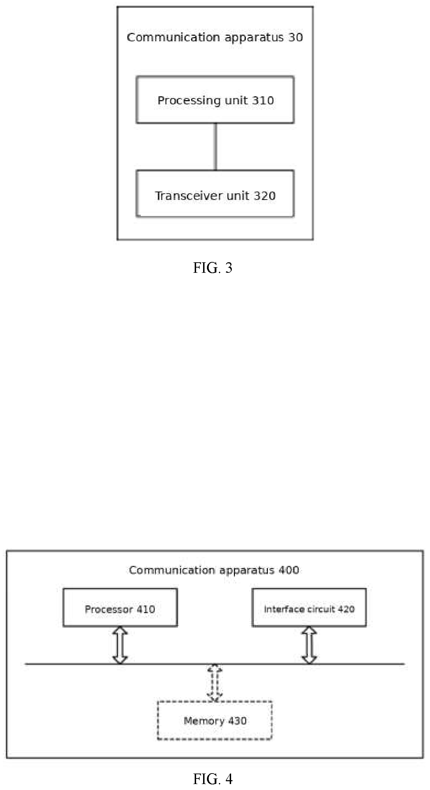

FIG. 3 and FIG. 4 are schematic structural diagrams of possible communication apparatuses according to embodiments of this application. These communication apparatuses can implement one or more corresponding functions in the foregoing method embodiments. For example, functions implemented by the first communication apparatus or the second communication apparatus may be implemented, and therefore, beneficial effects of the foregoing method embodiments may be achieved.

As shown in FIG. 3, a communication apparatus 30 includes a processing unit 310 and a transceiver unit 320. The communication apparatus 30 is configured to implement functions of the first communication apparatus or the second communication apparatus in the method embodiment shown in FIG. 2.

Optionally, the transceiver unit 320 may also be referred to as an output unit, an interface unit, a communication unit, or the like. In a possible implementation, the transceiver unit 320 includes at least one of a sending unit or a receiving unit. The sending unit and the receiving unit may be integrated together, or may be two independent units, or the like.

When the communication apparatus 30 is configured to implement the function of the first communication apparatus in FIG. 2, specifically:
processing unit3 10, configured to determining a fourth sequence based on a third sequence, where the third sequence issecond sequencediscrete Fourier transformDFTofsequence, where the second sequence isfirst sequenceperformcontinuous phase modulationCPM modulation and samplingofdiscretesequence;processing unit3 10, configured to mapping the fourth sequence to X subcarriers to generate a first signal, Xisinteger greater than zero;transceiver unit320, configured to sending the first signal, where the first signal iscarryhybrid automatic repeat requestHARQinformationofsignal, or, where the first signal iscarryscheduling requestSRinformationofsignal, or, where the first signal isdemodulation reference signal, or, where the first signal isphase tracking reference signal.

In a possible implementation, the second sequence {*sₙ*} includesXelement, *sₙ* satisfies: ${s}_{n} = exp \left(j∗{φ}_{n}\right) ;$
where n is an integer from 0 to X-1, exp represents an exponential function with e as the ba se, $j = \sqrt{- 1}$, and *φₙ* represents a phase of the second sequence, and *φₙ* satisfies: ${φ}_{n} = 2 ∗ π ∗ h ∗ {\sum }_{i = 0}^{\left⌊n/N\right⌋} {β}_{i} q \left(\left(n/N-i\right)T\right) ,$ or , ${φ}_{n} = 2 ∗ π ∗ h ∗ {\sum }_{i = 0}^{\left⌊n/N\right⌋} {β}_{i} q \left(\left(n/N-i\right)T\right) + 2 ∗ π ∗ h ∗ {\sum }_{i = 0}^{L - 2} {β}_{J - i - 1} q \left(\left(n/N+i+1\right)T\right) ;$
where *φₙ* is taken modulo 2 * π, or *φₙ* is not taken modulo 2 * π, *h* represents a modulatio n index, *L* represents an impulse length, *N* represents a sampling rate, *J* represents a number of sampling blocks, *h, L, N,* and J all have real number values, *T* represents a symbol period, *q(t)* represents a pha se response function, *βᵢ* represents an element in the first sequence {*βᵢ*} element, and i is an integer fro m 0 to*J* - 1.

In a possible implementation, in the CPM modulation and sampling process: a value range of the modulation index h is real numbers from 11/64 to 11/32, a value range of the impulse length L is L > 1, a phase response functionq(t), t < 0 is a phase response function, the phase response function take s a value of 0 in the range *t* ≥ *LT* and a fixed value in the range N, and the sampling rate J and the nu mber of sampling blocks NJ = X satisfy: .

In a possible implementation, when the modulation index $h = \frac{1}{4}$, impulse lengthL = 3, modulation dimensionM = 8, the phase response functionq(t)is: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$
and a sampling rate *N =* 2 and a number of sampling blocks J = 6 are:
the first sequence {*βᵢ*} belongs to a first sequence set, and a sequence in the first sequence set set includes at least one of the following sequences: {-1,1,5,3,-1,-7};{-3,-1,1,5,-5,1};{-7,-5,-1,-3,-3,-5};{3,-1,3,5,5,1};{-7,-7,-7,-5,5,-3};{-1,-1,-1,-7,-3,-3};{5,5,3,-5,3,5};{-7,7,-3,7,-3,7};{-5,-5,-3,-7,-3,7};{-5,3,-7,1,-5,5 }; {-5,-7,-3,-5,-7,3 }; {5,3,3,3,-7,1 }; {-1,1,5,3,-3,3 }; {-3,-3,-7,5,-5,-3 }; {3,5,5,5,-5,-5 }; {-1,3,-3,-7,-3,3 }; {7,-1,-1,-1,7,-3};{5,-7,7,-7,5,5};{-7,-5,5,-7,3,-5};{-5,1,-3,-5,7,-3};{7,-3,7,-3,-7,-1};{-5,3,-1,-5,7,1};{-7,-5,-7,1,-1,3};{3,-7,3,5,3,-7};{5,-3,-5,-1,-7,3};{-1,1,1,3,-7,3};{-3,-7,3,-1,-3,3};{5,-3,7,-3,-3,-3};{3,-5,-5,-5,-1,5};{-7,-1,-5, 1,-1,5}; {7,-1,-3, 7,-5,-5}; {-5,-1, 1,-7,-3, 7}; {-5,-3, 7,1,-1,1}.

In a possible implementation, when the modulation index $h = \frac{3}{16}$, impulse length *L* = 3, modulation dimension*M* = 8, the phase response functionq(t)is: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$
and a sampling rate *N =* 2 and a number of sampling blocks J = 6 are:
the first sequence {*βᵢ*} belongs to a first sequence set, and a sequence in the first sequence set set includes at least one of the following sequences: {-1,-3,5,-1,7,-7};{7,3,5,7,-5,5};{-3,-5,-5,-7,5,-7};{-7,-7,-7,3,3,-7}; {7, 7, 7,-1,-5, 7}; {-7,-3,-1,-7,3,-7}; {-I, 7,-1,3,-3, 7}; {3,-5,-7,3,-3,-3}; {7,5,-3, 7, 1,5}; {7, 7,5,-7,-7, 7}; {-3,-1,3,3,-5,1};{-7,5,5,3,7,-3};{3,-7,-7,-7,1,-5};{-3,-7,1,7,-3,-5};{5,7,1,-3,7,-5};{-1,-5,7,-7,-1,-5};{-7,-7,-7,7,-3,7};{7,1,-7,-7,-7,3};{-1,-3,3,7,7,-3};{7,5,-7,-3,-7,5};{7,-5,-7,-1,7,-1};{-1,-7,5,-1,-1,5};{-5,1,-7,3,7,1};{-3,-7,5,-3,5,-7}; {3,5,-3, 7,5,-7}; {-3,-5,5,-7,3, 7}; {-7, 1,5,-5,-7,3}; {3,-5, 7,-5,-7, 7}; {-7, 7,-1,-5, 1,-7}; {7,-7,-5, 1, 1,5}.

In a possible implementation, when the modulation index $h = \frac{11}{32}$, impulse length *L* = 3, modulation dimensionM = 8, the phase response functionq(t)is: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$
and a sampling rate *N =* 2 and a number of sampling blocks J = 6 are:
the first sequence {*βᵢ*} belongs to a first sequence set, and a sequence in the first sequence set set includes at least one of the following sequences: {-5,1,3,3,3,1};{-3,-5,-5,-5,-3,-3};{-1,3,-3,1,-3,3};{-3,-1,-1,-3,1,-5 }; {3,5,-1,1,-1,5 }; {3,-1,-1,1,3,1 }; {-1,-5,-3,-5,-1,-3 }; {-3,-5,-5,-5,-3,3 }; {3,1,5,-3,3,3 }; {-3,-5,-1,-5,-3,5};{1,-5,1,-3,3,-3};{5,-1,-5,-1,5,3};{-1,3,1,3,-1,-5};{-1,-3,-3,-1,1,-5};{3,-3,3,-1,1,3};{-5,-3,-1,1,-1,-3};{5,-7,3,-7,5,-5};{-1,-3,-3,1,5,-5};{1,-5,3,-5,3,3};{-5,5,-3,5,-5,-3};{1,-1,5,-5,3,3};{3,3,3,-1,-5,-3};{-1,-5,3,-5,-1,3};{1,-5,1,3,-3,3};{-1,-5,-1,3,-5,3};{-3,-5,-3,5,-7,1};{-1,5,-3,-1,-3,3};{-3,5,1,-1,-5,-3};{-1,-5,-3,5,-3,1};{-3,5,-1,-5,-3,1};{1,1,-5,1,5,-3};{5,1,-5,1,1,-3};{5,-1,-5,-1,1,-5};{-5,3,-1,3,-7,1}.

In a possible implementation, when the modulation index $h = \frac{3}{16}$, impulse length *L* = 2, modulation dimensionM = 8, the phase response functionq(t)is: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$
and a sampling rate *N =* 2 and a number of sampling blocks J = 6 are:
the first sequence {*βᵢ*} belongs to a first sequence set, and a sequence in the first sequence set set includes at least one of the following sequences: {1,5,5,-5,-1,-5};{3,-7,-7,-1,3,-1};{7,7,5,-3,5,1};{-7,-7,-1,-3,-7,-7};{7,7,1,7,1,-5};{-7,-3,-5,1,-5,-3};{1,3,-1,-3,1,1};{7,7,5,3,-5,5};{-1,-7,1,-1,1,-5};{3,-7,-7,-5,-7,3};{-3,3,1,5,1,3};{-3,-7,-7,1,-5,-1};{7,7,5,-5,-7,5};{5,5,-5,-3,5,3};{-3,1,-3,5,7,3};{-7,-1,-7,-1,5,-1};{3,-3,5,5,1,-1 }; {-3,-3,-3,-1,-5,5 }; {-7,-7,-5,1,-1,-3 }; {5,-5,-7,-7,3,1 }; {-5,-1,-7,-7,3,-5 }; {5,3,5,-1,-1,1 }; {-7,-7,1,5,7,-1 }; {5,-5,-3,-1,5,-1};{3,-3,-1,3,-7,-5};{-7,-3,-5,-3,3,-7};{3,-5,-1,3,1,-1};{-7,-5,-5,5,5,-5};{5,-5,-1,-7,-7,5};{-3,-1,1,3,-7,-3}.

In a possible implementation, when the modulation index $h = \frac{11}{64}$, impulse lengthL = 2, modulation dimensionM = 8, the phase response functionq(t)is: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$
and a sampling rate *N =* 2 and a number of sampling blocks J = 6 are:
the first sequence {*βᵢ*} belongs to a first sequence set, and a sequence in the first sequence set set includes at least one of the following sequences: {3,-1,-7,-1,-3,-1};{7,7,7,7,7,1};{-7,-7,-5,5,-1,3};{3,3,-3,1,3,5};{-5,-3,-7,-7,1,-1};{-7,5,5,5,7,-5};{-1,-1,-1,5,-1,-3};{-5,5,7,7,7,1};{-7,-5,-3,-7,5,-7};{1,7,7,1,5,3};{5,-7,-7,-7,-7,1}; {-1,-1,-7,-1,-1,-3}; {7, 7,1,1,1, 7}; {5,5,-5,-7,-3,-7}; {7, 1,7, 7,-3,5}; {1,-7,-7,-7,-1,-3}; {-3,-3,-1,3,-1,5};{-7,3,3,3,3,-7};{-7,-1,-7,5,5,5};{3,-3,5,7,-1,-1};{-7,3,-3,3,-7,-1};{5,7,5,-3,1,-3};{5,-5,-1,-7,-7,5};{-1,-1,-7,-1,5,-7};{1,-3,5,-7,-7,1};{7,7,1,5,-5,-3};{5,1,5,-7,-1,-1};{-7,5,7,5,-3,-7};{5,-7,-1,5,-1,-1};{5,5,-7,-1,-1,1};{-1,-7,5,5,-1,-3};{-1,5,-5,-5,-5,1}.

In a possible implementation, when the modulation index $h = \frac{11}{32}$, impulse lengthL = 4, modulation dimensionM = 8, the phasenumberq(t)is: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$
and a sampling rate *N =* 2 and a number of sampling blocks J = 6 are:
the first sequence {*βᵢ*} belongs to a first sequence set, and a sequence in the first sequence set set includes at least one of the following sequences: {-7,3,1,-5,5,3}; {-3,-7,-3,-7,1,-5};{1,7,1,7,-3,5}; {1,-7,-1,-3,-1,-1};{3,-5,5,3,-1,1};{-3,-3,-3,-7,5,-7};{1,1,5,3,-3,5};{1,-1,-5,1,5,-7};{7,1,-7,3,7,1};{-3,-5,-5,-5,-1,1};{5,-1,5,-3,3,3};{-7,-1,-3,-7,7,-1};{-5,-3,3,-3,1,1};{3,1,5,-1,-5,3};{1,3,-3,5,-3,-3};{-3,1,-7,-1,3,-5};{5,3,1,-3,3,3};{-5,-3,-3,7,-3,-5};{1,7,-3,-5,1,-7};{-1,-3,5,-1,1,5};{-1,-7,3,3,5,3};{7,-3,-7,1,5,-3};{-7,3,-1,1,-5,-3};{3,3,-7,3,-5,3};{7,-7,-3,-3,5,-5};{5,-1,-5,-5,5,1};{-5,-3,1,7,-3,-3};{5,3,-7,7,-5,-3};{-7,-3,3,-7,7,1};{7,-7,3,-3,-7,1}.

In a possible implementation, when the modulation index $h = \frac{1}{4}$, impulse length *L* = 3, modulation dimensionM = 8, the phase response functionq(t)is: $q \left(t\right) = \left\{\begin{matrix}0 , t < 0 \\ {\int }_{0}^{t} F \left(λ\right) dλ , 0 \leq t < LT \\ 0.54 , t \geq LT\end{matrix}\right.$ $F \left(t\right) = \left\{\begin{matrix}\frac{1}{LT} \left[0.54-0.46 cos\left(\frac{2 πt}{LT}\right)\right] , & 0 \leq t < LT \\ 0 , & otherwise\end{matrix}\right.$
and a sampling rate *N =* 2 and a number of sampling blocks J = 6 are:
the first sequence {*βᵢ*} belongs to a first sequence set, and a sequence in the first sequence set set includes at least one of the following sequences: {-7,7,-7,-1,-7,7};{5,-1,5,5,5,-3};{-5,-5,-1,-1,-7,-5};{-7,7,-3,-7,-7,-7};{1,5,1,-3,-3,7};{5,5,-7,3,5,5};{-7,3,-5,-7,-1,1};{1,-7,5,-1,1,1};{1,7,-1,-1,7,3};{-3,7,-5,-5,-3,-7};{-7,-1,-5,-3,3,-1};{-3,7,-3,7,-1,-7};{-1,-1,-1,7,-7,1};{-1,-5,-7,-7,-5,-1};{1,-1,5,5,-5,1};{3,5,3,-7,3,-7};{7,-5,-5,-7,7,3};{-7,-5,1,-1,1,-5};{5,1,1,5,-1,-3};{5,-1,-7,1,-7,1};{3,-7,-1,1,-3,-3};{-7,-5,-7,-3,5,1};{7,-3,-3,-3,7,3};{-7,7,-3,7,-7,-5};{-1,-3,-1,-5,7,-5};{-5,5,-7,5,5,5};{-7,-5,-7,3,5,3};{7,-7,1,-5,7,-3};{-3,-5,5,3,5,-5};{7,-5,-7,5,-5,-3}; {3,-5,-7,-1, 7,-5}; {5,-7,-5, 7,-3,-5}; {3,-5, 7,-1,-7,-5}; {-I ,-7,5,-3,-1, 7}; {-5, 7,-7,-3, 7,1}; {3, 7,-3,3,-3,-7}.

In a possible implementation, when the modulation index $h = \frac{1}{4}$, impulse length *L* = 3, modulation dimensionM = 8, the phase response functionq(t)is: $q \left(t\right) = \left\{\begin{matrix}0 , t < 0 \\ {\int }_{0}^{t} F \left(λ\right) dλ , 0 \leq t < LT \\ 0.42 , t \geq LT\end{matrix}\right.$ $F \left(t\right) = \left\{\begin{matrix}\frac{1}{LT} \left[0.42-0.5 cos\left(\frac{2 πt}{LT}\right)+0.08cos\left(\frac{4 πt}{LT}\right)\right] , & 0 \leq t < LT \\ 0 , & otherwise\end{matrix}\right.$
and a sampling rate *N =* 2 and a number of sampling blocks J = 6 are:
the first sequence {*βᵢ*} belongs to a first sequence set, and a sequence in the first sequence set set includes at least one of the following sequences: {3,3,-1,-7,-1,-7};{-3,5,5,5,-5,1};{-5,-7,-5,-7,-1,5};{1,-5,-7,-5,3,-5 }; {5,7,-1,5,-3,5 }; { 1,5,-5,1,-3,-1 }; {-7,-7,-7,-3,-5,1 }; {7,-1,7,5,1,-1 }; {-7,3,-3,1,-1,-1 }; {-3,-5,3,-7,-1,-7};{3,3,3,-7,7,1};{-3,-7,-7,-5,-1,-7};{-5,5,-1,-1,7,5};{5,5,3,5,-1,-7};{1,-7,-7,-7,3,-1};{-7,1,5,-1,5,-3};{3,-3,3,-7,5,-1};{-7,-1,-5,-3,3,-5};{3,-7,-7,-7,3,5};{-1,7,-3,3,-3,7};{-7,1,-7,5,5,3};{-1,3,-3,-7,-5,3};{-1,-5,-1,5,-7,-1};{-3,5,5,5,-5,-7};{-1,-7,-3,-7,-3,1};{-5,1,-5,3,3,3};{-1,-7,3,3,-3,5};{-7,-5,3,-1,-5,5};{-5,-5,-5,5,5,-5};{-1,3,5,5,-7,5}.

In a possible implementation, when the modulation index $h = \frac{1}{4}$, impulse length *L* = 3, modulation dimensionM = 8, the phase response functionq(t)is: $q \left(t\right) = \left\{\begin{matrix}0 , t < 0 \\ {\int }_{0}^{t} F \left(λ\right) dλ , 0 \leq t < LT \\ 0.5 , t \geq LT\end{matrix}\right.$ $F \left(t\right) = \frac{1}{2 T} \left[Q\left(\frac{\frac{t}{T} + \frac{1}{2}}{σ}\right)-Q\left(\frac{\frac{t}{T} - \frac{1}{2}}{σ}\right)\right]$ $Q \left(t\right) = {\int }_{t}^{∞} \frac{1}{\sqrt{2 π}} {e}^{- \frac{{x}^{2}}{2}} dx$ ${σ}^{2} = \frac{In 2}{4 {π}^{2} {\left(BT\right)}^{2}}$
and a bandwidth *B* = 0.3, a sampling rate *N* = 2, and a number of sampling blocks J = 6 are:
the first sequence {*βᵢ*} belongs to a first sequence set, and a sequence in the first sequence set set includes at least one of the following sequences: {-1,-5,3,-3,3,-5};{7,-1,7,-1,7,5};{-5,3,-7,-5,-3,-7};{-1,5,-5,5,-1,5};{-5,-1,-7,1,-7,3};{5,5,-1,3,-1,5};{1,-3,-1,1,5,5};{-3,-3,-5,-7,-5,-1};{1,-3,5,-1,1,-3};{-3,3,-3,-7,1,-7};{3,-5,3,5,5,5}; {3,3,-7 ,-5,-3,-7}; { -3,5,5,1,5,3}; { 1,-5,1,-5,5,-5}; {-3,-5,-3, 7 ,-3, 7}; { 1,-1,-5,-7,-5,1 }; { 1,-1,3,-3,5,3};{3,-7,1,-1,-7,-5};{-5,-5,5,5,5,3};{-7,5,-7,3,3,3};{-3,-3,-5,3,5,-5};{5,5,5,-7,7,-7};{3,-7,-1,-7,-3,-3};{1,5,-1,-1,-1,5};{-5,-1,3,-1,1,3};{-7,1,-5,-5,-5,5};{-1,-5,3,5,3,-5};{-3,5,-5,-5,-5,5};{-5,-5,-1,5,3,-5};{1,-7,3,3,-7,-1 }; {-1,-3,3,1,5,-5 }; {-5,-1,5,-7,5,-5 }; {3,3,-3,-7,-3,-3 }; {5,-7,5,-1,-5,-5 }; {5,-5,3,-1,-5,3 }; {-5,3,5,-1,1,-3 }; {3,-5,5,3,-5,-1}.

In a possible implementation, the fourth sequence includesXelement, the processing unit 310 the fourth sequencemaptoXsubcarrieron, configured to:mapping the X elements to X consecutive subcarriers respectively;or, mapping the X elements to X non-consecutive and equally spaced subcarriers respectively.

When the communication apparatus 30 is configured to implement the function of the second communication apparatus in the procedure in FIG. 2, specifically:
transceiver unit320, configured to receiving a first signal, where the first signal iscarryhybrid automatic repeat requestHARQinformationofsignal, or, where the first signal iscarryscheduling requestSRinformationofsignal, or, where the first signal isdemodulation reference signal, or, where the first signal isphase tracking reference signal;processing unit 310, configured to performing orthogonal frequency division multiplexing OFDM demodulation on the first signal, to determine a fourth sequence;processing unit 310, configured to determining a first result based on the fourth sequence and the third sequence, where the first result isdecoding result, orwhere the first result ischannel estimation result, where the third sequence issecond sequencediscrete Fourier transformDFTofsequence, where the second sequence isfirst sequenceperformcontinuous phase modulationCPM modulation and samplingofdiscretesequence.

In a possible implementation, the second sequence {*sₙ*} includes Xelement, *sₙ* satisfies: ${s}_{n} = exp \left(j∗{φ}_{n}\right) ;$
where n is an integer from 0 to X-1, X is an integer greater than zero, exp represents an ex ponential function with e as the base, $j = \sqrt{- 1}$, and *φₙ* represents a phase of the second sequence, and *φₙ* satisfies: ${φ}_{n} = 2 ∗ π ∗ h ∗ {\sum }_{i = 0}^{\left⌊n/N\right⌋} {β}_{i} q \left(\left(n/N-i\right)T\right) ,$ or , ${φ}_{n} = 2 ∗ π ∗ h ∗ {\sum }_{i = 0}^{\left⌊n/N\right⌋} {β}_{i} q \left(\left(n/N-i\right)T\right) + 2 ∗ π ∗ h ∗ {\sum }_{i = 0}^{L - 2} {β}_{J - i - 1} q \left(\left(n/N+i+1\right)T\right) ;$
where *φₙ* is taken modulo 2 * π, or is not taken modulo 2 * π, *h* represents a modulation in dex, *L* represents an impulse length, *N* represents a sampling rate, *J* represents a number of sampling blo cks, *h, L, N,* and J all have real number values, *T* represents a symbol period, *q(t)* represents a phase r esponse function, *βᵢ* represents an element in the first sequence {*βᵢ*}, and *i* is an integer from 0 to *J* - 1.

In a possible implementation, in the CPM modulation and sampling process: a value range of the modulation index h is real numbers from 11/64 to 11/32, a value range of the impulse length L is q (t), t < 0 is a phase response function, the phase response function takes a value of 0 in the range t ≥ *LT* and a fixed value in the range *N,* and the sampling rate J and the number of sampling blocks *NJ =* X satisfy: .

In a possible implementation, when the modulation index $h = \frac{1}{4}$, impulse length *L* = 3, modulation dimensionM = 8, the phase response functionq(t)is: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$
and a sampling rate *N =* 2 and a number of sampling blocks J = 6 are:
the first sequence {*βᵢ*} belongs to a first sequence set, and a sequence in the first sequence set set includes at least one of the following sequences: {-1,1,5,3,-1,-7};{-3,-1,1,5,-5,1};{-7,-5,-1,-3,-3,-5};{3,-1,3,5,5,1};{-7,-7,-7,-5,5,-3};{-1,-1,-1,-7,-3,-3};{5,5,3,-5,3,5};{-7,7,-3,7,-3,7};{-5,-5,-3,-7,-3,7};{-5,3,-7,1,-5,5 }; {-5,-7,-3,-5,-7,3 }; {5,3,3,3,-7,1 }; {-1,1,5,3,-3,3 }; {-3,-3,-7,5,-5,-3 }; {3,5,5,5,-5,-5 }; {-1,3,-3,-7,-3,3 }; {7,-1,-1,-1,7,-3};{5,-7,7,-7,5,5};{-7,-5,5,-7,3,-5};{-5,1,-3,-5,7,-3};{7,-3,7,-3,-7,-1};{-5,3,-1,-5,7,1};{-7,-5,-7,1,-1,3};{3,-7,3,5,3,-7};{5,-3,-5,-1,-7,3};{-1,1,1,3,-7,3};{-3,-7,3,-1,-3,3};{5,-3,7,-3,-3,-3};{3,-5,-5,-5,-1,5};{-7,-1,-5, 1,-1,5}; {7,-1,-3, 7,-5,-5}; {-5,-1, 1,-7,-3, 7}; {-5,-3, 7,1,-1,1}.

In a possible implementation, when the modulation index $h = \frac{3}{16}$, impulse length *L* = 3, modulation dimensionM = 8, the phase response functionq(t)is: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$
and a sampling rate *N =* 2 and a number of sampling blocks J = 6 are:
the first sequence {*βᵢ*} belongs to a first sequence set, and a sequence in the first sequence set set includes at least one of the following sequences: {-1,-3,5,-1,7,-7};{7,3,5,7,-5,5};{-3,-5,-5,-7,5,-7};{-7,-7,-7,3,3,-7}; {7, 7, 7,-1,-5, 7}; {-7,-3,-1,-7,3,-7}; {-I, 7,-1,3,-3, 7}; {3,-5,-7,3,-3,-3}; {7,5,-3, 7, 1,5}; {7, 7,5,-7,-7, 7}; {-3,-1,3,3,-5,1};{-7,5,5,3,7,-3};{3,-7,-7,-7,1,-5};{-3,-7,1,7,-3,-5};{5,7,1,-3,7,-5};{-1,-5,7,-7,-1,-5};{-7,-7,-7,7,-3,7};{7,1,-7,-7,-7,3};{-1,-3,3,7,7,-3};{7,5,-7,-3,-7,5};{7,-5,-7,-1,7,-1};{-1,-7,5,-1,-1,5};{-5,1,-7,3,7,1};{-3,-7,5,-3,5,-7}; {3,5,-3, 7,5,-7}; {-3,-5,5,-7,3, 7}; {-7, 1,5,-5,-7,3}; {3,-5, 7,-5,-7, 7}; {-7, 7,-1,-5, 1,-7}; {7,-7,-5, 1, 1,5}.

In a possible implementation, when the modulation index $h = \frac{11}{32}$, impulse length *L* = 3, modulation dimensionM = 8, the phase response functionq(t)is: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$
and a sampling rate *N =* 2 and a number of sampling blocks J = 6 are:
the first sequence {*βᵢ*} belongs to a first sequence set, and a sequence in the first sequence set set includes at least one of the following sequences: {-5,1,3,3,3,1};{-3,-5,-5,-5,-3,-3};{-1,3,-3,1,-3,3};{-3,-1,-1,-3,1,-5 }; {3,5,-1,1,-1,5 }; {3,-1,-1,1,3,1 }; {-1,-5,-3,-5,-1,-3 }; {-3,-5,-5,-5,-3,3 }; {3,1,5,-3,3,3 }; {-3,-5,-1,-5,-3,5};{1,-5,1,-3,3,-3};{5,-1,-5,-1,5,3};{-1,3,1,3,-1,-5};{-1,-3,-3,-1,1,-5};{3,-3,3,-1,1,3};{-5,-3,-1,1,-1,-3};{5,-7,3,-7,5,-5};{-1,-3,-3,1,5,-5};{1,-5,3,-5,3,3};{-5,5,-3,5,-5,-3};{1,-1,5,-5,3,3};{3,3,3,-1,-5,-3};{-1,-5,3,-5,-1,3};{1,-5,1,3,-3,3};{-1,-5,-1,3,-5,3};{-3,-5,-3,5,-7,1};{-1,5,-3,-1,-3,3};{-3,5,1,-1,-5,-3};{-1,-5,-3,5,-3,1};{-3,5,-1,-5,-3,1};{1,1,-5,1,5,-3};{5,1,-5,1,1,-3};{5,-1,-5,-1,1,-5};{-5,3,-1,3,-7,1}.

In a possible implementation, when the modulation index $h = \frac{3}{16}$, impulse length *L* = 2, modulation dimensionM = 8, the phase response functionq(t)is: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$
and a sampling rate *N =* 2 and a number of sampling blocks J = 6 are:
the first sequence {*βᵢ*} belongs to a first sequence set, and a sequence in the first sequence set set includes at least one of the following sequences: {1,5,5,-5,-1,-5};{3,-7,-7,-1,3,-1};{7,7,5,-3,5,1};{-7,-7,-1,-3,-7,-7};{7,7,1,7,1,-5};{-7,-3,-5,1,-5,-3};{1,3,-1,-3,1,1};{7,7,5,3,-5,5};{-1,-7,1,-1,1,-5};{3,-7,-7,-5,-7,3};{-3,3,1,5,1,3}; {-3,-7 ,-7,1,-5,-1 }; {7, 7 ,5,-5,-7,5}; {5,5,-5,-3,5,3}; {-3, 1 ,-3,5,7,3}; {-7 ,-1,-7,-1,5,-1 }; {3,-3,5,5, 1,-1 }; {-3,-3,-3,-1,-5,5 }; {-7,-7,-5,1,-1,-3 }; {5,-5,-7,-7,3,1 }; {-5,-1,-7,-7,3,-5 }; {5,3,5,-1,-1,1 }; {-7,-7,1,5,7,-1 }; {5,-5,-3,-1,5,-1};{3,-3,-1,3,-7,-5};{-7,-3,-5,-3,3,-7};{3,-5,-1,3,1,-1};{-7,-5,-5,5,5,-5};{5,-5,-1,-7,-7,5};{-3,-1,1,3,-7,-3}.

In a possible implementation, when the modulation index $h = \frac{11}{64}$, impulse length *L* = 2, modulation dimensionM = 8, the phase response functionq(t)is: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$
and a sampling rate *N =* 2 and a number of sampling blocks J = 6 are:
the first sequence {*βᵢ*} belongs to a first sequence set, and a sequence in the first sequence set set includes at least one of the following sequences: {3,-1,-7,-1,-3,-1};{7,7,7,7,7,1};{-7,-7,-5,5,-1,3};{3,3,-3,1,3,5};{-5,-3,-7,-7,1,-1};{-7,5,5,5,7,-5};{-1,-1,-1,5,-1,-3};{-5,5,7,7,7,1};{-7,-5,-3,-7,5,-7};{1,7,7,1,5,3};{5,-7,-7,-7,-7,1}; {-1,-1,-7,-1,-1,-3}; {7, 7,1,1,1, 7}; {5,5,-5,-7,-3,-7}; {7, 1,7, 7,-3,5}; {1,-7,-7,-7,-1,-3}; {-3,-3,-1,3,-1,5};{-7,3,3,3,3,-7};{-7,-1,-7,5,5,5};{3,-3,5,7,-1,-1};{-7,3,-3,3,-7,-1};{5,7,5,-3,1,-3};{5,-5,-1,-7,-7,5};{-1,-1,-7,-1,5,-7};{1,-3,5,-7,-7,1};{7,7,1,5,-5,-3};{5,1,5,-7,-1,-1};{-7,5,7,5,-3,-7};{5,-7,-1,5,-1,-1};{5,5,-7,-1,-1,1};{-1,-7,5,5,-1,-3};{-1,5,-5,-5,-5,1}.

In a possible implementation, when the modulation index $h = \frac{11}{32}$, impulse lengthL = 4, modulation dimensionM = 8, the phase response functionq(t)is: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$
and a sampling rate N *=* 2 and a number of sampling blocks J = 6 are:
the first sequence {*βᵢ*} belongs to a first sequence set, and a sequence in the first sequence set set includes at least one of the following sequences: {-7,3,1,-5,5,3}; {-3,-7,-3,-7,1,-5};{1,7,1,7,-3,5}; {1,-7,-1,-3,-1,-1};{3,-5,5,3,-1,1};{-3,-3,-3,-7,5,-7};{1,1,5,3,-3,5};{1,-1,-5,1,5,-7};{7,1,-7,3,7,1};{-3,-5,-5,-5,-1,1};{5,-1,5,-3,3,3};{-7,-1,-3,-7,7,-1};{-5,-3,3,-3,1,1};{3,1,5,-1,-5,3};{1,3,-3,5,-3,-3};{-3,1,-7,-1,3,-5};{5,3,1,-3,3,3};{-5,-3,-3,7,-3,-5};{1,7,-3,-5,1,-7};{-1,-3,5,-1,1,5};{-1,-7,3,3,5,3};{7,-3,-7,1,5,-3};{-7,3,-1,1,-5,-3};{3,3,-7,3,-5,3};{7,-7,-3,-3,5,-5};{5,-1,-5,-5,5,1};{-5,-3,1,7,-3,-3};{5,3,-7,7,-5,-3};{-7,-3,3,-7,7,1};{7,-7,3,-3,-7,1}.

In a possible implementation, when the modulation index $h = \frac{1}{4}$, impulse length *L* = 3, modulation dimensionM = 8, the phase response functionq(t)is: $q \left(t\right) = \left\{\begin{matrix}0 , t < 0 \\ {\int }_{0}^{t} F \left(λ\right) dλ , 0 \leq t < LT \\ 0.54 , t \geq LT\end{matrix}\right.$ $F \left(t\right) = \left\{\begin{matrix}\frac{1}{LT} \left[0.54-0.46 cos\left(\frac{2 πt}{LT}\right)\right] , & 0 \leq t < LT \\ 0 , & otherwise\end{matrix}\right.$
and a sampling rate *N =* 2 and a number of sampling blocks J = 6 are:
the first sequence {*βᵢ*} belongs to a first sequence set, and a sequence in the first sequence set set includes at least one of the following sequences: {-7,7,-7,-1,-7,7};{5,-1,5,5,5,-3};{-5,-5,-1,-1,-7,-5};{-7,7,-3,-7,-7,-7};{1,5,1,-3,-3,7};{5,5,-7,3,5,5};{-7,3,-5,-7,-1,1};{1,-7,5,-1,1,1};{1,7,-1,-1,7,3};{-3,7,-5,-5,-3,-7};{-7,-1,-5,-3,3,-1};{-3,7,-3,7,-1,-7};{-1,-1,-1,7,-7,1};{-1,-5,-7,-7,-5,-1};{1,-1,5,5,-5,1};{3,5,3,-7,3,-7};{7,-5,-5,-7,7,3}; {-7,-5, 1,-1, 1,-5}; {5, 1, 1,5,-1,-3}; {5,-1,-7, 1,-7, I}; {3,-7,-1, 1,-3,-3}; {-7,-5,-7,-3,5, I}; {7,-3,-3,-3, 7,3}; {-7,7,-3,7,-7,-5};{-1,-3,-1,-5,7,-5};{-5,5,-7,5,5,5};{-7,-5,-7,3,5,3};{7,-7,1,-5,7,-3};{-3,-5,5,3,5,-5};{7,-5,-7,5,-5,-3}; {3,-5,-7,-1, 7,-5}; {5,-7,-5, 7,-3,-5}; {3,-5, 7,-1,-7,-5}; {-I ,-7,5,-3,-1, 7}; {-5, 7,-7,-3, 7,1}; {3, 7,-3,3,-3,-7}.

In a possible implementation, when the modulation index $h = \frac{1}{4}$, impulse length *L* = 3, modulation dimensionM = 8, the phase response functionq(t)is: $q \left(t\right) = \left\{\begin{matrix}0 , t < 0 \\ {\int }_{0}^{t} F \left(λ\right) dλ , 0 \leq t < LT \\ 0.42 , t \geq LT\end{matrix}\right.$ $F \left(t\right) = \left\{\begin{matrix}\frac{1}{LT} \left[0.42-0.5 cos\left(\frac{2 πt}{LT}\right)+0.08cos\left(\frac{4 πt}{LT}\right)\right] , & 0 \leq t < LT \\ 0 , & otherwise\end{matrix}\right.$
and a sampling rate *N =* 2 and a number of sampling blocks J = 6 are:
the first sequence {*βᵢ*} belongs to a first sequence set, and a sequence in the first sequence set set includes at least one of the following sequences: {3,3,-1,-7,-1,-7};{-3,5,5,5,-5,1};{-5,-7,-5,-7,-1,5};{1,-5,-7,-5,3,-5 }; {5,7,-1,5,-3,5 }; { 1,5,-5,1,-3,-1 }; {-7,-7,-7,-3,-5,1 }; {7,-1,7,5,1,-1 }; {-7,3,-3,1,-1,-1 }; {-3,-5,3,-7,-1,-7};{3,3,3,-7,7,1};{-3,-7,-7,-5,-1,-7};{-5,5,-1,-1,7,5};{5,5,3,5,-1,-7};{1,-7,-7,-7,3,-1};{-7,1,5,-1,5,-3};{3,-3,3,-7,5,-1};{-7,-1,-5,-3,3,-5};{3,-7,-7,-7,3,5};{-1,7,-3,3,-3,7};{-7,1,-7,5,5,3};{-1,3,-3,-7,-5,3};{-1,-5,-1,5,-7,-1};{-3,5,5,5,-5,-7};{-1,-7,-3,-7,-3,1};{-5,1,-5,3,3,3};{-1,-7,3,3,-3,5};{-7,-5,3,-1,-5,5};{-5,-5,-5,5,5,-5};{-1,3,5,5,-7,5}.

In a possible implementation, when the modulation index $h = \frac{1}{4}$, impulse lengthL = 3, modulation dimensionM = 8, the phase response functionq(t)is: $q \left(t\right) = \left\{\begin{matrix}0 , t < 0 \\ {\int }_{0}^{t} F \left(λ\right) dλ , 0 \leq t < LT \\ 0.5 , t \geq LT\end{matrix}\right.$ $F \left(t\right) = \frac{1}{2 T} \left[Q\left(\frac{\frac{t}{T} + \frac{1}{2}}{σ}\right)-Q\left(\frac{\frac{t}{T} - \frac{1}{2}}{σ}\right)\right]$ $Q \left(t\right) = {\int }_{t}^{∞} \frac{1}{\sqrt{2 π}} {e}^{- \frac{{x}^{2}}{2}} dx$ ${σ}^{2} = \frac{In 2}{4 {π}^{2} {\left(BT\right)}^{2}}$
and a bandwidth *B* = 0.3, a sampling rate *N* = 2, and a number of sampling blocks J = 6 are:
the first sequence {*βᵢ*} belongs to a first sequence set, and a sequence in the first sequence set set includes at least one of the following sequences: {-1,-5,3,-3,3,-5};{7,-1,7,-1,7,5};{-5,3,-7,-5,-3,-7};{-1,5,-5,5,-1,5};{-5,-1,-7,1,-7,3};{5,5,-1,3,-1,5};{1,-3,-1,1,5,5};{-3,-3,-5,-7,-5,-1};{1,-3,5,-1,1,-3};{-3,3,-3,-7,1,-7};{3,-5,3,5,5,5}; {3,3,-7 ,-5,-3,-7}; { -3,5,5,1,5,3}; { 1,-5,1,-5,5,-5}; {-3,-5,-3, 7 ,-3, 7}; { 1,-1,-5,-7,-5,1 }; { 1,-1,3,-3,5,3};{3,-7,1,-1,-7,-5};{-5,-5,5,5,5,3};{-7,5,-7,3,3,3};{-3,-3,-5,3,5,-5};{5,5,5,-7,7,-7};{3,-7,-1,-7,-3,-3};{1,5,-1,-1,-1,5};{-5,-1,3,-1,1,3};{-7,1,-5,-5,-5,5};{-1,-5,3,5,3,-5};{-3,5,-5,-5,-5,5};{-5,-5,-1,5,3,-5};{1,-7,3,3,-7,-1 }; {-1,-3,3,1,5,-5 }; {-5,-1,5,-7,5,-5 }; {3,3,-3,-7,-3,-3 }; {5,-7,5,-1,-5,-5 }; {5,-5,3,-1,-5,3 }; {-5,3,5,-1,1,-3 }; {3,-5,5,3,-5,-1}.

It may be understood that division of units in embodiments of this application is schematic and is merely logical function division. In actual implementation, another division manner may be used. In addition, function units in embodiments of this application may be integrated into one physical device (for example, a processor), each function unit may be a separate physical device, or two or more units may be integrated into one unit. The integrated unit may be implemented in a form of hardware, or may be implemented in a form of a software function module.

As shown in FIG. 4, a communication apparatus 400 includes a processor 410 and an interface circuit 420. The processor 410 and the interface circuit 420 are coupled to each other. It may be understood that the interface circuit 420 may be a transceiver or an input/output interface. Optionally, the communication apparatus 400 may further include a memory 430, configured to store instructions executed by the processor 410, input data required for running instructions by the processor 410, or data generated after running instructions by the processor 410.

When the communication apparatus 400 is configured to implement the method shown in FIG. 2, the processor 410 is configured to implement functions of the processing unit 310, and the interface circuit 420 is configured to implement functions of the transceiver unit 320.

When the communication apparatus is a chip applied to a terminal, the chip implements a function of the terminal in the foregoing method embodiments. The chip receives, through another module in the terminal (for example, a radio frequency module or an antenna), information sent by an access network device to the terminal. Alternatively, the chip sends information to another module in the terminal (for example, a radio frequency module or an antenna), where the information is sent by the terminal to the access network device.

When the communication apparatus is a module applied to an access network device, the module implements a function of the access network device in the foregoing method embodiments. The module receives information from another module in the access network device (for example, a radio frequency module or an antenna), where the information is sent by the terminal to the access network device. Alternatively, the module sends information to another module in the access network device (for example, a radio frequency module or an antenna), where the information is sent by the access network device to the terminal.

It may be understood that the processor in embodiments of this application may be a central processing unit (CPU), or may be another general-purpose processor, a digital signal processor (DSP), an application specific integrated circuit (ASIC), a field programmable gate array (FPGA), another programmable logic device, a transistor logic device, a hardware component, or any combination thereof. A general-purpose processor may be a microprocessor, or may be any conventional processor.

The memory in embodiments of this application may be a random access memory (RAM), a flash memory, a read-only memory (ROM), a programmable ROM (PROM), an erasable PROM (EPROM), an electrically EPROM (EEPROM), a register, a hard disk, a removable hard disk, a CD-ROM, or any other form of storage medium well known in the art.

Method steps in embodiments of this application may be implemented by hardware, or may be implemented by software instructions executable by a processor. The software instructions may include corresponding software modules, and the software modules may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well known in the art. An exemplary storage medium is coupled to a processor, so that the processor can read information from the storage medium and write information to the storage medium. The storage medium may also be part of the processor. The processor and the storage medium may be located in an ASIC.

Embodiments of this application further provide a communication apparatus. The communication apparatus includes a processor and a memory, the processor is coupled to the memory, and the processor is configured to implement the function of the first communication apparatus or the second communication apparatus in FIG. 2.

Embodiments of this application further provide a communication apparatus, including a processor, where the processor is configured to implement the function of the first communication apparatus or the second communication apparatus in FIG. 2.

Embodiments of this application further provide a computer-readable storage medium. The computer-readable storage medium stores instructions, where the instructions may also be referred to as a computer program, computer program code, or the like. When the instructions are run on a computer, the computer is enabled to perform the function of the first communication apparatus or the second communication apparatus in FIG. 2 in the foregoing method embodiments.

Embodiments of this application further provide a computer program product, including a computer program or instructions. When the computer program or instructions are run on a computer, the method of the first communication apparatus or the second communication apparatus in FIG. 2 is implemented.

Embodiments of this application further provide a chip. The chip includes a processor, and the processor is coupled to a memory and is configured to execute a computer program or instructions stored in the memory, so that the function of the first communication apparatus or the second communication apparatus in FIG. 2 is implemented.

Embodiments of this application further provide a communication system, including a first communication apparatus and a second communication apparatus. The first communication apparatus and the second communication apparatus may be configured to implement functions of the first communication apparatus and the second communication apparatus in FIG. 2 respectively.

In the foregoing embodiments, all or some may be implemented by software, hardware, firmware, or any combination thereof. When software is used for implementation, all or some may be implemented in a form of a computer program product. The computer program product includes one or more computer programs or instructions. When the computer program or instructions are loaded and executed on a computer, all or some of the procedures or functions in embodiments of this application are performed. The computer may be a general-purpose computer, a special-purpose computer, a computer network, a network device, user equipment, or another programmable apparatus. The computer program or instructions may be stored in a computer-readable storage medium, or may be transmitted from one computer-readable storage medium to another computer-readable storage medium. For example, the computer program or instructions may be transmitted from one website, computer, server, or data center to another website, computer, server, or data center in a wired or wireless manner. The computer-readable storage medium may be any usable medium accessible by a computer, or a data storage device such as a server or a data center that integrates one or more usable media. The usable medium may be a magnetic medium, for example, a floppy disk, a hard disk, or a magnetic tape; may be an optical medium, for example, a digital video disc; or may be a semiconductor medium, for example, a solid state disk. The computer-readable storage medium may be a volatile or non-volatile storage medium, or may include both volatile and non-volatile storage media.

In various embodiments of this application, unless otherwise specified or there is a logical conflict, terms and/or descriptions in different embodiments are consistent and may be mutually referenced, and technical features in different embodiments may be combined based on their inherent logical relationships to form a new embodiment.

## Claims

1. A signal sending method, comprising:
determining a fourth sequence based on a third sequence, wherein the third sequence is a sequence obtained after discrete Fourier transform (DFT) is performed on a second sequence, and the second sequence is a discrete sequence obtained by performing continuous phase modulation (CPM) modulation and sampling on a first sequence;
mapping the fourth sequence to X subcarriers, to generate a first signal, wherein X is an integer greater than zero;
sending the first signal, wherein the first signal is a signal carrying hybrid automatic repeat request (HARQ) information, or the first signal is a signal carrying scheduling request (SR) information, or the first signal is a demodulation reference signal, or the first signal is a phase tracking reference signal.

2. The method according to claim 1, wherein the second sequence { *sₙ* } includes X el ements, and *sₙ* satisfies: ${s}_{n} = exp \left(j∗{φ}_{n}\right) ;$
where n is an integer from 0 to X-1, exp represents an exponential function with e as the base, $j = \sqrt{- 1}$, and *φₙ* represents a phase of the second sequence, and *φₙ* satisfies: ${φ}_{n} = 2 ∗ π ∗ h ∗ {\sum }_{i = 0}^{\left⌊n/N\right⌋} {β}_{i} q \left(\left(n/N-i\right)T\right) ,$ or , ${φ}_{n} = 2 ∗ π ∗ h ∗ {\sum }_{i = 0}^{\left⌊n/N\right⌋} {β}_{i} q \left(\left(n/N-i\right)T\right) + 2 ∗ π ∗ h ∗ {\sum }_{i = 0}^{L - 2} {β}_{J - i - 1} q \left(\left(n/N+i+1\right)T\right) ;$
where *φₙ* is taken modulo 2 * π, or *φₙ* is not taken modulo 2 * π, h represents a mod ulation index, *L* represents an impulse length, *N* represents a sampling rate, J represents a n umber of sampling blocks, *h, L, N,* and J all have real number values, *T* represents a symb ol period, *q(t)* represents a phase response function, *βᵢ* represents an element in the first se quence {*βᵢ*} element, and i is an integer from 0 to J - 1.

3. The method according to claim 1 or 2, wherein in the CPM modulation and samplin g process: a value range of the modulation index h is real numbers from 11/64 to 11/32, a value range of the impulse length L is L > 1, a phase response functionq(t), the phase resp onse function takes a value of 0 in the range *t <* 0 and a fixed value in the range *t* ≥ *LT,* and the sampling rate N and the number of sampling blocks J satisfy: NJ = X.

4. The method according to claim 2 or 3, wherein when the modulation index $h = \frac{1}{4}$, the impulse length *L* = 3, the modulation dimension M = 8, and the phase response function *q(t)* are: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$ and a sampling rate *N =* 2 and a number of sampling blocks J = 6 are:
the first sequence {*βᵢ*} belongs to a first sequence set, and a sequence in the first sequence set set includes at least one of the following sequences: {-1,1,5,3,-1,-7};{-3,-1,1,5,-5,1};{-7,-5,-1,-3,-3,-5};{3,-1,3,5,5,1};{-7,-7,-7,-5,5,-3};{-1,-1,-1,-7,-3,-3};{5,5,3,-5,3,5};{-7,7,-3,7,-3,7};{-5,-5,-3,-7,-3,7};{-5,3,-7,1,-5,5};{-5,-7,-3,-5,-7,3};{5,3,3,3,-7,1};{-1,1,5,3,-3,3};{-3,-3,-7,5,-5,-3};{3,5,5,5,-5,-5};{-1,3,-3,-7,-3,3};{7,-1,-1,-1,7,-3};{5,-7,7,-7,5,5};{-7,-5,5,-7,3,-5};{-5,1,-3,-5,7,-3};{7,-3,7,-3,-7,-1};{-5,3,-1,-5,7,1};{-7,-5,-7,1,-1,3};{3,-7,3,5,3,-7};{5,-3,-5,-1,-7,3};{-1,1,1,3,-7,3};{-3,-7,3,-1,-3,3};{5,-3,7,-3,-3,-3};{3,-5,-5,-5,-1,5};{-7,-1,-5,1,-1,5};{7,-1,-3,7,-5,-5};{-5,-1,1,-7,-3,7};{-5,-3,7,1,-1,1}.

5. The method according to claim 2 or 3, wherein when the modulation index $h = \frac{3}{16}$, the impulse length *L* = 3, the modulation dimension M = 8, and the phase response function *q(t)* are: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$ and a sampling rate *N =* 2 and a number of sampling blocks J = 6 are:
the first sequence {*βᵢ*} belongs to a first sequence set, and a sequence in the first sequence set set includes at least one of the following sequences: {-1,-3,5,-1,7,-7};{7,3,5,7,-5,5};{-3,-5,-5,-7,5,-7};{-7,-7,-7,3,3,-7};{7,7,7,-1,-5,7};{-7,-3,-1,-7,3,-7};{-1,7,-1,3,-3,7};{3,-5,-7,3,-3,-3};{7,5,-3,7,1,5};{7,7,5,-7,-7,7};{-3,-1,3,3,-5,1};{-7,5,5,3,7,-3};{3,-7,-7,-7,1,-5};{-3,-7,1,7,-3,-5};{5,7,1,-3,7,-5};{-1,-5,7,-7,-1,-5};{-7,-7,-7,7,-3,7};{7,1,-7,-7,-7,3};{-1,-3,3,7,7,-3};{7,5,-7,-3,-7,5};{7,-5,-7,-1,7,-1};{-1,-7,5,-1,-1,5};{-5,1,-7,3,7,1};{-3,-7,5,-3,5,-7};{3,5,-3,7,5,-7};{-3,-5,5,-7,3,7};{-7,1,5,-5,-7,3};{3,-5,7,-5,-7,7};{-7,7,-1,-5,1,-7};{7,-7,-5,1,1,5}.

6. The method according to claim 2 or 3, wherein when the modulation index $h = \frac{11}{32}$, the impulse length *L* = 3, the modulation dimension M = 8, and the phase response function *q(t)* are: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$ and a sampling rate *N =* 2 and a number of sampling blocks J = 6 are:
the first sequence {*βᵢ*} belongs to a first sequence set, and a sequence in the first sequence set set includes at least one of the following sequences: {-5,1,3,3,3,1};{-3,-5,-5,-5,-3,-3};{-1,3,-3,1,-3,3};{-3,-1,-1,-3,1,-5};{3,5,-1,1,-1,5};{3,-1,-1,1,3,1};{-1,-5,-3,-5,-1,-3};{-3,-5,-5,-5,-3,3};{3,1,5,-3,3,3};{-3,-5,-1,-5,-3,5};{1,-5,1,-3,3,-3};{5,-1,-5,-1,5,3};{-1,3,1,3,-1,-5};{-1,-3,-3,-1,1,-5};{3,-3,3,-1,1,3};{-5,-3,-1,1,-1,-3};{5,-7,3,-7,5,-5};{-1,-3,-3,1,5,-5};{1,-5,3,-5,3,3};{-5,5,-3,5,-5,-3 }; { 1,-1,5,-5,3,3 }; {3,3,3,-1,-5,-3 }; {-1,-5,3,-5,-1,3 }; { 1,-5,1,3,-3,3 }; {-1,-5,-1,3,-5,3 }; {-3,-5,-3,5,-7,1};{-1,5,-3,-1,-3,3};{-3,5,1,-1,-5,-3};{-1,-5,-3,5,-3,1};{-3,5,-1,-5,-3,1};{1,1,-5,1,5,-3}; {5,1,-5,1,1,-3}; {5,-1,-5,-1,1,-5}; {-5,3,-1,3,-7,1}.

7. The method according to claim 2 or 3, wherein when the modulation index $h = \frac{3}{16}$, the impulse length *L =* 2, the modulation dimension M = 8, and the phase response function *q(t)* are: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$ and a sampling rate *N =* 2 and a number of sampling blocks J = 6 are:
the first sequence {*βᵢ*} belongs to a first sequence set, and a sequence in the first sequence set set includes at least one of the following sequences: {1,5,5,-5,-1,-5};{3,-7,-7,-1,3,-1};{7,7,5,-3,5,1};{-7,-7,-1,-3,-7,-7};{7,7,1,7,1,-5};{-7,-3,-5,1,-5,-3};{1,3,-1,-3,1,1};{7,7,5,3,-5,5};{-1,-7,1,-1,1,-5};{3,-7,-7,-5,-7,3};{-3,3,1,5,1,3};{-3,-7,-7,1,-5,-1};{7,7,5,-5,-7,5};{5,5,-5,-3,5,3};{-3,1,-3,5,7,3};{-7,-1,-7,-1,5,-1};{3,-3,5,5,1,-1};{-3,-3,-3,-1,-5,5};{-7,-7,-5,1,-1,-3};{5,-5,-7,-7,3,1};{-5,-1,-7,-7,3,-5}; {5,3,5,-1,-1,1}; {-7,-7,1,5,7,-1}; {5,-5,-3,-1,5,-1}; {3,-3,-1,3,-7,-5}; {-7,-3,-5,-3,3,-7};{3,-5,-1,3,1,-1};{-7,-5,-5,5,5,-5};{5,-5,-1,-7,-7,5};{-3,-1,1,3,-7,-3}.

8. The method according to claim 2 or 3, wherein when the modulation index $h = \frac{11}{64}$, the impulse length *L* = 2, the modulation dimension M = 8, and the phase response function *q(t)* are: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$ and a sampling rate *N =* 2 and a number of sampling blocks J = 6 are:
the first sequence {*βᵢ*} belongs to a first sequence set, and a sequence in the first sequence set set includes at least one of the following sequences: {3,-1,-7,-1,-3,-1};{7,7,7,7,7,1};{-7,-7,-5,5,-1,3};{3,3,-3,1,3,5};{-5,-3,-7,-7,1,-1};{-7,5,5,5,7,-5};{-1,-1,-1,5,-1,-3};{-5,5,7,7,7,1};{-7,-5,-3,-7,5,-7};{1,7,7,1,5,3};{5,-7,-7,-7,-7,1};{-1,-1,-7,-1,-1,-3};{7,7,1,1,1,7};{5,5,-5,-7,-3,-7};{7,1,7,7,-3,5};{1,-7,-7,-7,-1,-3};{-3,-3,-1,3,-1,5};{-7,3,3,3,3,-7};{-7,-1,-7,5,5,5};{3,-3,5,7,-1,-1};{-7,3,-3,3,-7,-1};{5,7,5,-3,1,-3};{5,-5,-1,-7,-7,5};{-1,-1,-7,-1,5,-7};{1,-3,5,-7,-7,1};{7,7,1,5,-5,-3};{5,1,5,-7,-1,-1};{-7,5,7,5,-3,-7};{5,-7,-1,5,-1,-1};{5,5,-7,-1,-1,1};{-1,-7,5,5,-1,-3};{-1,5,-5,-5,-5,1}.

9. The method according to claim 2 or 3, wherein when the modulation index $h = \frac{11}{32}$, the impulse length *L* = 4, the modulation dimension M = 8, and the phase response function *q(t)* are: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$ and a sampling rate *N =* 2 and a number of sampling blocks *J* = 6 are:
the first sequence {*βᵢ*} belongs to a first sequence set, and a sequence in the first sequence set set includes at least one of the following sequences: {-7,3,1,-5,5,3};{-3,-7,-3,-7,1,-5};{1,7,1,7,-3,5};{1,-7,-1,-3,-1,-1};{3,-5,5,3,-1,1};{-3,-3,-3,-7,5,-7};{1,1,5,3,-3,5};{1,-1,-5,1,5,-7};{7,1,-7,3,7,1};{-3,-5,-5,-5,-1,1};{5,-1,5,-3,3,3};{-7,-1,-3,-7,7,-1};{-5,-3,3,-3,1,1};{3,1,5,-1,-5,3};{1,3,-3,5,-3,-3};{-3,1,-7,-1,3,-5};{5,3,1,-3,3,3};{-5,-3,-3,7,-3,-5};{1,7,-3,-5,1,-7};{-1,-3,5,-1,1,5};{-1,-7,3,3,5,3};{7,-3,-7,1,5,-3};{-7,3,-1,1,-5,-3};{3,3,-7,3,-5,3};{7,-7,-3,-3,5,-5};{5,-1,-5,-5,5,1};{-5,-3,1,7,-3,-3};{5,3,-7,7,-5,-3};{-7,-3,3,-7,7,1};{7,-7,3,-3,-7,1}.

10. The method according to claim 2 or 3, wherein when the modulation index $h = \frac{1}{4}$, the impulse length *L* = 3, the modulation dimension M = 8, and the phase response function *q(t)* are: $q \left(t\right) = \left\{\begin{matrix}0 , & t < 0 \\ {\int }_{0}^{t} F \left(λ\right) dλ , & 0 \leq t < LT \\ 0.54 , & t \geq LT\end{matrix}\right.$ $F \left(t\right) = \left\{\begin{matrix}\frac{1}{LT} \left[0.54-0.46 cos \left(\frac{2 πt}{LT}\right)\right] , 0 \leq t < LT \\ 0 , otherwise\end{matrix}\right.$ and a sampling rate *N =* 2 and a number of sampling blocks J = 6 are:
the first sequence {*βᵢ*} belongs to a first sequence set, and a sequence in the first sequence set set includes at least one of the following sequences: {-7,7,-7,-1,-7,7};{5,-1,5,5,5,-3};{-5,-5,-1,-1,-7,-5};{-7,7,-3,-7,-7,-7};{1,5,1,-3,-3,7};{5,5,-7,3,5,5};{-7,3,-5,-7,-1,1};{1,-7,5,-1,1,1};{1,7,-1,-1,7,3};{-3,7,-5,-5,-3,-7};{-7,-1,-5,-3,3,-1};{-3,7,-3,7,-1,-7};{-1,-1,-1,7,-7,1};{-1,-5,-7,-7,-5,-1};{1,-1,5,5,-5,1};{3,5,3,-7,3,-7};{7,-5,-5,-7,7,3};{-7,-5,1,-1,1,-5};{5,1,1,5,-1,-3};{5,-1,-7,1,-7,1};{3,-7,-1,1,-3,-3};{-7,-5,-7,-3,5,1};{7,-3,-3,-3,7,3};{-7,7,-3,7,-7,-5};{-1,-3,-1,-5,7,-5};{-5,5,-7,5,5,5};{-7,-5,-7,3,5,3};{7,-7,1,-5,7,-3};{-3,-5,5,3,5,-5};{7,-5,-7,5,-5,-3};{3,-5,-7,-1,7,-5};{5,-7,-5,7,-3,-5};{3,-5,7,-1,-7,-5};{-1,-7,5,-3,-1,7};{-5,7,-7,-3,7,1};{3,7,-3,3,-3,-7}.

11. The method according to claim 2 or 3, wherein when the modulation index $h = \frac{1}{4}$, the impulse length *L* = 3, the modulation dimension M = 8, and the phase response function *q(t)* are: $q \left(t\right) = \left\{\begin{matrix}0 , & t < 0 \\ {\int }_{0}^{t} F \left(λ\right) dλ , & 0 \leq t < LT \\ 0.42 , & t \geq LT\end{matrix}\right.$ $F \left(t\right) = \left\{\begin{matrix}\frac{1}{LT} \left[0.42-0.5 cos\left(\frac{2 πt}{LT}\right)+0.08cos\left(\frac{4 πt}{LT}\right)\right] , & 0 \leq t < LT \\ 0 , & otherwise\end{matrix}\right.$ and a sampling rate *N =* 2 and a number of sampling blocks *J* = 6 are:
the first sequence {*βᵢ*} belongs to a first sequence set, and a sequence in the first sequence set set includes at least one of the following sequences: {3,3,-1,-7,-1,-7};{-3,5,5,5,-5,1};{-5,-7,-5,-7,-1,5};{1,-5,-7,-5,3,-5};{5,7,-1,5,-3,5};{1,5,-5,1,-3,-1};{-7,-7,-7,-3,-5,1};{7,-1,7,5,1,-1};{-7,3,-3,1,-1,-1};{-3,-5,3,-7,-1,-7};{3,3,3,-7,7,1};{-3,-7,-7,-5,-1,-7};{-5,5,-1,-1,7,5};{5,5,3,5,-1,-7};{1,-7,-7,-7,3,-1};{-7,1,5,-1,5,-3};{3,-3,3,-7,5,-1};{-7,-1,-5,-3,3,-5};{3,-7,-7,-7,3,5};{-1,7,-3,3,-3,7};{-7,1,-7,5,5,3};{-1,3,-3,-7,-5,3};{-1,-5,-1,5,-7,-1};{-3,5,5,5,-5,-7};{-1,-7,-3,-7,-3,1};{-5,1,-5,3,3,3};{-1,-7,3,3,-3,5};{-7,-5,3,-1,-5,5};{-5,-5,-5,5,5,-5};{-1,3,5,5,-7,5}.

12. The method according to claim 2 or 3, wherein when the modulation index $h = \frac{1}{4}$, the impulse length *L* = 3, the modulation dimension M = 8, and the phase response function *q(t)* are: $q \left(t\right) = \left\{\begin{matrix}0 , & t < 0 \\ {\int }_{0}^{t} F \left(λ\right) dλ , & 0 \leq t < LT \\ 0.5 , & t \geq LT\end{matrix}\right.$ $F \left(t\right) = \frac{1}{2 T} \left[Q\left(\frac{\frac{t}{T} + \frac{1}{2}}{σ}\right)-Q\left(\frac{\frac{t}{T} - \frac{1}{2}}{σ}\right)\right]$ $Q \left(t\right) = {\int }_{t}^{∞} \frac{1}{\sqrt{2 π}} {e}^{- \frac{{x}^{2}}{2}} dx$ ${σ}^{2} = \frac{In 2}{4 {π}^{2} {\left(BT\right)}^{2}}$ and a bandwidth *B* = 0.3, a sampling rate *N* = 2, and a number of sampling blocks J = 6 are:
the first sequence {*βᵢ*} belongs to a first sequence set, and a sequence in the first sequence set set includes at least one of the following sequences: {-1,-5,3,-3,3,-5};{7,-1,7,-1,7,5};{-5,3,-7,-5,-3,-7};{-1,5,-5,5,-1,5};{-5,-1,-7,1,-7,3};{5,5,-1,3,-1,5};{1,-3,-1,1,5,5};{-3,-3,-5,-7,-5,-1};{1,-3,5,-1,1,-3};{-3,3,-3,-7,1,-7};{3,-5,3,5,5,5};{3,3,-7,-5,-3,-7};{-3,5,5,1,5,3};{1,-5,1,-5,5,-5};{-3,-5,-3,7,-3,7};{1,-1,-5,-7,-5,1};{1,-1,3,-3,5,3};{3,-7,1,-1,-7,-5};{-5,-5,5,5,5,3};{-7,5,-7,3,3,3};{-3,-3,-5,3,5,-5};{5,5,5,-7,7,-7};{3,-7,-1,-7,-3,-3};{1,5,-1,-1,-1,5};{-5,-1,3,-1,1,3};{-7,1,-5,-5,-5,5};{-1,-5,3,5,3,-5};{-3,5,-5,-5,-5,5};{-5,-5,-1,5,3,-5};{1,-7,3,3,-7,-1};{-1,-3,3,1,5,-5};{-5,-1,5,-7,5,-5};{3,3,-3,-7,-3,-3};{5,-7,5,-1,-5,-5};{5,-5,3,-1,-5,3};{-5,3,5,-1,1,-3};{3,-5,5,3,-5,-1}.

13. The method according to any one of claims 1 to 12, wherein the fourth sequence comprises X elements, and the mapping the fourth sequence to X subcarriers comprises:
mapping the X elements to X consecutive subcarriers respectively; or
mapping the X elements to X non-consecutive and equally spaced subcarriers respectively.

14. A signal receiving method, comprising:
receiving a first signal, wherein the first signal is a signal carrying hybrid automatic repeat request (HARQ) information, or the first signal is a signal carrying scheduling request (SR) information, or the first signal is a demodulation reference signal, or the first signal is a phase tracking reference signal;
performing orthogonal frequency division multiplexing (OFDM) demodulation on the first signal, to determine a fourth sequence;
determining a first result based on the fourth sequence and the third sequence, where the first result is a decoding result, or the first result is a channel estimation result, the third sequence is a sequence obtained after DFT is performed on the second sequence, and the second sequence is a discrete sequence obtained by performing CPM modulation and sampling on the first sequence.

15. The method according to claim 14, wherein the second sequence { *sₙ* } includes X elements, and *sₙ* satisfies: ${s}_{n} = exp \left(j∗{φ}_{n}\right) ;$
where n is an integer from 0 to X-1, X is an integer greater than zero, exp represents an exponential function with e as the base, $j = \sqrt{- 1}$, and *φₙ* represents a phase of the seco nd sequence, and *φₙ* satisfies: ${φ}_{n} = 2 ∗ π ∗ h ∗ {\sum }_{i = 0}^{\left⌊n/N\right⌋} {β}_{i} q \left(\left(n/N-i\right)T\right) ,$ or , ${φ}_{n} = 2 ∗ π ∗ h ∗ {\sum }_{i = 0}^{\left⌊n/N\right⌋} {β}_{i} q \left(\left(n/N-i\right)T\right) + 2 ∗ π ∗ h ∗ {\sum }_{i = 0}^{L - 2} {β}_{J - i - 1} q \left(\left(n/N+i+1\right)T\right) ;$
where *φₙ* is taken modulo 2 * π, or is not taken modulo 2 * π, *h* represents a modulat ion index, *L* represents an impulse length, *N* represents a sampling rate, *J* represents a num ber of sampling blocks, *h, L, N,* and J all have real number values, *T* represents a symbol period, *q(t)* represents a phase response function, *βᵢ* represents an element in the first sequ ence {*βᵢ*}, and *i* is an integer from 0 to J - 1.

16. The method according to claim 14 or 15, wherein in the CPM modulation and sam pling process: a value range of the modulation index h is real numbers from 11/64 to 11/32, a value range of the impulse length L is q(t), the phase response function takes a value of 0 in the range *t <* 0 and a fixed value in the range *t* ≥ *LT,* and the sampling rate *N* and t he number of sampling blocks J satisfy: *NJ = X.*

17. The method according to claim 15 or 16, wherein when the modulation index $h = \frac{1}{4}$, the impulse length *L* = 3, the modulation dimension M = 8, and the phase response function *q(t)* are: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$ and a sampling rate *N =* 2 and a number of sampling blocks J = 6 are:
the first sequence {*βᵢ*} belongs to a first sequence set, and a sequence in the first sequence set set includes at least one of the following sequences: {-1,1,5,3,-1,-7};{-3,-1,1,5,-5,1};{-7,-5,-1,-3,-3,-5};{3,-1,3,5,5,1};{-7,-7,-7,-5,5,-3};{-1,-1,-1,-7,-3,-3};{5,5,3,-5,3,5};{-7,7,-3,7,-3,7};{-5,-5,-3,-7,-3,7};{-5,3,-7,1,-5,5};{-5,-7,-3,-5,-7,3};{5,3,3,3,-7,1};{-1,1,5,3,-3,3};{-3,-3,-7,5,-5,-3};{3,5,5,5,-5,-5};{-1,3,-3,-7,-3,3};{7,-1,-1,-1,7,-3};{5,-7,7,-7,5,5};{-7,-5,5,-7,3,-5};{-5,1,-3,-5,7,-3};{7,-3,7,-3,-7,-1};{-5,3,-1,-5,7,1};{-7,-5,-7,1,-1,3};{3,-7,3,5,3,-7};{5,-3,-5,-1,-7,3};{-1,1,1,3,-7,3};{-3,-7,3,-1,-3,3};{5,-3,7,-3,-3,-3};{3,-5,-5,-5,-1,5};{-7,-1,-5,1,-1,5};{7,-1,-3,7,-5,-5};{-5,-1,1,-7,-3,7};{-5,-3,7,1,-1,1}.

18. The method according to claim 15 or 16, wherein when the modulation index $h = \frac{3}{16}$, the impulse length *L* = 3, the modulation dimension M = 8, and the phase response function *q(t)* are: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$ and a sampling rate *N* = 2 and a number of sampling blocks J = 6 are:
the first sequence {*βᵢ*} belongs to a first sequence set, and a sequence in the first sequence set set includes at least one of the following sequences: {-1,-3,5,-1,7,-7};{7,3,5,7,-5,5};{-3,-5,-5,-7,5,-7};{-7,-7,-7,3,3,-7};{7,7,7,-1,-5,7};{-7,-3,-1,-7,3,-7};{-1,7,-1,3,-3,7};{3,-5,-7,3,-3,-3};{7,5,-3,7,1,5};{7,7,5,-7,-7,7};{-3,-1,3,3,-5,1};{-7,5,5,3,7,-3};{3,-7,-7,-7,1,-5};{-3,-7,1,7,-3,-5};{5,7,1,-3,7,-5};{-1,-5,7,-7,-1,-5};{-7,-7,-7,7,-3,7};{7,1,-7,-7,-7,3};{-1,-3,3,7,7,-3};{7,5,-7,-3,-7,5};{7,-5,-7,-1,7,-1};{-1,-7,5,-1,-1,5};{-5,1,-7,3,7,1};{-3,-7,5,-3,5,-7};{3,5,-3,7,5,-7};{-3,-5,5,-7,3,7};{-7,1,5,-5,-7,3};{3,-5,7,-5,-7,7};{-7,7,-1,-5,1,-7};{7,-7,-5,1,1,5}.

19. The method according to claim 15 or 16, wherein when the modulation index $h = \frac{11}{32}$, the impulse length *L* = 3, the modulation dimension *M =* 8, and the phase response function *q(t)* are: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$ and a sampling rate *N =* 2 and a number of sampling blocks J = 6 are:
the first sequence {*βᵢ*} belongs to a first sequence set, and a sequence in the first sequence set set includes at least one of the following sequences: {-5,1,3,3,3,1};{-3,-5,-5,-5,-3,-3};{-1,3,-3,1,-3,3};{-3,-1,-1,-3,1,-5};{3,5,-1,1,-1,5};{3,-1,-1,1,3,1};{-1,-5,-3,-5,-1,-3};{-3,-5,-5,-5,-3,3};{3,1,5,-3,3,3};{-3,-5,-1,-5,-3,5};{1,-5,1,-3,3,-3};{5,-1,-5,-1,5,3};{-1,3,1,3,-1,-5};{-1,-3,-3,-1,1,-5};{3,-3,3,-1,1,3};{-5,-3,-1,1,-1,-3};{5,-7,3,-7,5,-5};{-1,-3,-3,1,5,-5};{1,-5,3,-5,3,3};{-5,5,-3,5,-5,-3};{1,-1,5,-5,3,3};{3,3,3,-1,-5,-3};{-1,-5,3,-5,-1,3};{1,-5,1,3,-3,3};{-1,-5,-1,3,-5,3};{-3,-5,-3,5,-7,1};{-1,5,-3,-1,-3,3};{-3,5,1,-1,-5,-3};{-1,-5,-3,5,-3,1};{-3,5,-1,-5,-3,1};{1,1,-5,1,5,-3};{5,1,-5,1,1,-3};{5,-1,-5,-1,1,-5};{-5,3,-1,3,-7,1}.

20. The method according to claim 15 or 16, wherein when the modulation index $h = \frac{3}{16}$, the impulse length *L* = 2, the modulation dimension M = 8, and the phase response function *q(t)* are: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$ and a sampling rate *N =* 2 and a number of sampling blocks J = 6 are:
the first sequence {*βᵢ*} belongs to a first sequence set, and a sequence in the first sequence set set includes at least one of the following sequences: {1,5,5,-5,-1,-5};{3,-7,-7,-1,3,-1};{7,7,5,-3,5,1};{-7,-7,-1,-3,-7,-7};{7,7,1,7,1,-5};{-7,-3,-5,1,-5,-3};{1,3,-1,-3,1,1};{7,7,5,3,-5,5};{-1,-7,1,-1,1,-5};{3,-7,-7,-5,-7,3};{-3,3,1,5,1,3};{-3,-7,-7,1,-5,-1};{7,7,5,-5,-7,5};{5,5,-5,-3,5,3};{-3,1,-3,5,7,3}:{-7,-1,-7,-1,5,-1};{3,-3,5,5,1,-1};{-3,-3,-3,-1,-5,5};{-7,-7,-5,1,-1,-3};{5,-5,-7,-7,3,1};{-5,-1,-7,-7,3,-5}; {5,3,5,-1,-1,1}; {-7,-7,1,5,7,-1}; {5,-5,-3,-1,5,-1}; {3,-3,-1,3,-7,-5}; {-7,-3,-5,-3,3,-7};{3,-5,-1,3,1,-1};{-7,-5,-5,5,5,-5};{5,-5,-1,-7,-7,5};{-3,-1,1,3,-7,-3}.

21. The method according to claim 15 or 16, wherein when the modulation index $h = \frac{11}{64}$, the impulse length *L* = 2, the modulation dimension *M =* 8, and the phase response function *q(t)* are: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$ and a sampling rate *N =* 2 and a number of sampling blocks J = 6 are:
the first sequence {*βᵢ*} belongs to a first sequence set, and a sequence in the first sequence set set includes at least one of the following sequences: {3,-1,-7,-1,-3,-1};{7,7,7,7,7,1};{-7,-7,-5,5,-1,3};{3,3,-3,1,3,5};{-5,-3,-7,-7,1,-1};{-7,5,5,5,7,-5};{-1,-1,-1,5,-1,-3};{-5,5,7,7,7,1};{-7,-5,-3,-7,5,-7};{1,7,7,1,5,3};{5,-7,-7,-7,-7,1};{-1,-1,-7,-1,-1,-3};{7,7,1,1,1,7};{5,5,-5,-7,-3,-7};{7,1,7,7,-3,5};{1,-7,-7,-7,-1,-3};{-3,-3,-1,3,-1,5};{-7,3,3,3,3,-7};{-7,-1,-7,5,5,5};{3,-3,5,7,-1,-1};{-7,3,-3,3,-7,-1};{5,7,5,-3,1,-3};{5,-5,-1,-7,-7,5};{-1,-1,-7,-1,5,-7};{1,-3,5,-7,-7,1};{7,7,1,5,-5,-3};{5,1,5,-7,-1,-1};{-7,5,7,5,-3,-7};{5,-7,-1,5,-1,-1};{5,5,-7,-1,-1,1};{-1,-7,5,5,-1,-3};{-1,5,-5,-5,-5,1}.

22. The method according to claim 15 or 16, wherein when the modulation index $h = \frac{11}{32}$, the impulse length *L* = 4, the modulation dimension M = 8, and the phase response function *q(t)* are: $q \left(t\right) = \left\{\begin{matrix}0 , & t < 0 \\ {\int }_{0}^{t} F \left(λ\right) dλ , & 0 \leq t < LT \\ \frac{1}{2} , & t \geq LT\end{matrix}\right.$ $F \left(t\right) = \left\{\begin{matrix}\frac{1}{2 LT} \left[1-cos\left(\frac{2 πt}{LT}\right)\right] , & 0 \leq t < LT \\ 0 , & otherwise\end{matrix}\right.$ and a sampling rate *N =* 2 and a number of sampling blocks J = 6 are:
the first sequence {*βᵢ*} belongs to a first sequence set, and a sequence in the first sequence set set includes at least one of the following sequences: {-7,3,1,-5,5,3};{-3,-7,-3,-7,1,-5};{1,7,1,7,-3,5};{1,-7,-1,-3,-1,-1};{3,-5,5,3,-1,1};{-3,-3,-3,-7,5,-7};{1,1,5,3,-3,5};{1,-1,-5,1,5,-7};{7,1,-7,3,7,1};{-3,-5,-5,-5,-1,1};{5,-1,5,-3,3,3};{-7,-1,-3,-7,7,-1};{-5,-3,3,-3,1,1};{3,1,5,-1,-5,3};{1,3,-3,5,-3,-3};{-3,1,-7,-1,3,-5};{5,3,1,-3,3,3};{-5,-3,-3,7,-3,-5};{1,7,-3,-5,1,-7};{-1,-3,5,-1,1,5};{-1,-7,3,3,5,3};{7,-3,-7,1,5,-3};{-7,3,-1,1,-5,-3};{3,3,-7,3,-5,3};{7,-7,-3,-3,5,-5};{5,-1,-5,-5,5,1};{-5,-3,1,7,-3,-3};{5,3,-7,7,-5,-3};{-7,-3,3,-7,7,1};{7,-7,3,-3,-7,1}.

23. The method according to claim 15 or 16, wherein when the modulation index $h = \frac{1}{4}$, the impulse length *L* = 3, the modulation dimension M = 8, and the phase response function *q(t)* are: $q \left(t\right) = \left\{\begin{matrix}0 , & t < 0 \\ {\int }_{0}^{t} F \left(λ\right) dλ , & 0 \leq t < LT \\ 0.54 , & t \geq LT\end{matrix}\right.$ $F \left(t\right) = \left\{\begin{matrix}\frac{1}{LT} \left[0.54-0.46 cos \left(\frac{2 πt}{LT}\right)\right] , 0 \leq t < LT \\ 0 , otherwise\end{matrix}\right.$ and a sampling rate *N =* 2 and a number of sampling blocks J = 6 are:
the first sequence {*βᵢ*} belongs to a first sequence set, and a sequence in the first sequence set set includes at least one of the following sequences: {-7,7,-7,-1,-7,7};{5,-1,5,5,5,-3};{-5,-5,-1,-1,-7,-5};{-7,7,-3,-7,-7,-7};{1,5,1,-3,-3,7};{5,5,-7,3,5,5};{-7,3,-5,-7,-1,1};{1,-7,5,-1,1,1};{1,7,-1,-1,7,3};{-3,7,-5,-5,-3,-7};{-7,-1,-5,-3,3,-1};{-3,7,-3,7,-1,-7};{-1,-1,-1,7,-7,1};{-1,-5,-7,-7,-5,-1};{1,-1,5,5,-5,1};{3,5,3,-7,3,-7};{7,-5,-5,-7,7,3};{-7,-5,1,-1,1,-5};{5,1,1,5,-1,-3};{5,-1,-7,1,-7,1};{3,-7,-1,1,-3,-3};{-7,-5,-7,-3,5,1};{7,-3,-3,-3,7,3};{-7,7,-3,7,-7,-5};{-1,-3,-1,-5,7,-5};{-5,5,-7,5,5,5};{-7,-5,-7,3,5,3};{7,-7,1,-5,7,-3};{-3,-5,5,3,5,-5};{7,-5,-7,5,-5,-3};{3,-5,-7,-1,7,-5};{5,-7,-5,7,-3,-5};{3,-5,7,-1,-7,-5};{-1,-7,5,-3,-1,7};{-5,7,-7,-3,7,1};{3,7,-3,3,-3,-7}.

24. The method according to claim 15 or 16, wherein when the modulation index $h = \frac{1}{4}$, the impulse length *L* = 3, the modulation dimension M = 8, and the phase response function *q(t)* are: $q \left(t\right) = \left\{\begin{matrix}0 , & t < 0 \\ {\int }_{0}^{t} F \left(λ\right) dλ , & 0 \leq t < LT \\ 0.42 , & t \geq LT\end{matrix}\right.$ $F \left(t\right) = \left\{\begin{matrix}\frac{1}{LT} \left[0.42-0.5 cos\left(\frac{2 πt}{LT}\right)+0.08cos\left(\frac{4 πt}{LT}\right)\right] , & 0 \leq t < LT \\ 0 , & otherwise\end{matrix}\right.$ and a sampling rate *N* = 2 and a number of sampling blocks J = 6 are:
the first sequence {*βᵢ*} belongs to a first sequence set, and a sequence in the first sequence set set includes at least one of the following sequences: {3,3,-1,-7,-1,-7};{-3,5,5,5,-5,1};{-5,-7,-5,-7,-1,5};{1,-5,-7,-5,3,-5};{5,7,-1,5,-3,5};{1,5,-5,1,-3,-1};{-7,-7,-7,-3,-5,1};{7,-1,7,5,1,-1};{-7,3,-3,1,-1,-1}; {-3,-5,3,-7,-1,-7}; {3,3,3,-7,7,1}; {-3,-7,-7,-5,-1,-7}; {-5,5,-1,-1,7,5}; {5,5,3,5,-1,-7};{1,-7,-7,-7,3,-1};{-7,1,5,-1,5,-3};{3,-3,3,-7,5,-1};{-7,-1,-5,-3,3,-5};{3,-7,-7,-7,3,5};{-1,7,-3,3,-3,7};4-7,1,-7,5,5,3};{-1,3,-3,-7,-5,3};{-1,-5,-1,5,-7,-1};{-3,5,5,5,-5,-7};{-1,-7,-3,-7,-3,1};{-5,1,-5,3,3,3};{-1,-7,3,3,-3,5};{-7,-5,3,-1,-5,5};{-5,-5,-5,5,5,-5};{-1,3,5,5,-7,5}.

25. The method according to claim 15 or 16, wherein when the modulation index $h = \frac{1}{4}$, the impulse length *L* = 3, the modulation dimension M = 8, and the phase response function *q(t)* are: $q \left(t\right) = \left\{\begin{matrix}0 , & t < 0 \\ {\int }_{0}^{t} F \left(λ\right) dλ , & 0 \leq t < LT \\ 0.5 , & t \geq LT\end{matrix}\right.$ $F \left(t\right) = \frac{1}{2 T} \left[Q\left(\frac{\frac{t}{T} + \frac{1}{2}}{σ}\right)-Q\left(\frac{\frac{t}{T} - \frac{1}{2}}{σ}\right)\right]$ $Q \left(t\right) = {\int }_{t}^{∞} \frac{1}{\sqrt{2 π}} {e}^{- \frac{{x}^{2}}{2}} dx$ ${σ}^{2} = \frac{In 2}{4 {π}^{2} {\left(BT\right)}^{2}}$ and a bandwidth *B* = 0.3, a sampling rate *N* = 2, and a number of sampling blocks J = 6 are:
the first sequence {*βᵢ*} belongs to a first sequence set, and a sequence in the first sequence set set includes at least one of the following sequences: {-1,-5,3,-3,3,-5};{7,-1,7,-1,7,5};{-5,3,-7,-5,-3,-7};{-1,5,-5,5,-1,5};{-5,-1,-7,1,-7,3};{5,5,-1,3,-1,5};{1,-3,-1,1,5,5};{-3,-3,-5,-7,-5,-1};{1,-3,5,-1,1,-3};{-3,3,-3,-7,1,-7};{3,-5,3,5,5,5};{3,3,-7,-5,-3,-7};{-3,5,5,1,5,3};{1,-5,1,-5,5,-5};{-3,-5,-3,7,-3,7};{1,-1,-5,-7,-5,1};{1,-1,3,-3,5,3};{3,-7,1,-1,-7,-5};{-5,-5,5,5,5,3};{-7,5,-7,3,3,3};{-3,-3,-5,3,5,-5};{5,5,5,-7,7,-7};{3,-7,-1,-7,-3,-3};{1,5,-1,-1,-1,5};{-5,-1,3,-1,1,3};{-7,1,-5,-5,-5,5};{-1,-5,3,5,3,-5};{-3,5,-5,-5,-5,5};{-5,-5,-1,5,3,-5};{1,-7,3,3,-7,-1};{-1,-3,3,1,5,-5};{-5,-1,5,-7,5,-5};{3,3,-3,-7,-3,-3};{5,-7,5,-1,-5,-5};{5,-5,3,-1,-5,3};{-5,3,5,-1,1,-3};{3,-5,5,3,-5,-1}.

26. A communication apparatus, comprising units configured to implement the method according to any one of claims 1 to 13.

27. A communication apparatus, comprising a processor and a memory, wherein the processor is coupled to the memory, and the processor is configured to implement the method according to any one of claims 1 to 13.

28. A communication apparatus, comprising a processor and an interface circuit, wherein the interface circuit is configured to receive a signal from another communication apparatus outside the communication apparatus and transmit the signal to the processor, or send a signal from the processor to another communication apparatus outside the communication apparatus, and the processor is configured to implement, by using a logic circuit or executing code instructions, the method according to any one of claims 1 to 13.

29. A communication apparatus, comprising units configured to implement the method according to any one of claims 14 to 25.

30. A communication apparatus, comprising a processor and a memory, wherein the processor is coupled to the memory, and the processor is configured to implement the method according to any one of claims 14 to 25.

31. A communication apparatus, comprising a processor and an interface circuit, wherein the interface circuit is configured to receive a signal from another communication apparatus outside the communication apparatus and transmit the signal to the processor, or send a signal from the processor to another communication apparatus outside the communication apparatus, and the processor is configured to implement, by using a logic circuit or executing code instructions, the method according to any one of claims 14 to 25.

32. A computer-readable storage medium, wherein the computer-readable storage medium stores instructions, and when the instructions are run on a computer, the computer is enabled to perform the method according to any one of claims 1 to 13 or the method according to any one of claims 14 to 25.

33. A computer program product, comprising a computer program or instructions, wherein when the computer program or instructions are run by a communication apparatus, the method according to any one of claims 1 to 13 is performed, or the method according to any one of claims 14 to 25 is performed.

34. A chip, comprising a processor, wherein the processor is coupled to a memory and is configured to execute a computer program or instructions stored in the memory, so that the chip implements the method according to any one of claims 1 to 13 or implements the method according to any one of claims 14 to 25.

35. A communication system, comprising:
a first communication apparatus, wherein the first communication apparatus is configured to perform the method according to any one of claims 1 to 13;
a second communication apparatus, wherein the second communication apparatus is configured to perform the method according to any one of claims 14 to 25.
